# EUROPÄISCHE PATENTSCHRIFT

(11) **EP 3 981 145 B1**
(45) Veröffentlichungstag und Bekanntmachung des Hinweises auf die Patenterteilung: **24.07.2024**
(21) Anmeldenummer: 20731439.4
(22) Anmeldetag: 05.06.2020
(51) Int. Cl.: H04N 13/218, H04N 13/243, H04N 13/239, G03B 3/02, G03B 3/04, G03B 3/06, G03B 37/04, G03B 5/00, G03B 17/17, G03B 35/10, H04N 13/214, H04N 13/257, H04N 13/271, H04N 23/45, H04N 23/67, H04N 23/68, H04N 23/698, G03B 3/10

(54) **MULTIKANALABBILDUNGSVORRICHTUNG UND VORRICHTUNG MIT EINER MULTIAPERTURABBILDUNGSVORRICHTUNG**
MULTI-CHANNEL IMAGING DEVICE AND DEVICE HAVING A MULTI-APERTURE IMAGING DEVICE
DISPOSITIF DE REPRODUCTION MULTI-CANAUX ET APPAREIL COMPORTANT UN DISPOSITIF DE REPRODUCTION MULTI-OUVERTURES

(30) Priorität: 06.06.2019 DE 102019208294
(43) Veröffentlichungstag der Anmeldung: 13.04.2022
(73) Patentinhaber: Fraunhofer-Gesellschaft zur Förderung der angewandten Forschung e.V., 80686 München (DE)
(72) Erfinder: WIPPERMANN, Frank, 07745 Jena (DE); DUPARRÉ, Jacques, 07745 Jena (DE)
(74) Vertreter: König, Andreas Rudolf
(86) Internationale Anmeldenummer: PCT/EP2020/065626
(87) Internationale Veröffentlichungsnummer: WO 2020/245356

(56) Entgegenhaltungen:
- DE-A1- 102017 206 429
- US-A1- 2013 033 577
- US-A1- 2015 293 328

## Beschreibung

Die vorliegende Erfindung bezieht sich auf eine Multikanalabbildungsvorrichtung und auf eine Vorrichtung mit einer Multikanalabbildungsvorrichtung. Die vorliegende Erfindung bezieht sich ferner auf eine tragbare Vorrichtung mit einer Multiaperturabbildungsvorrichtung.

Konventionelle Kameras übertragen in einem Kanal das gesamte Gesichtsfeld und sind in ihrer Miniaturisierung begrenzt. In mobilen Vorrichtungen wie etwa Smartphones werden zwei Kameras genutzt, die in und entgegen dem Richtungssinn der Flächennormalen des Displays orientiert sind.

DE102017206429A1 beschreibt eine Multiaperturabbildungsvorrichtung, bei der Teilgesichtsfelder eines Gesamtgesichtsfelds durch jeweils einen oder mehrere optische Kanäle auf entsprechende Bildsensorbereiche abgebildet werden.

Wünschenswert wäre demnach ein Konzept, das miniaturisierte Vorrichtungen zum Erfassen eines Gesamtgesichtsfeldes unter Gewährleistung einer hohen Bildqualität ermöglicht.

Die Aufgabe der vorliegenden Erfindung besteht deshalb darin, eine Multiaperturabbildungsvorrichtung zu schaffen, die ein hohes Maß an Bildqualität bei gleichzeitig geringem Bauraum der Multiaperturabbildungsvorrichtung ermöglicht.

Diese Aufgabe wird durch den Gegenstand der unabhängigen Patentansprüche gelöst.

Ein Kerngedanke der vorliegenden Erfindung besteht darin, erkannt zu haben, dass obige Aufgabe dadurch gelöst werden kann, dass es zum Zusammenfügen von Teilbildern eines Gesamtbildes ausreichend ist, eine Tiefeninformation für denjenigen Teil des Gesamtbildes zu bestimmen, der an einen Referenzteil angefügt wird, und für den Referenzteil somit eine stereoskope Information nicht zwingend notwendig ist, womit die Kanäle eingespart werden können, gleichzeitig für die zu verändernden Bildteile Okklusionen vermieden werden können.

Gemäß einem Ausführungsbeispiel umfasst eine Multiaperturabbildungsvorrichtung eine Bildsensoreinrichtung mit einer Mehrzahl von Bildsensorbereichen; und eine Mehrzahl von optischen Kanälen, wobei jeder optische Kanal eine Optik zur Abbildung eines Teilgesichtsfeldes eines Gesamtgesichtsfeldes auf einen dem optischen Kanal zugeordneten Bildsensorbereich der Bildsensoreinrichtung umfasst. Die Mehrzahl von optischen Kanälen ist ausgebildet, um das Gesamtgesichtsfeld vollständig abzubilden. Ein erstes Teilgesichtsfeld des Gesamtgesichtsfeldes und ein zweites Teilgesichtsfeld des Gesamtgesichtsfeldes werden von einer unterschiedlichen Anzahl optischer Kanäle erfasst.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische perspektivische Ansicht einer Vorrichtung gemäß einem Ausführungsbeispiel;
- Fig. 2: eine schematische Ansicht einer Hauptseite einer Vorrichtung gemäß einem weiteren Ausführungsbeispiel;
- Fig. 3a: eine Strahlumlenkeinrichtung und einen Zustand von Blenden in einem ersten Betriebszustand gemäß einem Ausführungsbeispiel;
- Fig. 3b: die Strahlumlenkeinrichtung, und die Blenden in einem zweiten Betriebszustand;
- Fig. 4a: eine schematische Ansicht der Strahlumlenkeinrichtung gemäß einem Ausführungsbeispiel, die eine Vielzahl von Strahlumlenkbereichen umfasst;
- Fig. 4b: eine schematische Ansicht der Strahlumlenkeinrichtung gemäß einer zu Fig.4a alternativen Konfiguration und gemäß einem Ausführungsbeispiel;
- Fig. 4c-h: eine vorteilhafte Ausgestaltung einer Strahlumlenkeinrichtung einer Abbildungsvorrichtung gemäß einem Ausführungsbeispiel.
- Fig. 5a: eine schematische perspektivische Ansicht einer Abbildungsvorrichtung gemäß einem Ausführungsbeispiel;
- Fig. 5b: eine schematische perspektivische Ansicht einer Multiaperturabbildungsvorrichtung gemäß einem Ausführungsbeispiel, die eine Beleuchtungseinrichtung aufweist, die ausgebildet ist, um ein zeitliches oder räumliches Beleuchtungsmuster auszusenden;
- Fig. 5c: eine schematische Seitenschnittansicht einer modifizierten Abbildungsvorrichtung, bei der die Strahlumlenkeinrichtung zwischen einer ersten Position des ersten Betriebszustands und einer zweiten Position rotatorische umschaltbar ist;
- Fig. 6a: eine schematische Ansicht eines Gesamtgesichtsfeldes, das vier einander überlappende Teilgesichtsfelder umfasst;
- Fig. 6b: eine zur Fig. 6a veränderte Aufteilung des Gesamtgesichtsfeldes, bei der ein Teilgesichtsfeld doppelt erfasst wird und Teilgesichtsfelder entlang einer ersten Richtung nebeneinander angeordnet sind;
- Fig. 6c: eine zur Fig. 6a veränderte Aufteilung des Gesamtgesichtsfeldes, bei der ein Teilgesichtsfeld doppelt erfasst wird und Teilgesichtsfelder entlang einer zweiten Richtung nebeneinander angeordnet sind;
- Fig. 7a: eine schematische perspektivische Ansicht einer Vorrichtung, die zwei Multiaperturabbildungsvorrichtungen zur stereoskopen Aufnahme eines Gesamtgesichtsfeldes umfasst, gemäß einem Ausführungsbeispiel;
- Fig. 7b.: eine schematische perspektivische Ansicht einer Vorrichtung, die zwei Multiaperturabbildungsvorrichtungen umfasst, gemäß einem Ausführungsbeispiel, die ausgebildet ist, um die Tiefeninformation anstelle einer stereoskopen Aufnahme aus der Aufnahme in einem der Wellenlängenbereiche zu erstellen;
- Fig. 7c: eine schematische perspektivische Ansicht einer bevorzugten Ausgestaltung einer Multiaperturabbildungsvorrichtung gemäß einem Ausführungsbeispiel, die eine einzige Blickrichtung aufweist;
- Fig. 8: einen schematischen Aufbau umfassend eine erste Multiaperturabbildungsvorrichtung und eine zweite Multiaperturabbildungsvorrichtung mit einem gemeinsamen Bildsensor;
- Fig. 9a-d: schematische Ansichten einer Multiaperturabbildungsvorrichtung gemäß einem Ausführungsbeispiel, das unterschiedliche Wellenlängenbereiche nutzt;
- Fig. 10: einen schematischen Graphen einer Empfindlichkeit eines Bildsensorbereichs des Bildsensors der Multiaperturabbildungsvorrichtung über die Wellenlängen eines ersten und zweiten Wellenlängenbereichs gemäß einem Ausführungsbeispiel;
- Fig. 11a: eine schematische perspektivische Darstellung einer Multiaperturabbildungsvorrichtung gemäß einem Ausführungsbeispiel, zum Erfassen eines Gesamtgesichtsfeldes mit drei optischen Kanälen;
- Fig. 11b: eine schematische Aufsicht auf die Multiaperturabbildungsvorrichtung aus Fig. 11a sowie eine schematische Darstellung des Gesamtgesichtsfelds
- Fig. 12a: eine schematische perspektivische Ansicht einer Multiaperturabbildungsvorrichtung gemäß einem Ausführungsbeispiel, bei der die Anordnung von Optiken optischer Kanäle verglichen mit der Multiaperturabbildungsvorrichtung aus Fig. 11 a verändert ist;
- Fig. 12b: eine schematische Aufsicht auf die Multiaperturabbildungsvorrichtung aus Fig. 12a zusammen mit einer Darstellung des Gesamtgesichtsfelds;
- Fig. 13a-d: schematische Aufsichten auf Multiaperturabbildungsvorrichtungen gemäß Ausführungsbeispielen, die jeweils zur Erfassung zweier überlappender Gesamtgesichtsfelder ausgebildet sind;
- Fig. 14: eine schematische Aufsicht auf eine Multiaperturabbildungsvorrichtung gemäß einem Ausführungsbeispiel, bei dem optische Kanäle in zwei gegenüberliegenden optischen Kanälen angeordnet sind; und

- Fig. 15: schematische Draufsicht auf ein Array optischer Kanäle gemäß einem Ausführungsbeispiel, das ein gemeinsames Substrat für mehrere optische Kanäle aufweist.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgende Ausführungsbeispiele beziehen sich auf die Verwendung unterschiedlicher Wellenlängenbereiche zur Bildgebung auf einem Bildsensor. Die Wellenlänge bezieht sich auf elektromagnetische Strahlung, insbesondere Licht. Ein Beispiel für unterschiedliche Wellenlängenbereiche ist bspw. die Verwendung sichtbaren Lichts, etwa in einem Wellenlängenbereich von ca. 380 nm bis ca. 650 nm. Ein hiervon verschiedener Wellenlängenbereich kann bspw. ein ultraviolettes Spektrum mit Wellenlängen von weniger als 380 nm und/oder ein infrarotes Spektrum mit Wellenlängen von mehr als 700 nm, etwa von ca. 1.000 nm bis ca. 1.000 µm, insbesondere ein nahes Infrarotspektrum mit Wellenlängen in einem Bereich von ca. 700 nm oder 780 nm bis hin zu ca. 3 µm. Der erste und der zweite Wellenlängenbereich weisen voneinander zumindest teilweise verschiedene Wellenlängen auf. Gemäß einem Ausführungsbeispiel weisen die Wellenlängenbereiche keine Überlappungen auf. Gemäß einem alternativen Ausführungsbeispiel weisen die Wellenlängenbereiche einen Überlapp auf, der jedoch nur teilweise ist, so dass es Wellenlängen in beiden Bereichen gibt, die eine Unterscheidung ermöglichen.

Nachfolgend erläuterte Ausführungsbeispiele beziehen sich auf Strahlumlenkbereiche einer Strahlumlenkeinrichtung. Ein Strahlumlenkberiech kann ein Flächenbereich oder ein Bereich eines Objekts sein, der konfiguriert ist, um eine Umlenkung eines Strahlengangs zumindest in einem bestimmten Wellenlängenbereich vorzunehmen. Es kann sich dabei um eine Abfolge zumindest einer aufgebrachten Schicht, etwa dielektrischer aber auch elektrisch leitfähiger Schichten handeln, die eine Reflektivität bereitstellen oder einstellen. Es kann sich um eine elektrisch passive oder aktive Eigenschaft handeln.

In nachfolgend beschriebenen Ausführungsbeispielen wird Bezug genommen auf Hauptseiten und Nebenseiten einer Vorrichtung. Eine Hauptseite einer Vorrichtung kann hierin beschriebenen Ausführungsbeispielen als Seite eines Gehäuses oder der Vorrichtung verstanden werden, die verglichen mit anderen Seiten eine große oder eine größte Abmessung aufweist. Obwohl dies keine einschränkende Wirkung entfalten soll, kann beispielsweise eine erste Hauptseite eine Vorderseite und eine zweite Hauptseite eine Rückseite bezeichnen. Als Nebenseiten können Seiten oder Flächen verstanden werden, die die Hauptseiten miteinander verbinden.

Obwohl sich nachfolgend beschriebene Ausführungsbeispiele auf tragbare Vorrichtungen beziehen, können die dargelegten Aspekte ohne weiteres auf andere mobile oder immobile Vorrichtungen übertragen werden. Es versteht sich, dass beschriebene tragbare Vorrichtungen in anderen Vorrichtungen verbaut werden können, bspw. in Fahrzeugen. Ferner kann an Gehäuse einer Vorrichtung so gestaltet sein, dass nicht tragbar ist. Deshalb sollen die nachfolgend beschriebenen Ausführungsbeispiele nicht auf tragbare Vorrichtungen beschränkt sein, sondern können sich auf jegliche Implementierung einer Vorrichtung beziehen.

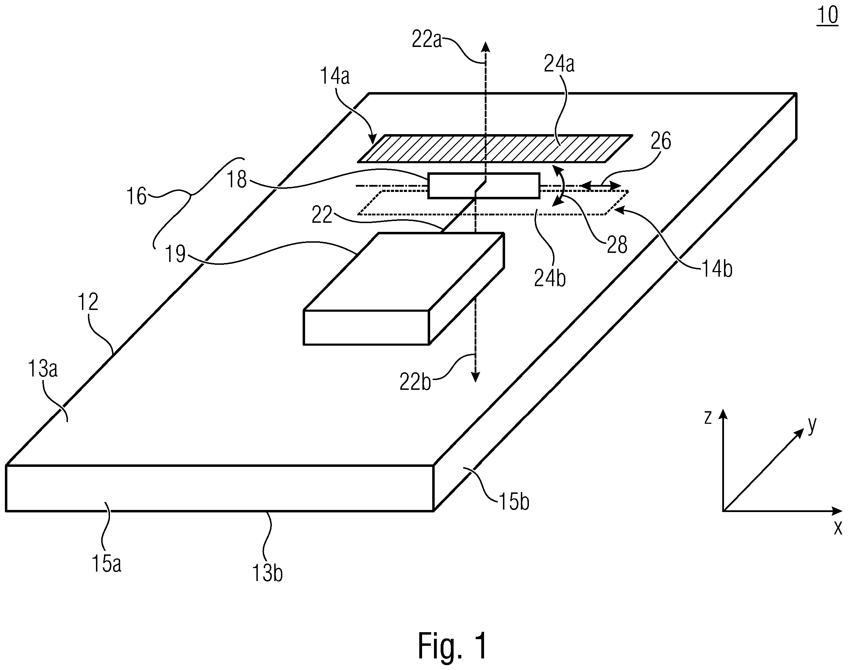

Fig. 1 zeigt eine schematische perspektivische Ansicht einer tragbaren Vorrichtung 10 gemäß einem Ausführungsbeispiel. Die tragbare Vorrichtung 10 umfasst ein Gehäuse 12 mit einem ersten transparenten Bereich 14a und einem zweiten transparenten Bereich 14b. Beispielsweise kann das Gehäuse 12 aus einem opaken Kunststoff, einem Metall oder dergleichen geformt sein. Die transparenten Bereiche 14a und/oder 14b können einstückig mit dem Gehäuse 12 gebildet sein oder mehrstückig gebildet sein. Die transparenten Bereiche 14a und/oder 14b können beispielsweise Aussparungen in dem Gehäuse 12 sein. Alternativ kann in einem Bereich der Aussparungen oder der transparenten Bereiche 14a und/oder 14b ein transparentes Material angeordnet sein. Transparente Materialen der transparenten Bereiche 14a und/oder 14b können zumindest in einem Wellenlängenbereich einer elektromagnetischen Strahlung transparent sein, für die eine Abbildungsvorrichtung, insbesondere eine Multiaperturabbildungsvorrichtung 16 bzw. ein Bildsensor derselben empfänglich ist. Das bedeutet, dass die transparenten Bereiche 14a und/oder 14b in hiervon verschiedenen Wellenlängenbereichen teilweise oder vollständig opak ausgebildet sein können. Beispielsweise kann die Abbildungsvorrichtung 16 ausgebildet sein, um einen ersten und einen zweiten Wellenlängenbereich zu erfassen, etwa einen sichtbaren Wellenlängenbereich und einen zumindest teilweise hiervon verschiedenen Wellenlängenbereich zu erfassen.

Die Abbildungsvorrichtung oder Multiaperturabbildungsvorrichtung 16 ist einem Inneren des Gehäuses 12 angeordnet. Die Abbildungsvorrichtung 16 umfasst eine Strahlumlenkeinrichtung 18 und eine Bilderfassungseinrichtung 19. Die Bilderfassungseinrichtung 19 kann zwei oder mehrere optische Kanäle umfassen, die jeweils eine oder mehrere Optiken zum Verändern (etwa Bündeln, Fokussieren oder Streuen) eines Strahlengangs der Abbildungsvorrichtung 16 und einen Bildsensor aufweisen. Optiken können bezüglich unterschiedlicher optischer Kanäle disjunkt bzw. ungeteilt oder kanalindividuell sein. Alternativ ist es jedoch ebenfalls möglich, dass die Optiken Elemente aufweisen, die gemeinsam für zwei, mehrere oder alle optische Kanäle wirken, etwa eine gemeinsame Sammellinse, ein gemeinsames Filter oder dergleichen kombiniert mit einer kanalindividuellen Linse.

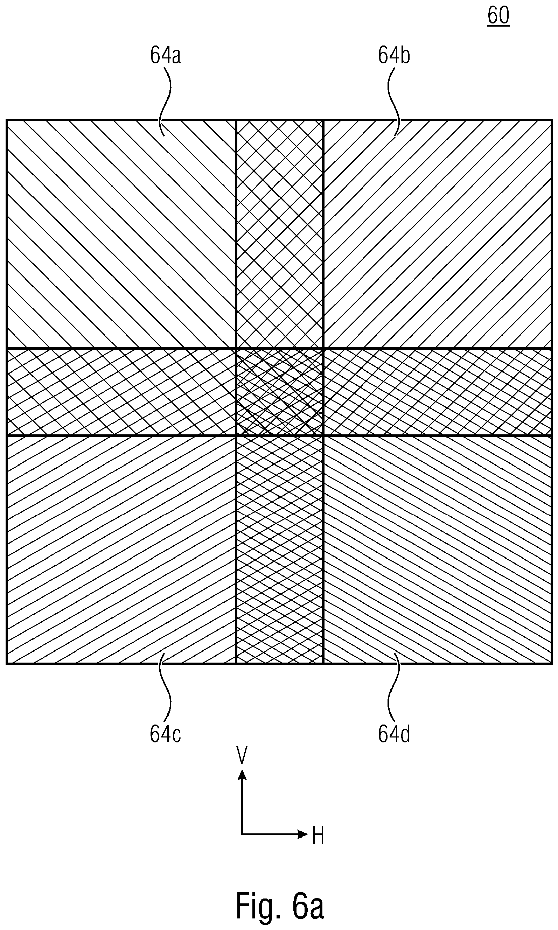

Beispielsweise kann die Bilderfassungseinrichtung 19 einen oder mehrere Bildsensoren aufweisen, deren zugeordnete Strahlengänge durch einen oder mehrere optische Kanäle hindurch auf die Strahlumlenkeinrichtung 18 gelenkt und von dieser umgelenkt werden. Wie es im Zusammenhang mit Fig. 6a beschrieben ist, können die zumindest zwei optischen Kanäle so umgelenkt werden, dass sie einander überlappende Teilgesichtsfelder (Teilobjektbereiche) eines Gesamtgesichtsfeldes (Gesamtobjektbereich) erfassen. Die Abbildungsvorrichtung 16 kann als Multiaperturabbildungsvorrichtung bezeichnet werden. Jeder Bildsensorbereich des Bildsensors kann einem optischen Kanal zugeordnet sein. Dabei kann zwischen benachbarten Bildsensorbereichen eine bautechnische Lücke angeordnet sein oder die Bildsensorbereiche können als unterschiedliche Bildsensoren oder Teilen hiervon implementiert sein, es ist aber alternativ oder zusätzlich ebenso möglich, dass benachbarte Bildsensorbereiche direkt aneinandergrenzen und über das Auslesen des Bildsensors voneinander separiert werden.

Die tragbare Vorrichtung 10 weist einen ersten Betriebszustand und einen zweiten Betriebszustand auf. Der Betriebszustand kann mit einer Stellung, Position oder Orientierung der Strahlumlenkeinrichtung 18 korreliert sein. Dies kann sich darauf beziehen, welcher Wellenlängenbereich von der Strahlumlenkeinrichtung 16 umgelenkt wird indem Seiten mit unterschiedlicher Wirksamkeit zur Umlenkung genutzt werden. Alternativ oder zusätzlich können zwei unterschiedliche Betriebszustände darauf bezogen werden, in welche Richtung der Strahlengang umgelenkt wird. Bei der beispielhaften Multiaperturabbildungsvorrichtung 16 könnten bspw. 4 Betriebszustände vorliegen, zwei für zwei unterschiedliche Blickrichtungen und zwei für die unterschiedlichen Wellenlängenbereiche. Ein Grund hierfür ist, dass die Strahlumlenkeinrichtung 16 einen ersten Strahlumlenkbereich aufweist, der für den ersten Wellenlängenbereich durch den optischen Kanal verlaufender elektromagnetischer Strahlung wirksam ist; und einen zweiten Strahlumlenkbereich aufweist, der für den zweiten, von dem ersten Wellenlängenbereich verschiedenen Wellenlängenbereich der durch die optischen Kanäle verlaufenden elektromagnetischen Strahlung wirksam ist.

Im Hinblick auf die Blickrichtungen kann in dem ersten Betriebszustand die Strahlumlenkeinrichtung 18 den Strahlengang 22 der Abbildungsvorrichtung 16 so umlenken, dass dieser durch den ersten transparenten Bereich 14a verläuft, wie es durch den Strahlengang 22a angedeutet ist. In dem zweiten Betriebszustand kann die Strahlumlenkeinrichtung 18 ausgebildet sein, um den Strahlengang 22 der Abbildungsvorrichtung 16 so umzulenken, dass dieser durch den zweiten transparenten Bereich 14b verläuft, wie es durch den Strahlengang 22b angedeutet ist. Dies kann auch so verstanden werden, dass die Strahlumlenkeinrichtung 18 den Strahlengang 22 zu einem Zeitpunkt und basierend auf dem Betriebszustand durch einen der transparenten Bereiche 14a und/oder 14b lenkt. Basierend auf dem Betriebszustand kann eine Position eines Gesichtsfeldes (Objektbereich), das von der Abbildungsvorrichtung 16 erfasst wird, im Raum veränderlich angeordnet sein.

Der erste, für den ersten Wellenlängenbereich wirksame Strahlumlenkbereich und der zweite, für den zweiten Wellenlängenbereich wirksame Strahlumlenkbereich kann wechselweise genutzt werden, um die Strahlengänge der optischen Kanäle bzw. den Strahlengang 22 umzulenken. Hierdurch ist es möglich, denjenigen Teil des Spektrums in Richtung des Bildsensors zu lenken, für den der Strahlumlenkbereich wirksam ist. Bspw. kann der Strahlumlenkbereich eine Bandpass-Funktionalität aufweisen und diejenigen Wellenlängenbereiche umlenken, d. h., reflektieren, für die die Bandpass-Funktionalität ausgelegt ist, während andere Wellenlängenbereiche unterdrückt, herausgefiltert werden oder zumindest stark gedämpft werden, etwa um zumindest 20 dB, zumindest 40 dB oder zumindest 60 dB.

Die Strahlumlenkbereiche können auf einer selben Seite der Strahlumlenkeinrichtung 18 angeordnet sein, was Vorteile bei translatorisch verschiebbaren Strahlumlenkeinrichtungen bietet. Alternativ oder zusätzlich können unterschiedliche Strahlumlenkbereiche auch an unterschiedlichen Seiten der Strahlumlenkeinrichtung 18 angeordnet sein, die basierend auf einer Rotationsbewegung der Strahlumlenkeinrichtung 18 wechselweise dem Bildsensor zugewandt sein können. Ein Anstellwinkel kann dabei beliebig sein. Es ist jedoch vorteilhaft, bei Verwendung zweier ggf. gegenüberliegender Blickrichtungen der Multiaperturabbildungsvorrichtung 16 einen Winkel von in etwa 45° zu wählen, so dass eine Rotationsbewegung von 90° ausreichend ist, um die Blickrichtung zu wechseln. Bei lediglich einer Blickrichtung kann dahingegen ein weiterer Freiheitsgrad gewählt werden.

Durch das wechselweise Zuwenden unterschiedlicher Strahlumlenkbereiche kann das Gesamtgesichtsfeld der jeweiligen Blickrichtung mit voneinander verschiedenen Wellenlängenbereichen erfasst werden, indem die Multiaperturabbildungsvorrichtung ausgebildet ist, um eine erste Aufnahme des Gesamtgesichtsfeldes unter Verwendung des ersten Strahlumlenkbereichs mit dem Bildsensor zu erfassen, so dass die erste Aufnahme auf dem ersten Wellenlängenbereich basiert; und um eine zweite Aufnahme des Gesamtgesichtsfeldes unter Verwendung des zweiten Strahlumlenkbereichs mit dem Bildsensor zu erfassen, so dass die zweite Aufnahme auf dem zweiten Wellenlängenbereich basiert. So kann bspw. ein für das menschliche Auge nicht sichtbarer Wellenlängenbereich genutzt werden, um zusätzliche Bildinformationen zu erhalten, etwa Tiefenkarten.

Die tragbare Vorrichtung 10 kann eine erste Blende 24a und eine zweite Blende 24b umfassen. Die Blende 24a ist in einem Bereich des transparenten Bereichs 14a angeordnet und ist ausgebildet, um in einem geschlossenen Zustand der Blende 24a den transparenten Bereich 14a optisch zumindest teilweise zu verschließen. Gemäß einem Ausführungsbeispiel ist die Blende 24a ausgebildet, um in dem geschlossenen Zustand den transparenten Bereich 14a vollständig oder zumindest zu 50 %, 90 % oder zumindest zu 99 % der Fläche des transparenten Bereichs 14a zu verschließen. Die Blende 24b ist ausgebildet, um den transparenten Bereich 14b in gleicher oder ähnlicher Weise zu verschließen, wie es für die Blende 24a im Zusammenhang mit dem transparenten Bereich 14a beschrieben ist. In dem ersten Betriebszustand, in dem die Strahlumlenkeinrichtung 18 den Strahlengang 22 zum Strahlengang 22a umlenkt, kann die Blende 24b den transparenten Bereich 14b optisch zumindest teilweise verschließen, so dass durch den transparenten Bereich 14b Falschlicht in einem geringen Umfang oder ggf. nicht in das Innere des Gehäuses 12 eintritt. Dies ermöglicht eine geringe Beeinflussung der Aufnahme des Gesichtsfeldes im ersten Betriebszustand durch die Blende 14b eintretendes Falschlicht. In dem zweiten Betriebszustand, in dem beispielsweise der Strahlengang 22b aus dem Gehäuse 12 austritt, kann die Blende 24a den transparenten Bereich 14a optisch zumindest teilweise verschließen. Vereinfacht ausgedrückt, können die Blenden 24a und/oder 24b so ausgebildet sein, dass sie transparente Bereiche 14a bzw. 14b so verschließen, dass durch diese Falschlicht aus ungewollten Richtungen (in denen beispielsweise das erfasste Gesichtsfeld nicht angeordnet ist) in einem geringen Umfang eintritt oder nicht eintritt. Die Blenden 24a bzw. 24b können durchgehend gebildet sein und jeweils bzgl. aller optischen Kanäle der Abbildungsvorrichtung 16 angeordnet sein. Das bedeutet, die Blenden 24a und 24b können basierend auf dem jeweiligen Betriebszustand sind von allen optischen Kanälen der Multiaperturabbildungsvorrichtung genutzt werden. Gemäß einem Ausführungsbeispiel sind keine einzelnen runden Blenden für jeden optischen Kanal angeordnet, sondern stattdessen wird eine Blende 24a bzw. 24b, die von allen optischen Kanälen genutzt. Die Blenden 24a und/oder 24b können einem Polygonzug folgend, bspw. rechteckig, oval, rund oder elliptisch geformt sein.

Ein Umschalten zwischen dem ersten und dem zweiten Betriebszustand kann beispielsweise eine Bewegung der Strahlumlenkeinrichtung 18 basierend auf einer translatorischen Bewegung 26 und/oder basierend auf einer rotatorischen Bewegung 28 umfassen.

Die Blenden 24a und/oder 24b können beispielsweise als mechanische Blende ausgebildet sein. Alternativ können die Blenden 24a und/oder 24b als elektrochrome Blende ausgebildet sein. Dies ermöglicht eine geringe Anzahl von mechanisch beweglichen Teilen. Ferner ermöglicht eine Ausgestaltung der Blenden 24a und/oder 24b als elektrochrome Blende ein geräuschloses Öffnen und/oder Verschließen der transparenten Bereiche 14a und/oder 14b sowie eine gute in eine Optik der tragbaren Vorrichtung 10 integrierbare Ausgestaltung. Beispielsweise können die Blenden 24a und/oder 24b so ausgeführt sein, dass sie in einem geschlossenen Zustand von einem Benutzer kaum oder nicht wahrgenommen werden, da sich wenig optische Unterschiede zu dem Gehäuse 12 ergeben.

Das Gehäuse 12 kann flach gebildet sein. Beispielsweise können Hauptseiten 13a und/oder 13b in einer x-/y-Ebene oder einer Ebene parallel hierzu im Raum angeordnet sein. Nebenseiten oder Nebenflächen 15a und/oder 15b zwischen den Hauptseiten 13a und 13b können schräg oder senkrecht hierzu im Raum angeordnet sein, wobei die Hauptseiten 13a und/oder 13b und/oder die Nebenseiten 15a und/oder 15b gekrümmt oder eben ausgebildet sein können. Eine Ausdehnung des Gehäuses 12 entlang einer ersten Gehäuserichtung z zwischen den Hauptseiten 13a und 13b, beispielsweise parallel oder antiparallel zu einer Oberflächennormalen einer Anzeige der tragbaren Vorrichtung 10, kann gering sein, wenn sie mit weiteren Abmessungen des Gehäuses 12 entlang weiteren Ausdehnungen, d.h. entlang einer Erstreckungsrichtung der Hauptseite 13a und/oder 13b verglichen wird. Die Nebenseiten 15a und 15b können parallel oder antiparallel zu der Oberflächennormalen einer Anzeige sein. Die Hauptseiten 13a und/oder 13b können senkrecht zu einer Oberflächennormalen einer Anzeige der tragbaren Vorrichtung 10 im Raum angeordnet sein. So kann beispielsweise eine Ausdehnung des Gehäuses entlang der x-Richtung und/oder der y-Richtung mindestens ein Dreifaches, mindestens ein Fünffaches oder mindestens ein Siebenfaches einer Ausdehnung des Gehäuses 12 entlang der ersten Ausdehnung z aufweisen. Die Ausdehnung des Gehäuses z kann vereinfachend, jedoch ohne einschränkende Wirkung, als Dicke oder Tiefe des Gehäuses 12 verstanden werden.

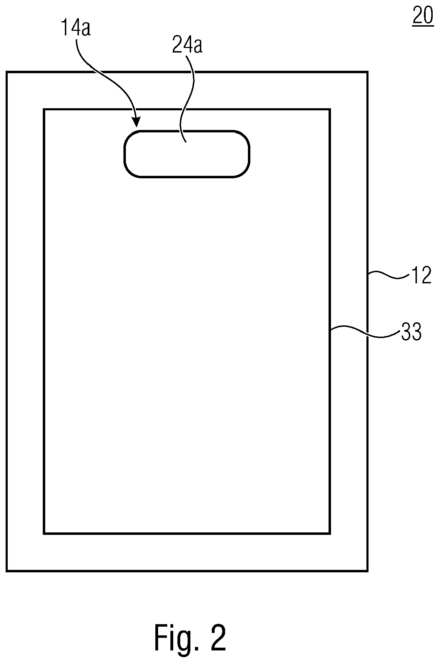

Fig. 2 zeigt eine schematische Ansicht einer Hauptseite einer tragbaren Vorrichtung 20 gemäß einem Ausführungsbeispiel. Die tragbare Vorrichtung kann die Vorrichtung 10 umfassen. Die tragbare Vorrichtung 20 kann eine Anzeige 33 umfassen, beispielsweise einen Bildschirm oder Display. Beispielsweise kann es sich bei der Vorrichtung 20 um eine tragbare Kommunikationsvorrichtung, wie etwa ein Mobiltelefon (Smartphone), einen Tablet-Computer, ein mobiles Musikabspielgerät, einen Monitor oder Bildschirmgerät, das die Abbildungsvorrichtung 16 aufweist, handeln. Der transparente Bereich 14a und/oder der transparente Bereich 14b können in einem Bereich des Gehäuses 12 angeordnet sein, in dem die Anzeige 33 angeordnet ist. Das bedeutet, dass die Blende 24a und/oder 24b in einem Bereich der Anzeige 33 angeordnet sein kann. Beispielsweise kann der transparente Bereich 14a und/oder 14b und/oder die Blende 24a bzw. 24b von der Anzeige 33 verdeckt sein. In einem Bereich der Anzeige 33, in dem die Blende 24a und/oder 24b angeordnet ist, kann zumindest zeitweise eine Information der Anzeige darstellbar sein. Bei dem Darstellen der Information kann es sich um einen beliebigen Betrieb der tragbaren Vorrichtung 20 handeln. Beispielsweise kann auf der Anzeige 33 eine Sucher-Funktion darstellbar sein, in welcher ein Gesichtsfeld darstellbar ist, das von der Abbildungsvorrichtung im Inneren des Gehäuses 12 abgetastet oder erfasst wird. Alternativ oder zusätzlich können bereits erfasste Bilder oder beliebige andere Informationen darstellbar sein. In einfachen Worten kann der transparente Bereich 14a und/oder die Blende 24a von der Anzeige 33 verdeckt sein, so dass der transparente Bereich 14a und/oder die Blende 24a während eines Betriebs der tragbaren Vorrichtung 20 kaum oder nicht wahrnehmbar ist.

Die transparenten Bereich 14a und 14b können jeweils in zumindest einer Hauptseite 13a des Gehäuses 12 und/oder in einer gegenüberliegenden Hauptseite angeordnet sein. In einfachen Worten kann das Gehäuse 12 einen transparenten Bereich vorne und einen transparenten Bereich hinten aufweisen. Hierzu sei angemerkt, dass die Begriffe vorne und hinten beliebig durch andere Begriffe, wie etwa links und rechts, oben und unten oder dergleichen ersetzt werden können, ohne hierin beschriebene Ausführungsbeispiele einzuschränken. Gemäß weiteren Ausführungsbeispielen können die transparenten Bereiche 14a und/oder 14b in einer Nebenseite angeordnet sein. Eine Anordnung der transparenten Bereiche kann beliebig und/oder abhängig von Richtungen, in welche die Strahlengänge der optischen Kanäle umlenkbar sind, sein,

In dem Bereich des transparente Bereichs 14a oder der Blende 24a kann die Anzeige 33 beispielsweise ausgebildet sein, um während eines Erfassens eines Bildes mit der Abbildungsvorrichtung zeitweise deaktiviert zu werden oder um eine Transparenz der Anzeige 33 aus dem Gehäuse 12 heraus zu erhöhen. Alternativ kann die Anzeige 33 in diesem Bereich auch aktiv bleiben, etwa wenn die Anzeige 33 keine oder kaum elektromagnetische Strahlung in einem relevanten Wellenlängenbereich in das Innere der tragbaren Vorrichtung 20 bzw. des Gehäuses 12 oder hin zu der Abbildungsvorrichtung 16 aussendet.

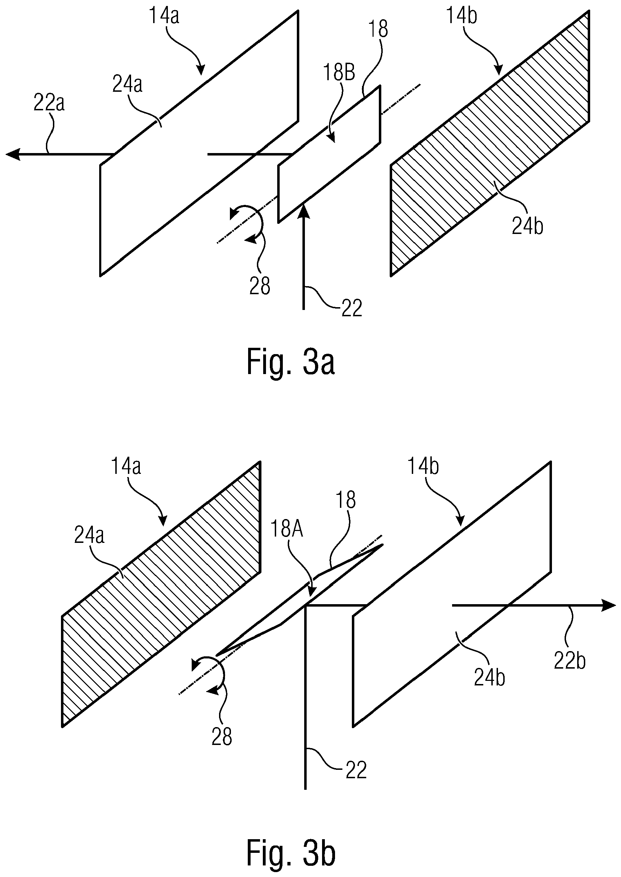

Fig. 3a zeigt die Strahlumlenkeinrichtung 18 und einen Zustand der Multiaperturabbildungsvorrichtung, der bspw. einhergeht mit einem Betriebszustand der ersten Blende 24a sowie der zweiten Blende 24b. Die Strahlumlenkeinrichtung 18 lenkt beispielsweise den Strahlengang 22 mit einem erst in Fig. 3b gezeigten Strahlumlenkbereich 18A so um, dass dieser als Strahlengang 22a durch den transparenten Bereich 14a verläuft. Die Blende 24b kann den transparenten Bereich 14b zeitweise zumindest teilweise verschlie-ßen, so dass durch den transparenten Bereich 14b Falschlicht in einem geringen oder keinem Umfang in das Innere des Gehäuses der tragbaren Vorrichtung eindringt.

Fig. 3b zeigt die Strahlumlenkeinrichtung 18, die Blende 24a und die Blende 24b in einem zweiten Betriebszustand, wobei die Strahlumlenkeinrichtung 18 bspw. unter Ausführung der rotatorischen Bewegung 28 um 90° eine andere Blickrichtung aufweist. Allerdings lenkt die Strahlumlenkeinrichtung nun den Strahlengang mit einem Strahlumlenkbereich 18B um, der für den zweiten Wellenlängenbereich wirksam ist, so dass eine Erfassung eines in Blickrichtung des Strahlengangs 22b angeordneten Gesamtgesichtsfeldes im Bereich des zweiten Wellenlängenbereichs erfolgen kann.

Bei einer Rotation der Strahlumlenkeinrichtung um weitere 90° und somit 180° gegenüber dem ursprünglichen Zustand würde die in Fig. 3a dargestellte erste Blickrichtung wieder eingenommen, jedoch unter Einfluss des Strahlumlenkbereichs 18B. Obwohl auch die Erfassung lediglich eines Gesamtgesichtsfeldes möglich ist, indem bspw. lediglich die Blickrichtung 22a oder 22b unter einem beliebigen Winkel vorgesehen ist, kann somit auch eine höhere Anzahl von Gesamtgesichtsfeldern, etwa 2, 3 oder mehr erfasst werden.

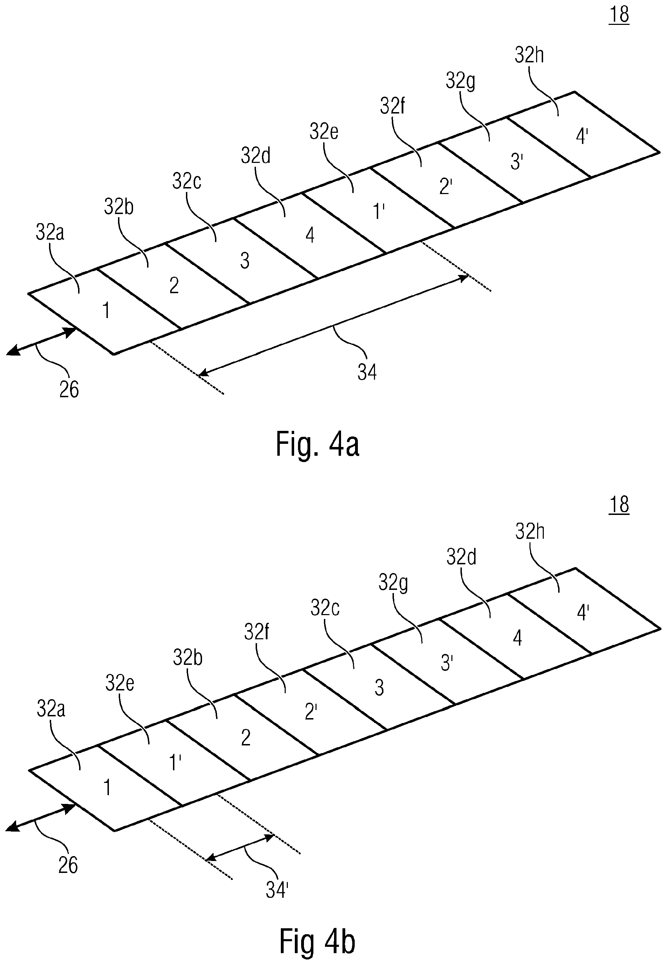

Die Strahlumlenkeinrichtung 18 kann den Strahlengang 22 so umlenken, dass dieser als Strahlengang 22b durch den transparenten Bereich 14b verläuft, während die Blende 24a den transparenten Bereiche 14a optisch zumindest teilweise verschließt. In dem zweiten Betriebszustand kann die Blende 24b einen zumindest teilweise oder vollständig geöffneten Zustand aufweisen. Der geöffnete Zustand kann sich auf eine Transparenz der Blende beziehen. Bspw. kann eine elektrochrome Blende abhängig von einem Ansteuerungszustand als geöffnet oder geschlossen bezeichnet werden, ohne dass mechanische Komponenten bewegt werden. Eine als elektrochrome Blende ausgeführte Blende 24b kann zumindest zeitweise während des zweiten Betriebszustands für einen von der Abbildungsvorrichtung zu erfassenden Wellenlängenbereich teilweise oder vollständig transparent sein. In dem ersten Betriebszustand, wie er in Fig. 3a dargestellt ist, kann die Blende 24b für diesen Wellenlängenbereich teilweise oder vollständig intransparent oder opak sein. Ein Umschalten zwischen dem ersten Betriebszustand gemäß Fig. 3a und dem zweiten Betriebszustand gemäß Fig. 3b kann basierend auf der Rotationsbewegung 28 der Umlenkeinrichtung 18 und/oder basierend auf einer translatorischen Bewegung, wie es im Zusammenhang mit den Fig. 4a und 4b beschrieben ist, und erhalten werden oder zumindest eine dieser Bewegungen umfassen.

Fig. 4a zeigt eine schematische Ansicht der Strahlumlenkeinrichtung 18, die eine Vielzahl von Strahlumlenkelementen 32a-h umfasst. Beispielsweise kann die Abbildungsvorrichtung eine Mehrzahl oder eine Vielzahl von optischen Kanälen umfassen, etwa zwei, vier oder eine höhere Anzahl. Weist die Abbildungsvorrichtung beispielsweise vier optische Kanäle auf, kann die Strahlumlenkeinrichtung 18 eine Anzahl von Strahlumlenkelemente 32a-h gemäß einer Anzahl der optischen Kanäle multipliziert mit einer Anzahl von Betriebszuständen, zwischen denen die Strahlumlenkeinrichtung 18 oder die tragbare Vorrichtung umschaltbar ist, umfassen. Beispielsweise können die Strahlumlenkelemente 32a und 32e einem ersten optischen Kanal zugeordnet sein, wobei der Strahlumlenkelement 32a den Strahlengang des ersten optischen Kanal in dem ersten Betriebszustand und der Strahlumlenkelement 32e den Strahlengang des ersten optischen Kanals in dem ersten Betriebszustand umlenkt. In gleicher Weise können die Strahlumlenkelement 32b und 32f, 32c und 32g bzw. 32d und 32h weiteren optischen Kanälen zugeordnet sein.

Die Strahlumlenkeinrichtung kann entlang der translatorischen Bewegungsrichtung 26 translatorisch bewegbar sein kann und/oder zwischen einer ersten Stellung und einer zweiten Stellung der Strahlumlenkeinrichtung 18 bezüglich der optischen Kanäle der Abbildungsvorrichtung hin und her bewegbar sein, um zwischen dem ersten Betriebszustand und dem zweiten Betriebszustand zu wechseln. Eine Distanz 34, über die die Strahlumlenkeinrichtung 18 zwischen der ersten Stellung und der zweiten Stellung bewegt wird, kann zumindest einem Abstand zwischen vier optischen Kanälen der Abbildungsvorrichtung entsprechen. Die Strahlumlenkeinrichtung 18 kann eine blockweise Sortierung der Strahlumlenkelemente 32a-h aufweisen. Bspw. können die Strahlumlenkelemente 32a-d ausgebildet sein, um die Strahlengänge der Abbildungsvorrichtung in eine erste Blickrichtung hin zu einem ersten Gesichtsfeld umzulenken, wobei jeder optische Kanal einem Teilgesichtsfeld des Gesamtgesichtsfelds zugeordnet sein kann. Die Strahlumlenkelemente 32e-h können ausgebildet sein, um die Strahlengänge der Abbildungsvorrichtung in eine zweite Blickrichtung hin zu einem zweiten Gesichtsfeld umzulenken, wobei jeder optische Kanal einem Teilgesichtsfeld des Gesamtgesichtsfelds zugeordnet sein kann. Gemäß weiteren Ausführungsbeispielen ist es möglich, dass Strahlengänge von zumindest zwei optischen Kanälen von einem Strahlumlenkelement umgelenkt werden, so dass eine Anzahl von Strahlumlenkelementen der Strahlumlenkeinrichtung 18 geringer sein kann.

Bei den Strahlumlenkelementen 32a-h kann es sich bspw. um voneinander verschieden gekrümmte Bereiche der Strahlumlenkeinrichtung 18 oder um plane Facetten eines Facettenspiegels handeln. Beispielsweise kann die Strahlumlenkeinrichtung 18 als ein Array von Facetten und/oder zueinander unterschiedlich geneigten Umlenkelementen 32a-h verstanden werden, so dass auf die Strahlumlenkeinrichtung 18 treffende Strahlengänge von optischen Kanälen in voneinander verschiedene Teilgesichtsfelder des Gesichtsfeldes des ersten Betriebszustandes und auf Umlenkelemente 32e-h treffende und von diesen umgelenkte Strahlengänge in voneinander verschiedene Teilgesichtsfelder eines Gesichtsfeldes des zweiten Betriebszustandes gelenkt werden.

Fig. 4b zeigt eine schematische Ansicht der Strahlumlenkeinrichtung 18 gemäß einer Konfiguration, die zu der Konfiguration gemäß der Fig. 4a verschieden ist. Während die Konfiguration gemäß Fig. 4a als blockweise Sortierung der Strahlumlenkelemente 32a-h basierend auf einem Betriebszustand verstanden werden kann, kann die Konfiguration gemäß Fig. 4b als kanalweise Sortierung der Strahlumlenkelemente 32a-h basierend auf einer Reihenfolge der optischen Kanäle der Abbildungsvorrichtung verstanden werden.

Die dem ersten optischen Kanal zugeordneten Strahlumlenkelemente 32a und 32e können benachbart zueinander angeordnet sein. Analog können die Strahlumlenkelemente 32b und 32f, 32c und 32g bzw. 32d und 32h, die den optischen Kanälen 2, 3 bzw. 4 zugeordnet sein können, benachbart zueinander angeordnet sein. Weisen die optischen Kanäle der Abbildungsvorrichtung beispielsweise einen hinreichen großen Abstand zueinander auf, kann eine Distanz 34', über die die Strahlumlenkeinrichtung 18 hinweg bewegt wird, um zwischen der ersten Stellung und der zweiten Stellung hin und her bewegt zu werden, geringer sein als die Distanz 34, beispielsweise ein Viertel oder eine Hälfte hiervon. Dies ermöglicht eine zusätzlich reduzierte Bauform der Abbildungsvorrichtung und/oder der tragbaren Vorrichtung.

Anstelle einer reinen Zuordnung zu optischen Kanälen können die Strahlumlenkelemente auch jeweils verschieden geartete Strahlumlenkbereiche bereitstellen, so dass ein erster optischer Kanal bspw. durch Umlenken entweder mit dem Strahlumlenkelement 32a im ersten Wellenlängenbereich oder durch Umlenken mit dem Strahlumlenkelement 32e im zweiten Wellenlängenbereich umgelenkt wird.

Die Rotationsbewegung ist mit der translatorischen Bewegung kombinierbar. So ist es bspw. vorstellbar, dass eine translatorische Bewegung zwischen den Wellenlängenbereichen umschaltet, d. h., die verschiedenen Strahlumlenkelemente 32a-h sind an einer gemeinsamen Seite der Strahlumlenkeinrichtung 18 angeordnet, wobei eine beidseitig reflektive Ausgestaltung eine Umschaltung der Blickrichtung ermöglicht oder anders herum.

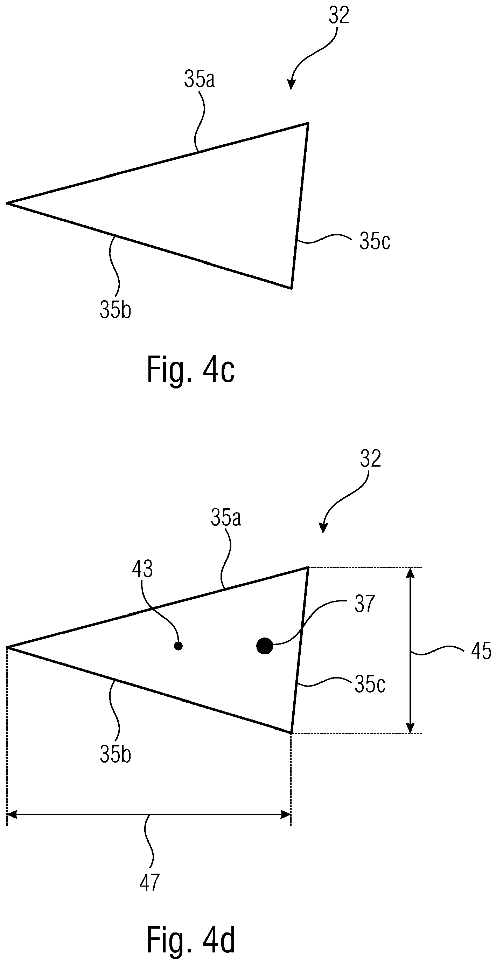

Anhand der Fig. 4c-h werden vorteilhafte Ausgestaltungen der Strahlumlenkeinrichtung 18 beschrieben. Die Ausführungen zeigen eine Reihe von Vorteilen auf, die einzeln oder in beliebiger Kombination miteinander ausführbar sind, jedoch nicht einschränkend wirken sollen.

Fig. 4c zeigt eine schematische Seitenschnittansicht eines Strahlumlenkelements 32, wie es für eine hierin beschriebene Strahlumlenkeinrichtung, etwa die Strahlumlenkeinrichtung 18 der Fig. 4a oder 4b, einsetzbar ist. Das Strahlumlenkelement 32 kann einen polygonzugartigen Querschnitt aufweisen. Obwohl ein dreieckiger Querschnitt gezeigt ist, kann es sich auch um ein beliebiges anderes Polygon handeln. Alternativ oder zusätzlich kann der Querschnitt auch zumindest eine gekrümmte Oberfläche aufweisen, wobei insbesondere bei reflektierenden Oberflächen eine zumindest abschnittsweise ebene Ausbildung vorteilhaft sein kann, um Abbildungsfehler zu vermeiden. Bezüglich Wellenlängen unterschiedlich wirksame Strahlumlenkbereiche können an unterschiedlichen und einander gegenüberliegenden Hauptseiten 35a und 35b angeordnet sein.

Das Strahlumlenkelement 32 weist bspw. eine erste Seite 35a, eine zweite Seite 35b und eine dritte Seite 35c auf. Zumindest zwei Seiten, etwa die Seiten 35a und 35b sind reflektiv ausgebildet, so dass das Strahlumlenkelement 32 beidseitig reflektiv ausgebildet ist. Bei den Seiten 35a und 35b kann es sich um Hauptseiten des Strahlumlenkelements 32 handeln, also Seiten, deren Fläche größer ist, als die Seite 35c.

In anderen Worten kann das Strahlumlenkelement 32 keilförmig und beidseitig reflektiv gebildet sein. Der Fläche 35c gegenüberliegend, also zwischen den Flächen 35a und 35b, kann eine weitere Fläche angeordnet sein, die jedoch wesentlich kleiner als die Fläche 35c ist. Mit anderen Worten verläuft in einem solchen Fall der durch die Flächen 35a, 35b und 35c gebildete Keil nicht beliebig spitz zu, sondern ist an der spitzen Seite mit einer Fläche versehen und mithin abgestumpft.

Fig. 4d zeigt eine schematische Seitenschnittansicht des Strahlumlenkelements 32, bei dem eine Aufhängung oder eine Verschiebeachse 37 des Strahlumlenkelements 32 beschrieben ist. Die Verschiebeachse 37, um die das Strahlumlenkelement 32 rotatorisch und/oder translatorisch in der Strahlumlenkeinrichtung 18 bewegbar sein kann, kann exzentrisch bezüglich eines Flächenschwerpunktes 43 des Querschnitts verschoben sein. Der Flächenschwerpunkt kann alternativ auch ein Punkt sein, der die hälftige Abmessung des Strahlumlenkelements 32 entlang einer Dickenrichtung 45 und entlang einer Richtung 47 senkrecht hierzu beschreibt.

Die Verschiebeachse kann bspw. entlang einer Dickenrichtung 45 unverändert und einen beliebigen Versatz in einer Richtung senkrecht hierzu aufweisen. Alternativ ist auch ein Versatz entlang der Dickenrichtung 45 vorstellbar. Die Verschiebung kann bspw. so erfolgen, dass bei einer Rotation des Strahlumlenkelements 32 um die Verschiebeachse 37 ein höherer Stellweg erhalten wird, als bei einer Rotation um den Flächenschwerpunkt 43. So kann sich durch die Verschiebung der Verschiebeachse 37 der Weg, um den die Kante zwischen den Seiten 35a und 35b bei einer Rotation bewegt wird bei gleichem Rotationswinkel verglichen mit einer Rotation um den Flächenschwerpunkt 43 erhöhen. Bevorzugt ist das Strahlumlenkelement 32 so angeordnet, dass die Kante, also die spitze Seite des keilförmigen Querschnitts, zwischen den Seiten 35a und 35b dem Bildsensor zugewandt ist. Durch geringe Rotationsbewegungen kann somit eine jeweils andere Seite 35a oder 35b den Strahlengang der optischen Kanäle umlenken. Hierbei wird deutlich, dass die Rotation so ausgeführt werden kann, dass ein Raumbedarf der Strahlumlenkeinrichtung entlang der Dickenrichtung 45 gering ist, da eine Bewegung des Strahlumlenkelements 32 so, dass eine Hauptseite senkrecht zum Bildsensor steht, nicht erforderlich ist.

Die Seite 35c kann auch als Nebenseite oder als Rückseite bezeichnet werden. Mehrere Strahlumlenkelemente können so miteinander verbunden werden, dass ein verbindendes Element an der Seite 35c angeordnet ist, oder durch den Querschnitt der Strahlumlenkelemente verläuft, also im Inneren der Strahlumlenkelemente angeordnet ist, etwa im Bereich der Verschiebeachse 37. Insbesondere kann das haltende Element so angeordnet sein, dass es nicht oder lediglich in geringem Umfang, d. h., höchstens 50 %, höchstens 30 % oder höchstens 10 % über das Strahlumlenkelement 32 entlang der Richtung 45 hinausragt, so dass das Halteelement nicht die Ausdehnung des Gesamtaufbaus entlang der Richtung 45 erhöht oder bestimmt. Die Ausdehnung in Dickenrichtung 45 kann alternativ durch die Linsen der optischen Kanäle bestimmt sein, d. h. diese weisen die das Minimum der Dicke definierende Abmessung auf.

Das Strahlumlenkelement 32 kann aus Glas, Keramik, Glaskeramik, Kunststoff, Metall oder einer Kombination dieser Materialien und /oder weiterer Materialien gebildet sein.

In anderen Worten kann das Strahlumlenkelement 32 so angeordnet sein, dass die Spitze, d. h., die Kante zwischen den Hauptseiten 35a und 35b zum Bildsensor zeigt. Eine Haltung der Strahlumlenkelemente kann so erfolgen, dass sie lediglich an der Rückseite oder im Inneren der Strahlumlenkelemente erfolgt, d. h. die Hauptseiten werden nicht verdeckt. Ein gemeinsames haltendes oder verbindendes Element kann sich über die Rückseite 35c erstrecken. Die Drehachse des Strahlumlenkelements 32 kann exzentrisch angeordnet sein.

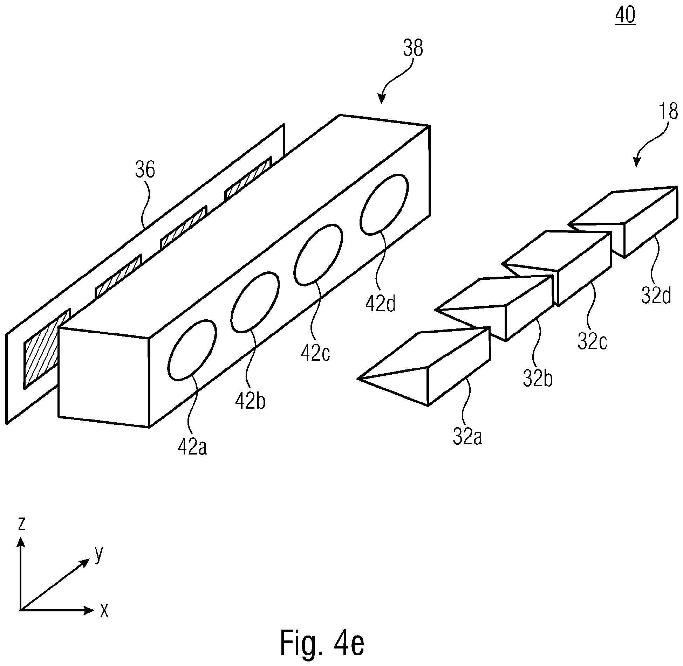

Fig. 4e zeigt eine schematische perspektivische Ansicht einer Multiaperturabbildungsvorrichtung 40, die einen Bildsensor 36, und ein einzeiliges Array 38 von nebeneinander angeordneten optischen Kanälen 42a-d umfasst. Die Strahlumlenkeinrichtung 18 umfasst eine Anzahl von Strahlumlenkelementen 32a-d, die der Anzahl von optischen Kanälen entsprechen kann. Alternativ kann eine geringere Anzahl von Strahlumlenkelementen angeordnet sein, etwa wenn zumindest ein Strahlumlenkelement von zwei optischen Kanälen genutzt wird. Alternativ kann auch eine höhere Anzahl angeordnet sein, etwa wenn eine Umschaltung der Umlenkrichtung der Strahlumlenkeinrichtung 18 durch eine translatorische Bewegung erfolgt, wie es mi Zusammenhang mit den Fig. 4a und 4b beschreiben ist. Jedes Strahlumlenkelement 32a-d kann einem optischen Kanal 42a-d zugeordnet sein. Die Strahlumlenkelemente 32a-d können als eine Vielzahl von Elementen 32 gemäß den Fig. 4c und Fig. 4d gebildet sein. Alternativ können zumindest zwei, mehrere oder alle Strahlumlenkelemente 32a-d einstückig miteinander gebildet sein.

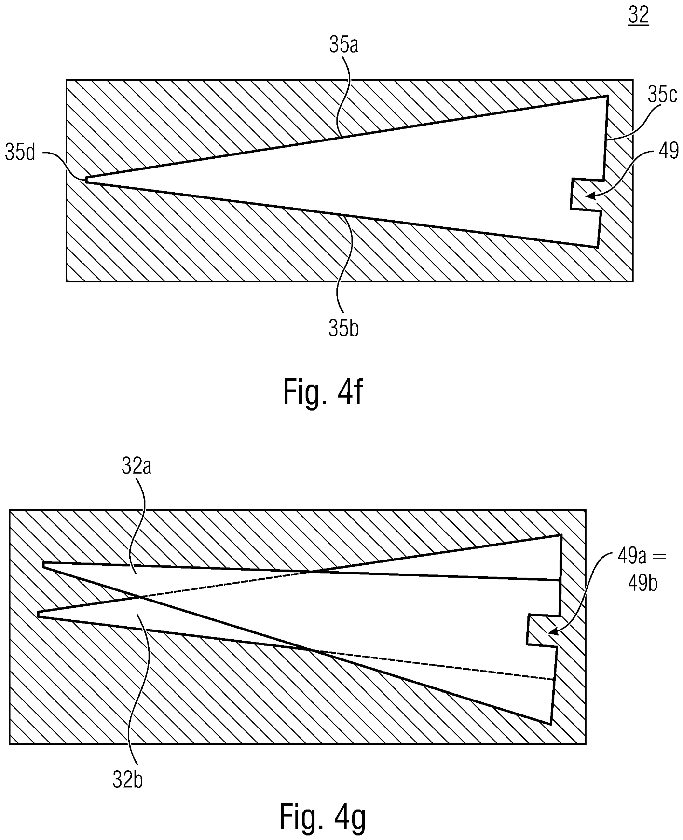

Fig. 4f zeigt eine schematische Seitenschnittansicht des Strahlumlenkelements 32, dessen Querschnitt als Freiformfläche gebildet ist. So kann die Seite 35c eine Aussparung 49 aufweisen, die eine Befestigung eines haltenden Elements ermöglicht, wobei die Aussparung 49 auch als hervorstehendes Element, etwa als Feder eines Nut-Feder-Systems gebildet sein kann. Der Querschnitt weist ferner eine vierte Seite 35d auf, die eine geringere Flächenausdehnung als die Hauptseiten 35a und 35b aufweist und selbige miteinander verbindet.

Fig. 4g zeigt eine schematische Seitenschnittansicht eines ersten Strahlumlenkelements 32a und eines in Darstellungsrichtung dahinterliegenden zweiten Strahlumlenkelements 32b. Die Aussparungen 49a und 49b können dabei so angeordnet sein, dass sie im Wesentlichen deckungsgleich sind, so dass eine Anordnung eines verbindenden Elements in den Aussparungen ermöglicht ist.

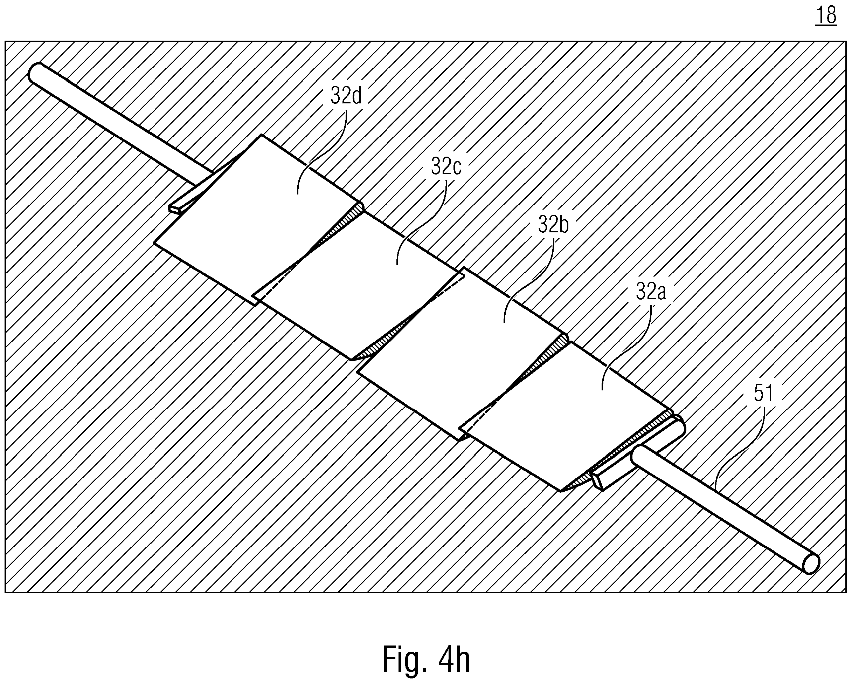

Fig. 4h zeigt eine schematische perspektivische Ansicht der Strahlumlenkeinrichtung 18, die bspw. vier Strahlumlenkelements 32a-d umfasst, die mit einem verbindenden Element 51 verbunden sind. Das verbindende Element kann nutzbar sein, um von einem Aktor translatorisch und/oder rotatorisch bewegbar zu sein. Das verbindende Element 51 kann einstückig ausgebildet sein und über eine Erstreckungsrichtung, etwa die y-Richtung in Fig. 4e, an oder in den Strahlumlenkelementen 32a-d verlaufen. Alternativ kann das verbindende Element 51 auch lediglich mit zumindest einer Seite der Strahlumlenkeinrichtung 18 verbunden sein, etwa wenn die Strahlumlenkelemente 32a-d einstückig gebildet sind. Alternativ kann eine Verbindung mit einem Aktor und/oder eine Verbindung der Strahlumlenkelemente 32a-d auch auf beliebige andere Weise erfolgen, etwa mittels Kleben, Ansprengen oder Löten,

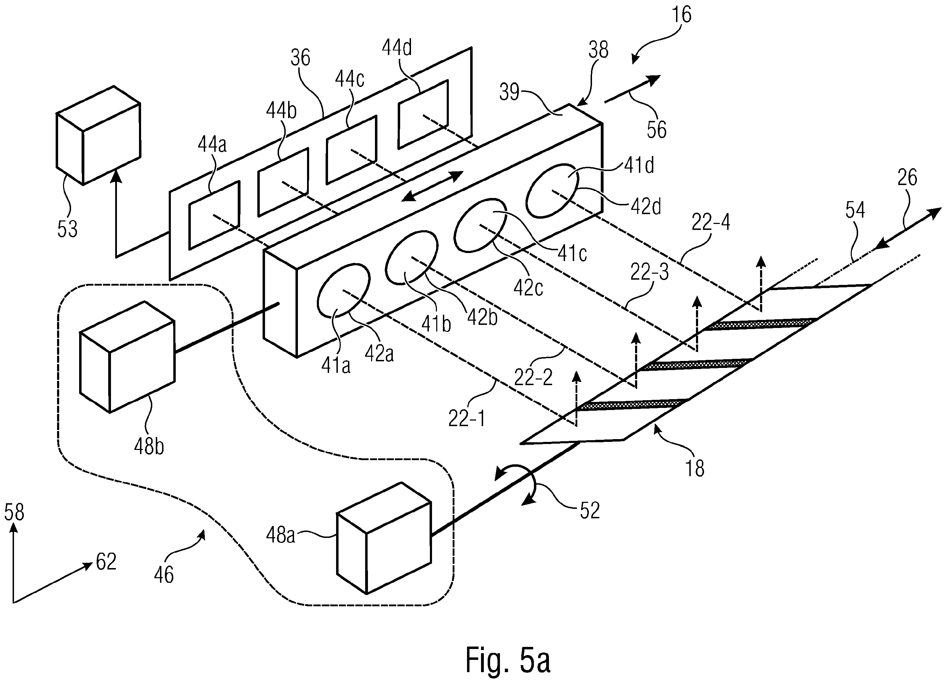

Fig. 5a zeigt eine schematische perspektivische Ansicht der Abbildungsvorrichtung 16. Die Abbildungsvorrichtung 16 umfasst die Strahlumlenkeinrichtung 18, einen Bildsensor 36 und ein einzeiliges Array 38 von nebeneinander angeordneten optischen Kanälen 42a-d. Jeder optische Kanal 42a-d kann eine Optik aufweisen, die ausgebildet ist, um Strahlengänge 22-1 bis 22-4 der Abbildungsvorrichtung 16 optisch zu beeinflussen. Die Optik kann kanalindividuell sein oder für Gruppen aus zwei oder mehr optischen Kanälen gemeinsame Komponenten aufweisen.

Der Bildsensor 36 kann Bildsensorbereiche 44a-d umfassen, wobei die Strahlengänge 22-1 bis 22-4 der optischen Kanäle 22a-d jeweils auf einen Bildsensorbereich 44a-d treffen können. Vereinfacht ausgedrückt kann jedem Bildsensorbereich 44a-d ein optischer Kanal 22a-d und/oder ein Strahlengang 22-1 bis 22-4 zugeordnet sein. Die Strahlumlenkeinrichtung 18 kann ausgebildet sein, um basierend auf voneinander verschiedenen Betriebszuständen der tragbaren Vorrichtung und/oder auf voneinander verschiedenen Stellungen der Strahlumlenkeinrichtung 18 die Strahlengänge 22-1 bis 22-4 in voneinander verschiedene Richtungen umzulenken und/oder unterschiedliche Wellenlängen umzulenken, wie es beispielsweise im Zusammenhang mit den Fig. 1, 2, 3a, 3b, 4a-hbeschrieben ist. Das bedeutet, dass die Abbildungsvorrichtung 16 als Multiaperturabbildungsvorrichtung 40 gebildet sein kann oder diese umfassen kann.

Die Bildsensorbereiche 44a-d können beispielsweise jeweils aus einem Chip gebildet sein, der ein entsprechendes Pixelarray umfasst, wobei die Bildsensorbereiche auf einem gemeinsamen Substrat bzw. einer gemeinsamen Platine montiert sein können. Alternativ wäre es natürlich auch möglich, dass die Bildsensorbereiche 44a-d jeweils aus einem Teil eines gemeinsamen Pixelarrays, das sich kontinuierlich über die Bildsensorbereiche 44a-d erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 44a-d ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 36 können diese beispielsweise auf einer oder mehreren Platinen montiert sein, wie z.B. alle gemeinsam oder gruppenweise oder dergleichen.

Das einzeilige Array 38 kann einen Träger 39 aufweisen, an dem Optiken 41a-d der optischen Kanäle angeordnet sind. Der Träger 39 kann von den für die Abbildung in den einzelnen optischen Kanälen genutzten optischen Strahlengängen 22-1 bis 22-4 passiert werden. Die optischen Kanäle der Multiaperturabbildungsvorrichtung können den Träger 39 zwischen der Strahlumlenkeinrichtung 18 und einem Bildsensor 36 durchqueren. Der Träger 39 kann eine Relativposition zwischen den Optiken 41a-d stabil halten. Der Träger 39 kann transparent gebildet sein und bspw. ein Glasmaterial und/oder ein Polymermaterial umfassen. Die Optiken 41a-d können an zumindest einer Oberfläche des Trägers 39 angeordnet sein. Dies ermöglicht eine geringe Abmessung des Trägers 39 und mithin des einzeiligen Arrays 38 entlang einer Richtung parallel zu dem Bildsensor 36 und senkrecht zu der Zeilenerstreckungsrichtung 56, da auf eine Einfassung der Optiken 41a-d in einem Umfangsbereich derselben verzichtet werden kann. Gemäß Ausführungsbeispielen ist der Träger 39 entlang der Richtung parallel zu einer Hauptseite des Bildsensors 36 und senkrecht zu der Zeilenstreckungsrichtung 56 nicht oder lediglich unwesentlich, d. h., höchstens 20 %, höchstens 10 % oder höchstens 5 %, größer ausgebildet, als eine entsprechende Abmessung der Optik 41a-d.

Die Strahlumlenkeinrichtung kann so ausgebildet sein, dass sie in der ersten Stellung und in der zweiten Stellung den Strahlengang 22-1 bis 22-4 jedes optischen Kanals 42a-d in eine voneinander verschiedene Richtung umlenkt. Das bedeutet, dass die umgelenkten Strahlengänge 22-1 bis 22-4 einen Winkel zueinander aufweisen können, wie es im Zusammenhang mit Fig. 6a beschrieben wird. Die optischen Kanäle 16a-d können in zumindest einer Zeile entlang einer Zeilenerstreckungsrichtung 56 angeordnet sein. Das Array 38 kann als mehrzeiliges Array umfassend zumindest zwei Zeilen oder als einzeiliges Array umfassend (genau) eine Zeile von optischen Kanälen gebildet sein. Die optischen Kanäle können von der Strahlumlenkeinrichtung 18 basierend auf einer eingestellten Blickrichtung hin zu veränderlichen Gesichtsfeldern gelenkt werden. Die optischen Kanäle können innerhalb einer Blickrichtung einen Winkel zueinander aufweisen, so dass die optischen Kanäle in höchsten teilweise überlappende Teilgesichtsfelder des Gesamtgesichtsfeldes gelenkt werden. Die unterschiedlichen Winkel der optischen Kanäle können basierend auf den Optiken der optischen Kanäle und/oder basierend auf einer voneinander verschiedenen Umlenkung der optischen Kanäle an der Strahlumlenkeinrichtung 18 erhalten werden.

Die Abbildungsvorrichtung 16 kann einen Aktor 48a umfassen, der bspw. als Teil eines optischen Bildstabilisators 46a ist und/oder zum Umschalten der Position oder Stellung der Strahlumlenkeinrichtung 18 verwendet werden kann. Der optische Bildstabilisator 46 kann ausgebildet sein, um eine optische Bildstabilisierung eines von dem Bildsensor 36 erfassten Bildes zu ermöglichen. Hierfür kann der Aktor 48a ausgebildet sein, um eine Rotationsbewegung 52 der Strahlumlenkeinrichtung 18 zu erzeugen. Die Rotationsbewegung 52 kann um eine Rotationsachse 54 erfolgen, wobei die Rotationsachse 54 der Strahlumlenkeinrichtung 18 in einem Mittenbereich der Strahlumlenkeinrichtung 18 oder abseits hiervon angeordnet sein kann. Die Rotationsbewegung 52 kann der Rotationsbewegung 28 bzw. der translatorischen Bewegung 26 zum Umschalten der Strahlumlenkeinrichtung zwischen einer ersten und einer zweiten Stellung oder Betriebszustand überlagerbar sein. Ist die Strahlumlenkeinrichtung 18 translatorisch bewegbar, so kann die translatorische Bewegung 26 parallel zu einer Zeilenerstreckungsrichtung 56 des einzeiligen Arrays 38 im Raum angeordnet sein. Die Zeilenerstreckungsrichtung 56 kann sich auf eine Richtung beziehen, entlang der die optischen Kanäle 42a-d nebeneinander angeordnet sind. Basierend auf der Rotationsbewegung 52 kann eine optische Bildstabilisierung entlang einer ersten Bildachse 58, ggf. senkrecht zu der Zeilenerstreckungsrichtung 56 erhalten werden.

Der optische Bildstabilisator 46 kann alternativ oder zusätzlich einen Aktor 48b umfassen, der ausgebildet ist, um das einzeilige Array 38 entlang der Zeilenerstreckungsrichtung 56 translatorisch zu bewegen. Basierend auf der translatorischen Bewegung des einzeiligen Arrays 38 entlang der Zeilenerstreckungsrichtung 56 kann eine optische Bildstabilisierung entlang einer zweiten Bildachse 62 ggf. parallel zu der Zeilenerstreckungsrichtung 56 bzw. parallel zu der Bewegungsrichtung des einzeiligen Arrays 38 erhalten werden. Die Aktoren 48a und 48b können beispielsweise als piezoelektrischer Aktor, pneumatischer Aktor, hydraulischer Aktor, Gleichstrommotor, Schrittmotor, thermischer Aktor, elektrostatischer Aktor, elektrostriktiver Aktor und/oder magnetostriktiver Aktor gebildet sein. Die Aktoren 48a und 48b können gleich oder voneinander verschieden gebildet sein. Alternativ kann auch ein Aktor angeordnet sein, der ausgebildet ist, um die Strahlumlenkeinrichtung 18 rotatorisch und das einzeilige Array 38 translatorisch zu bewegen. Beispielsweise kann die Rotationachse 54 parallel zu der Zeilenerstreckungsrichtung 56 sein. Die Rotationsbewegung 52 um die Rotationsachse 54 kann zu einem geringen Bauraumbedarf der Abbildungsvorrichtung 16 entlang einer Richtung parallel zu der Bildachse 58 führen, so dass die tragbare Vorrichtung, die im Inneren eines Gehäuses die Abbildungsvorrichtung 16 umfasst, ebenfalls eine geringe Abmessung aufweisen kann. Vereinfacht ausgedrückt, kann die tragbare Vorrichtung ein flaches Gehäuse aufweisen.

Die translatorische Bewegung 26 kann beispielsweise parallel oder im Wesentlichen parallel zu einer Erstreckung einer Hauptseite 13a und/oder 13b der Vorrichtung 10 ausführbar sein, so dass auf einen zusätzlichen Bauraum, der für ein Umschalten der Strahlumlenkeinrichtung zwischen Betriebszuständen erforderlich sein kann entlang der Zeilenerstreckungsrichtung 56 angeordnet werden kann und/oder auf eine Bereitstellung von Bauraum entlang einer Dickenrichtung der Vorrichtung verzichtet werden kann. Die Aktoren 48a und/oder 48b können entlang der Zeilenerstreckungsrichtung und/oder senkrecht hierzu parallel zu einer Erstreckungsrichtung von Hauptseiten des Gehäuses der Vorrichtung angeordnet sein. Vereinfacht kann dies so beschrieben werden, dass Aktoren zum Umschalten zwischen Betriebszuständen und/oder Aktoren des optischen Bildstabilisators neben, vor und hinter einer Erstreckung zwischen dem Bildsensor, dem einzeiligen Array 38 und der Strahlumlenkeinrichtung 18 angeordnet sein können, wobei auf eine Anordnung darüber und/oder darunter verzichtet wird, um eine Bauhöhe der Abbildungsvorrichtung 16 gering zu halten. Das bedeutet, das Aktoren zum Umschalten des Betriebszustandes und/oder des optischen Bildstabilisators in einer Ebene angeordnet sein können, in der der Bildsensor 36, das einzeilige Array 38 und die Strahlumlenkeinrichtung 18 angeordnet sind.

Gemäß weiteren Ausführungsbeispielen kann der Aktor 48b und/oder andere Aktoren ausgebildet sein, um einen Abstand zwischen dem Bildsensor 36 und dem einzeiligen Array 38 bzw. der Optiken der optischen Kanäle zu verändern. Hierfür kann bspw. der Aktor 48b ausgebildet sein, um das einzeilige Array 38 und/oder den Bildsensor 36 relativ zueinander entlang eines Strahlengangs der Strahlengänge 22-1 bis 22-4 bzw. senkrecht zur Zeilenerstreckungsrichtung 56 zu bewegen, um einen Fokus der Abbildung des Gesichtsfeldes zu verändern und/oder um eine Autofokusfunktion zu erhalten.

Die Abbildungsvorrichtung 16 kann eine Fokuseinrichtung aufweisen, die ausgebildet ist, um den Fokus der Abbildungsvorrichtung zu verändern. Die Fokuseinrichtung kann ausgebildet sein, um eine Relativbewegung zwischen dem einzeiligen Array 38 und dem Bildsensor 36 bereitzustellen. Die Fokuseinrichtung kann ausgebildet sein, um die Relativbewegung unter Ausführung einer zu der Relativbewegung simultanen Bewegung der Strahlumlenkeinrichtung 18 auszuführen. Bspw. kann der Aktor 48b oder ein weiterer Aktor ausgebildet sein, um einen Abstand zwischen dem einzeiligen Array 38 und der Strahlumlenkeinrichtung 18 zumindest im Wesentlichen konstant oder auch bei Nutzung keines zusätzlichen Aktors zumindest im Wesentlichen, ggf. exakt konstant zu halten, d. h., die Strahlumlenkeinrichtung 18 in einem Umfang zu bewegen, wie das einzeilige Array 38. Bei Kameras, die keine Strahlumlenkeinrichtung aufweisen, kann eine Implementierung einer Fokusfunktion zu einer erhöhten Abmessung (Dicke) der Vorrichtung führen.

Basierend auf der Strahlumlenkeinrichtung kann dies ohne eine zusätzliche Abmessung entlang einer Abmessung parallel zu einer Hauptseite des Bildsensors 36 und senkrecht zu der Zeilenerstreckungsrichtung 56 (bspw. eine Dicke) der Multiaperturabbildungsvorrichtung erfolgen, da ein die Bewegung ermöglichender Bauraum senkrecht hierzu angeordnet werden kann. Basierend auf einem konstanten Abstand zwischen einzeiligem Array 38 und der Strahlumlenkeinrichtung 18 kann eine Strahlumlenkung in einem eingestellten (ggf. optimalen) Zustand beibehalten werden. Vereinfacht ausgedrückt, kann die Abbildungsvorrichtung 16 eine Fokuseinrichtung zum Verändern eines Fokus aufweisen. Die Fokuseinrichtung kann ausgebildet sein, um eine Relativbewegung (Fokussierungsbewegung) zwischen zumindest einer Optik 41a-d der optischen Kanäle der Multiaperturabbildungsvorrichtung 16 und dem Bildsensor 36 bereitzustellen. Die Fokuseinrichtung kann einen Aktor zum Bereitstellen der Relativbewegung aufweisen, etwa den Aktor 48b und/oder 48a. Die Strahlumlenkeinrichtung 18 kann dabei durch entsprechende konstruktive Auslegung oder Nutzung ggf. unter Nutzung eines weiteren Aktors simultan zur Fokussierungsbewegung mitbewegt werden. Das bedeutet, dass ein Abstand zwischen dem einzeiligen Array 38 und der Strahlumlenkeinrichtung unverändert bleibt und/oder dass die Strahlumlenkeinrichtung 18 gleichzeitig oder zeitversetzt in einem gleichen oder vergleichbaren Umfang wie die Fokussierungsbewegung bewegt wird, so dass zumindest zu einem Zeitpunkt einer Aufnahme des Gesichtsfeldes durch die Multiaperturabbildungsvorrichtung unverändert verglichen mit einem Abstand vor einer Veränderung des Fokus ist.

Die Abbildungsvorrichtung 16 umfasst eine Steuereinrichtung 53, die ausgebildet ist, um Bildinformationen von dem Bildsensor 36 zu empfangen. Hierfür wird eine Abbildung des Gesamtgesichtsfeldes ausgewertet, die durch Umlenkung der Strahlengänge 22-1 bis 22-4 der optischen Kanäle 42a bis 42d mit dem ersten Strahlumlenkbereich ausgewertet und es wird eine korrespondierende, d. h., übereinstimmende Abbildung ausgewertet, die durch Umlenkung der Strahlengänge 22-1 bis 22-4 der optischen Kanäle 42a bis 42d mit dem zweiten Strahlumlenkbereich erhalten wird, wobei eine Reihenfolge der ersten und zweiten Abbildung beliebig ist.

Die Steuereinrichtung 53 kann zwei Gesamtbilder des erfassten Gesamtgesichtsfeldes erzeugen, etwa unter Verwendung von Verfahren zur Bildkombination (engl.: Stitching), wobei ein erstes Gesamtbild auf dem ersten Wellenlängenbereich und ein zweites Gesamtbild auf dem zweiten Wellenlängenbereich basiert.

Die Steuereinrichtung kann ausgebildet sein, um unter Verwendung der zweiten Aufnahme, etwa basierend auf einem für Menschen nicht sichtbaren Wellenlängenbereich, etwa einen Infrarotbereich, insbesondere einen nahen Infrarotbereich (NIR), eine Tiefenkarte für die erste Aufnahme zu bestimmen. Hierzu kann die Steuereinrichtung bspw. ausgebildet sein, um ein in dem zweiten Wellenlängenbereich sichtbares Muster auszuwerten. So kann bspw. ein vordefiniertes Muster, etwa ein Punktmuster im NIR-Wellenlängenbereich in Richtung des Gesamtgesichtsfeldes ausgesendet werden und eine Verzerrung des Musters kann in der zweiten Aufnahme oder Abbildung ausgewertet werden. Die Verzerrung kann mit Tiefeninformation korreliert sein. Die Steuereinrichtung 53 kann ausgebildet sein, um unter Auswertung der Tiefeninformation die Tiefenkarte bereitzustellen. Alternativ oder zusätzlich zu der räumlichen Information eines Musters kann auch eine zeitliche Information ausgewertet werden, etwa in Kenntnis einer zeitlichen Varianz des Musters.

Die Beleuchtungsquelle kann ausgebildet sein, um das zeitliche und/oder räumliche Beleuchtungsmuster mit einem dritten Wellenlängenbereich auszusenden, der den zweiten Wellenlängenbereich ganz oder teilweise umfasst, so dass der dritte Wellenlängenbereich zumindest teilweise dem zweiten Wellenlängenbereich entspricht. Dies umfasst, dass bereits eine Teilreflektion der Wellenlängen des ausgesendeten Musters eine hinreichende Quelle für den am Bildsensor ankommenden zweiten Wellenlängenbereich darstellen und Wellenlängenverschiebungen oder Teilreflektionen, etwa basierend auf Absorptionen, mit umfasst sind. Möglicherweise sind der zweite Wellenlängenbereich und der dritte Wellenlängenbereich auch deckungsgleich.

Wie es im Zusammenhang mit Fig. 1 beschrieben ist, können die umgelenkten Strahlengänge der optischen Kanäle durch einen transparenten Bereich eines Gehäuses der Vorrichtung verlaufen, wobei in dem transparenten Bereich eine Blende angeordnet sein kann. In zumindest einem Betriebszustand der Vorrichtung kann eine in einem Bereich des transparenten Bereichs angeordnete Blende diesen optisch zumindest teilweise so verschließen, dass die Blende für zwei, eine Vielzahl oder alle optische Kanäle wirksam ist, d. h., den zumindest teilweise geschlossenen Zustand aufweist. In einem anderen Betriebszustand kann die Blende für die zwei, die Vielzahl oder für alle optischen Kanäle einen geöffneten Zustand aufweisen. Das bedeutet, die Blenden können für zumindest zwei optische Kanäle der Multiaperturabbildungsvorrichtung wirksam sein. In dem ersten Betriebszustand kann die Blende 24b den transparenten Bereich 14b optisch zumindest teilweise für die zwei, die Vielzahl oder alle optischen Kanäle verschließen. In dem zweiten Betriebszustand kann die Blende 24a den transparenten Bereich 14a optisch zumindest teilweise für die zwei, die Vielzahl oder alle optischen Kanäle verschließen.

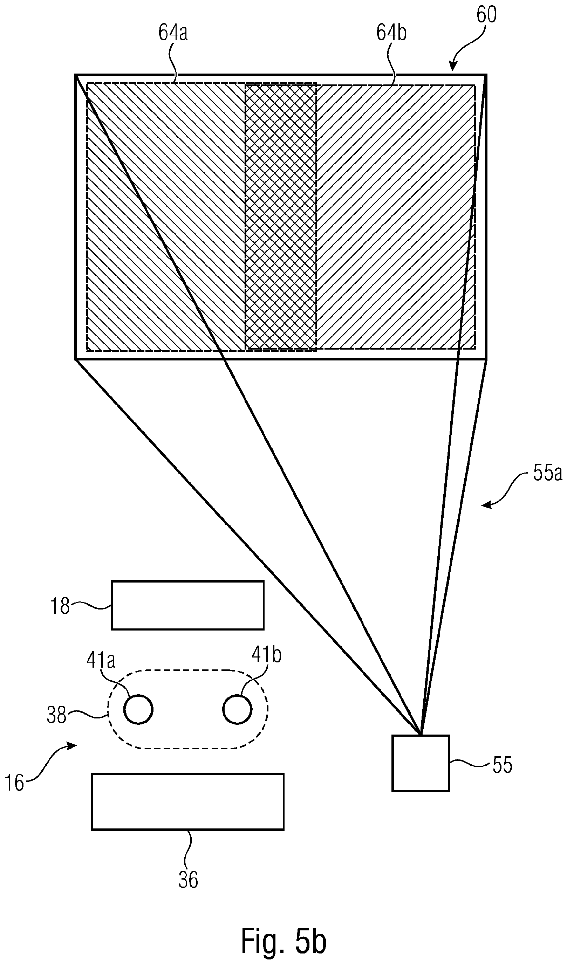

Fig. 5b zeigt eine schematische perspektivische Ansicht der Multiaperturabbildungsvorrichtung 16 gemäß einem Ausführungsbeispiel, bei dem das Array 38 bspw. zwei optische Kanäle aufweist, die Optiken 41a-b umfassen, wobei eine beliebige höhere Anzahl möglich ist, etwa drei, vier, fünf oder mehr. Jeweils einer der optischen Kanäle 41a und 41b ist ausgebildet, um ein Teilgesichtsfeld 64a oder 64b eines Gesamtgesichtsfeldes 60 zu erfassen. Die Teilgesichtsfelder 64a und 64b überlappen miteinander und bilden gemeinsam das Gesamtgesichtsfeld 60.

Die Multiaperturabbildungsvorrichtung 16 umfasst eine Beleuchtungseinrichtung 55, die ausgebildet ist, um ein zeitliches oder räumliches Beleuchtungsmuster 55a auszusenden, insbesondere in Richtung des Gesamtgesichtsfeldes 60. Das Beleuchtungsmuster 55a kann einen dritten Wellenlängenbereich umfassen, der zumindest teilweise mit dem zweiten Wellenlängenbereich überlappt oder diesem entspricht, so dass einem Umlenken der Strahlengänge unter Verwendung des zweiten Strahlumlenkbereichs das in dem Gesamtgesichtsfeld verzerrte Muster auf den Bildsensor trifft und von der Steuereinrichtung 53 ausgewertet werden kann.

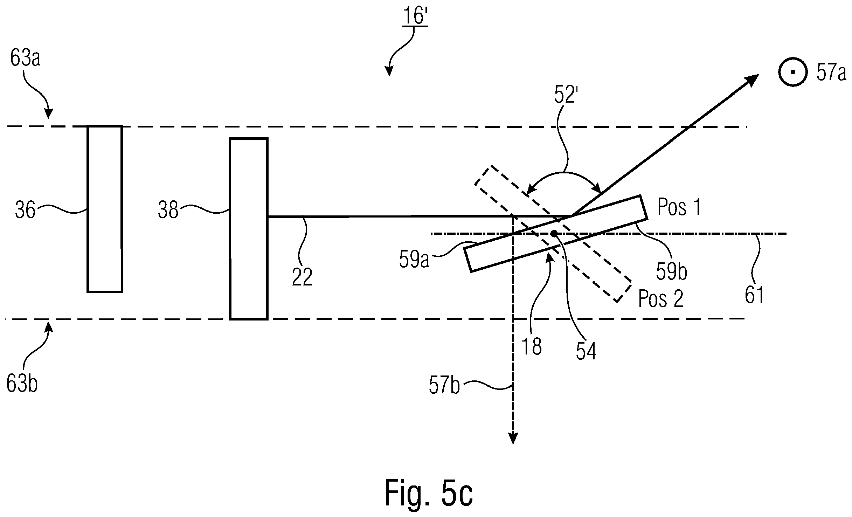

Fig. 5c zeigt eine schematische Seitenschnittansicht einer modifizierten Abbildungsvorrichtung 16', bei der die Strahlumlenkeinrichtung 18 zwischen einer ersten Position Pos1 des ersten Betriebszustands und einer zweiten Position Pos2 des zweiten Betriebszustands basierend auf einer rotatorischen Bewegung 52' um die Rotationsachse 54 bewegbar ist. In dem ersten Betriebszustand kann die Abbildungsvorrichtung 16' eine erste Blickrichtung 57a aufweisen. In dem zweiten Betriebszustand kann die Abbildungsvorrichtung 16' eine erste Blickrichtung 57b aufweisen. Hauptseiten 59a und 59b der Strahlumlenkeinrichtung 18 können reflektiv als Spiegel und/oder als Facettenelemente gebildet sein. Während eines Umschaltens zwischen den Betriebszuständen kann die Strahlumlenkeinrichtung 18 zwischen einer Mittenposition 61 umschaltbar sein, so dass ein Abstand zwischen parallelen Ebenen 63a und 63b, der eine minimale Abmessung der Abbildungsvorrichtung 16' entlang einer Normalenrichtung der Ebenen 63a und 63b beschreiben können durch den Abmessungen des Bildsensors 36, des Arrays 38 nicht jedoch von einer Bewegung der Strahlumlenkeinrichtung 18 beeinflusst ist. Die Rotationsbewegung 52 kann mit der Rotationsbewegung 28 überlagerbar sein. Vereinfacht ausgedrückt kann eine Überlagerung von Umschalten und optischer Bildstabilisierung implementiert sein.

Aktoren der Multiaperturabbildungsvorrichtung können so angeordnet sein, dass sie zumindest teilweise zwischen zwei Ebenen 63a und 63b angeordnet ist, die durch Seiten eines Quaders aufgespannt werden. Die Seiten des Quaders können parallel zueinander sowie parallel zu der Zeilenerstreckungsrichtung des Arrays und eines Teils des Strahlengangs der optischen Kanäle zwischen dem Bildsensor und der Strahlumlenkeinrichtung parallel ausgerichtet sein. Das Volumen des Quaders ist minimal und umfasst dennoch den Bildsensor, das Array und die Strahlumlenkeinrichtung sowie deren betriebsbedingte Bewegungen.

Eine Dickenrichtung der Multiaperturabbildungsvorrichtung kann normal zu den Ebenen 63a und/oder 63b angeordnet sein. Die Aktoren können eine Abmessung oder Ausdehnung parallel zu der Dickenrichtung aufweisen. Ein Anteil von höchstens 50 %, höchstens 30 % oder höchstens 10 % der Abmessung kann ausgehend von einem Bereich zwischen den Ebenen 63a und 63b über die Ebene 63a und/oder 63b hinausragen oder aus dem Bereich herausragen Die Aktoren ragen somit bspw. höchstens unwesentlich über die Ebene 63a und/oder 63b hinaus. Gemäß Ausführungsbeispielen ragen die Aktoren nicht über die Ebenen 63a und/oder 63b hinaus. Vorteilhaft daran ist, dass eine Ausdehnung der Multiaperturabbildungsvorrichtung entlang der Dickenrichtung durch die Aktoren nicht vergrößert wird.

Ein Volumen der Multiaperturabbildungsvorrichtung kann einen geringen oder minimalen Bauraum zwischen den Ebenen 63a und 63b aufweisen. Entlang der lateralen Seiten oder Erstreckungsrichtungen der Ebenen 63a und/oder 63b kann ein Bauraum der Multiaperturabbildungsvorrichtung groß oder beliebig groß sein. Das Volumen des virtuellen Quaders ist bspw. von einer Anordnung des Bildsensors 36, des Arrays 38 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 63a und 63b zueinander gering oder minimal wird. Gegenüber anderen Anordnungen der Komponenten kann das Volumen und/oder der Abstand anderer Seiten des virtuellen Quaders vergrößert sein.

Fig. 6a zeigt eine schematische Ansicht eines Gesamtgesichtsfeldes 60, das vier einander überlappende Teilgesichtsfelder 64a-d umfasst. Die Teilgesichtsfelder 64a-d sind bspw. entlang zweier Richtungen H und V im Objektbereich angeordnet, die bspw. aber nicht einschränkend eine horizontale Richtung und eine vertikale Richtung bezeichnen können. Jegliche andere Richtungsanordnung ist möglich. Bezugnehmend auf Fig. 5a kann beispielsweise der Strahlengang 22-1 hin zu dem Teilgesichtsfeld 64a, der Strahlengang 22-2 hin zu dem Teilgesichtsfeld 64b, der Strahlengang 22-3 hin zu dem Teilgesichtsfeld 64c und/oder der Strahlengang 22-4 hin zu dem Teilgesichtsfeld 64d gelenkt werden. Obwohl eine Zuordnung zwischen Strahlengängen 22-1 bis 22-4 zu den Teilgesichtsfeldern 64a-d beliebig ist, wird deutlich, dass ausgehend von der Strahlumlenkeinrichtung 18 die Strahlengänge 22-1 bis 22-4 in voneinander verschiedene Richtungen gelenkt werden. Obwohl das Gesamtgesichtsfeld 60 im beschriebenen Ausführungsbeispiel mittels vier optischer Kanäle erfasst wird, die die Teilgesichtsfelder 64a-d erfassen, kann das Gesamtgesichtsfeld 60 auch durch eine beliebige andere Anzahl von Teilgesichtsfeldern größer 1 erfasst werden, also zumindest 2, zumindest 3, zumindest fünf, zumindest sieben oder mehr.

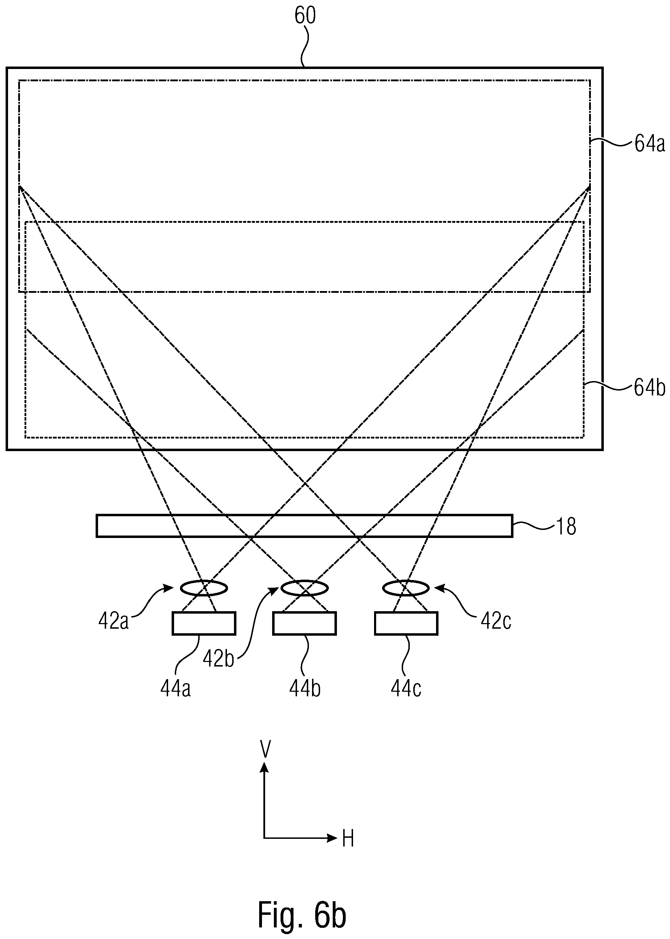

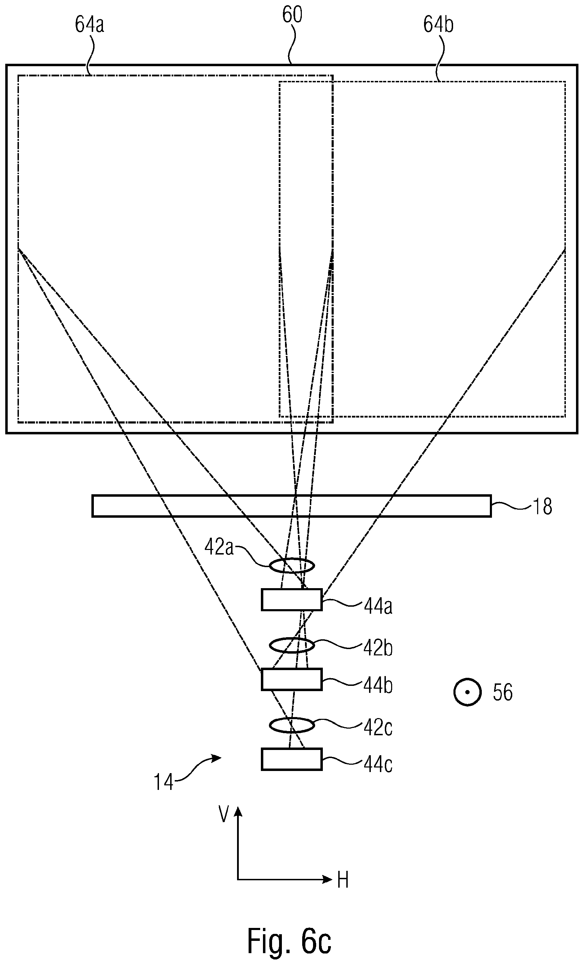

Fig. 6b zeigt eine zur Fig. 6a veränderte, ebenfalls mögliche Aufteilung des Gesamtgesichtsfeldes 60, das bspw. durch lediglich zwei Teilgesichtsfelder 64a und 64b erfasst wird. Die Teilgesichtsfelder 64a und 64b können bspw. entlang der Richtung V oder, wie es in Fig. 6c dargestellt ist, entlang der Richtung H angeordnet sein und überlappen miteinander, um eine effektive Bildzusammenfügung zu ermöglichen. Die Teilgesichtsfelder sind lediglich zur besseren Unterscheidbarkeit mit unterschiedlicher Größe dargestellt, auch wenn dies eine entsprechende optionale Implementierung dergestalt bedeuten kann.

Eine Zuordnung der Teilgesichtsfelder 64a und 64b zu den optischen Kanälen sowie eine relative Ausrichtung des Arrays 14 kann prinzipiell beliebig sein. Eine Richtung entlang der die Teilgesichtsfelder angeordnet sind, etwa V in Fig. 6b oder H in Fig. 6c kann beliebig zur Zeilenerstreckungsrichtung 56 des Arrays 14 angeordnet sein. Vorteilhaft ist eine Anordnung dergestalt, dass die Zeilenerstreckungsrichtung 56 und die Richtung entlang der die Teilgesichtsfelder angeordnet sind zumindest innerhalb eines Toleranzbereichs von ± 25°, ± 15° oder ± 5° senkrecht zu einander angeordnet sind, bevorzugt senkrecht zueinander. So ist in Fig. 6b die Zeilenerstreckungsrichtung 56 bspw. parallel zu der senkrecht zu V angeordneten Richtung H angeordnet. In Fig. 6c ist die Zeilenerstreckungsrichtung 56 in Übereinstimmung mit der gegenüber Fig. 6b gedrehten Anordnung der Teilgesichtsfelder 64a und 64b ebenfalls gedreht, so dass die Zeilenerstreckungsrichtung 56 parallel zu V ist bzw. innerhalb des bezeichneten Toleranzbereichs senkrecht zu H. Die optische Kanäle 42a-c und die Bildsensorbereiche 44a-c könnten somit in der Darstellungsebene der Fig. 6c überlappen oder innerhalb des Toleranzbereichs deckungsgleich sein und sind der Darstellung wegen zueinander versetzt dargestellt. Multiaperturabbildungsvorrichtung in Übereinstimmung mit Ausführungsbeispielen können ausgebildet sein, um das Gesamtgesichtsfeld 60 durch zumindest zwei Teilgesichtsfelder 64a-b zu erfassen. Zumindest eines der Teilgesichtsfelder kann anders als einkanalig erfasste Teilgesichtsfelder, etwa das Teilgesichtsfeld 64b oder die Teilgesichtsfelder gemäß den Erläuterungen zur Fig. 6a, durch zumindest einen ersten optischen Kanal 42a und einen zweiten optischen Kanal 42c erfasst werden. Bspw. kann das Gesamtgesichtsfeld in exakt zwei Teilgesichtsfelder 64a und 64b segmentiert werden. Exakt eines der Teilgesichtsfelder, etwa das Teilgesichtsfeld 64a, kann durch zwei optische Kanäle 42a und 42c erfasst werden. Andere Teilgesichtsfelder können einkanalig erfasst werden.

Multiaperturabbildungsvorrichtungen gemäß Ausführungsbeispielen sehen hierzu die Verwendung von genau zwei optischen Kanälen vor, um die beiden Teilgesichtsfelder 64a und 64b in dem jeweiligen Wellenlängenbereich oder in beiden Wellenlängenbereichen abzubilden. Es besteht die Möglichkeit, dass es in dem Überlappbereich bei einer derartigen Konfiguration zu Verdeckungen bzw. Okklusionseffekten kommt, das bedeutet, anstelle einer zweifachen Erfassung eines hinter einem Objekt angeordneten Gesichtsfeldes wird lediglich ein Blickwinkel erfasst. Zur Verringerung oder Vermeidung solcher Effekte sehen manche Ausführungsbeispiele vor, zumindest eines der Teilgesichtsfelder 64a und/oder 64b mit einem weiteren optischen Kanal 42a-c zu erfassen, so dass zumindest dieser Kanal 42a-c mehrfach, insbesondere zweifach erfasst wird. Eine andere Anzahl doppelt aufgenommener Teilgesichtsfelder und/oder eine andere Anzahl von Teilgesichtsfeldern
und/oder eine andere Anzahl von optischen Kanälen ist ebenfalls möglich.

Wie es anhand der Fig. 6b und Fig. 6c gezeigt ist, können optische Kanäle 42a und 42c und/oder Bildsensorbereiche 44a und 44c zur mehrfachen Erfassung eines Teilgesichtsfeldes 64 symmetrisch um einen optischen Kanal 42b zur Erfassung des anderen Teilgesichtsfeldes angeordnet sein, durch zumindest einen auf ein anderes Teilgesichtsfeld gerichteten optischen Kanal 42b voneinander im Array 14 beabstandet sein und/oder einen vergrößerten oder innerhalb des Arrays maximalen Abstand zu einander aufweisen, um ein gewisses Maß an Disparität zu ermöglichen.

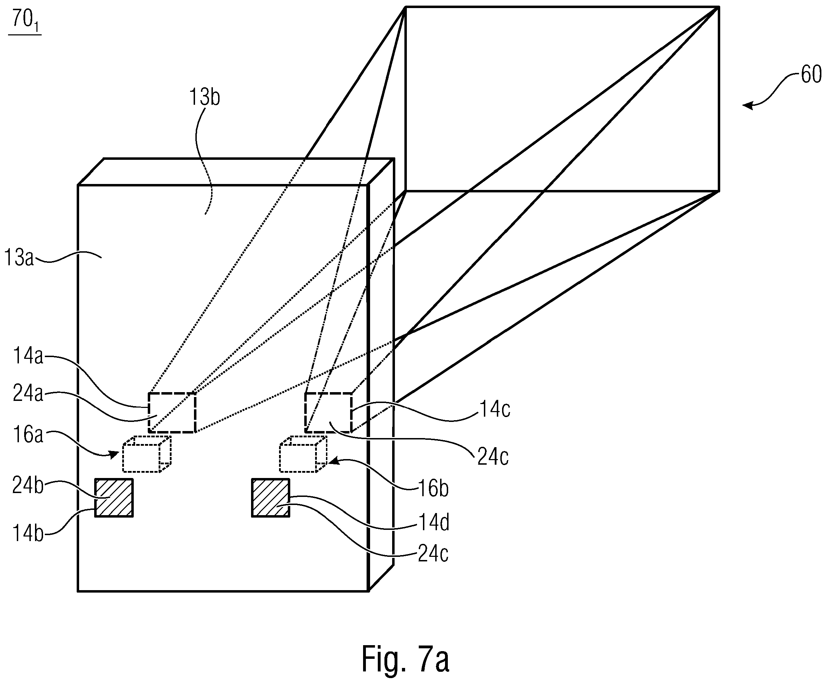

Fig. 7a zeigt eine schematische perspektivische Ansicht einer Vorrichtung 70₁, die einer erste Multiaperturabbildungsvorrichtung 16a und eine zweite Multiaperturabbildungsvorrichtung 16b umfasst, und ausgebildet ist um das Gesamtgesichtsfeld 60 stereoskopisch mit den Multiaperturabbildungsvorrichtungen zu erfassen. Das Gesamtgesichtsfeld 60 ist bspw. an einer der Hauptseite 13a abgewandten Hauptseite 13b angeordnet. Beispielsweise können die Multiaperturabbildungsvorrichtungen 16a und 16b das Gesamtgesichtsfeld 60 durch transparente Bereiche 14a bzw. 14c erfassen, wobei in der Hauptseite 13b angeordnete Blenden 24a und 24c zumindest teilweise transparent sind. In der Hauptseite 13a angeordnete Blenden 24b und 24d können transparenten Bereiche 14b bzw. 14d zumindest teilweise optisch verschließen, so dass ein Umfang von Falschlicht aus einer der Hauptseite 13a zugewandten Seite, das die Aufnahmen der Multiaperturabbildungsvorrichtungen 16a und/oder 16b verfälschen kann, zumindest reduziert ist. Obwohl die Multiaperturabbildungsvorrichtungen 16a und 16b räumlich voneinander beabstandet angeordnet dargestellt sind, können die Multiaperturabbildungsvorrichtungen 16a und 16b auch räumlich benachbart oder kombiniert angeordnet sein. Bspw. können die einzeiligen Arrays der Abbildungsvorrichtungen 16a und 16b nebeneinander oder parallel zu einander angeordnet sein. Die einzeiligen Arrays können Zeilen zueinander bilden, wobei jede Multiaperturabbildungsvorrichtung 16a und 16b ein einzeiliges Array aufweist. Die Abbildungsvorrichtungen 16a und 16b können eine gemeinsame Strahlumlenkeinrichtung und/oder einen gemeinsamen Träger 39 und/oder ein gemeinsamen Bildsensor 36 aufweisen.

Die transparenten Bereiche 14a-d können zusätzlich mit einer schaltbaren Blende 24a-d ausgestattet sein, die den optischen Aufbau für den Fall der Nicht-Benutzung abdeckt. Die Blende 24a-d kann ein mechanisch bewegtes Teil umfassen. Die Bewegung des mechanisch bewegten Teils kann unter Nutzung eines Aktors erfolgen, wie es beispielsweise für die Aktoren 48a und 48b beschrieben ist. Die Blende kann alternativ oder zusätzlich elektrisch steuerbar sein und eine elektrochrome Schicht oder eine elektrochrome Schichtfolge umfassen.

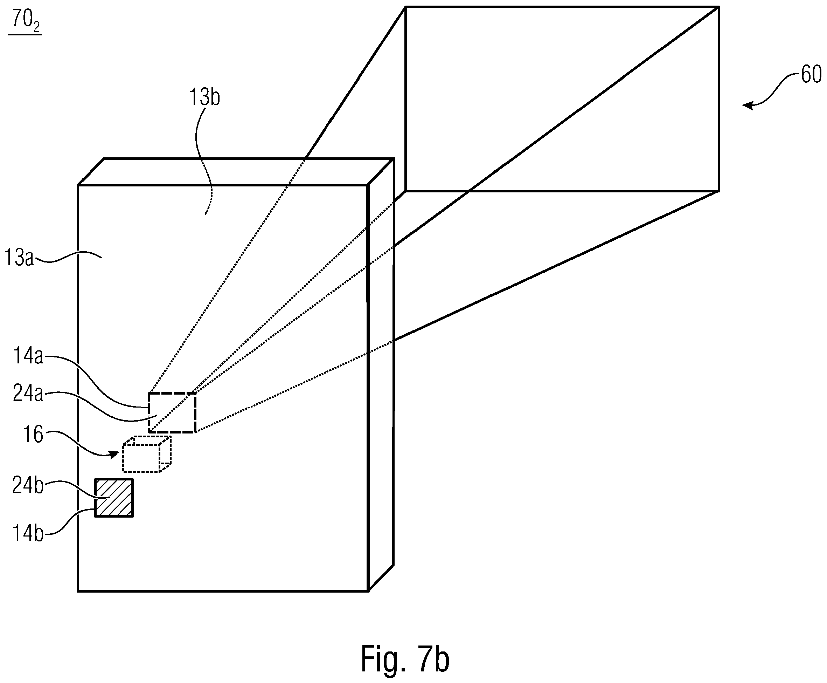

Gemäß einer in Fig. 7b bevorzugten Ausführungsform ist eine Vorrichtung 70₂ ähnlich ausgebildet wie die Vorrichtung 70₁, jedoch so ausgestaltet, dass die Tiefeninformation anstelle einer stereoskopen Aufnahme aus der Aufnahme in einem der Wellenlängenbereiche erstellt, bspw. über die Auswertung einer Musterverzerrung in einem nicht sichtbaren Wellenlängenbereich. Gemäß dieser bevorzugten Ausführungsform ist die Vorrichtung 70 bspw. mit lediglich einer einzelnen Abbildungsvorrichtung 16 ausgestaltet und konfiguriert, um das Gesamtgesichtsfeld aus einer Perspektive, nämlich der der Abbildungsvorrichtung 16, aufzunehmen und keine stereoskope Aufnahme des Gesamtgesichtsfeldes zu erfassen.

Die Vorrichtung 70 kann auch gemäß der bevorzugten Ausgestaltung ausgebildet sein, um eine Tiefenkarte des Gesamtgesichtsfeldes bereitzustellen oder zu erzeugen, etwa indem eine Musterverzerrung in einem der erfassten Wellenlängenbereiche ausgewertet wird, bspw. durch die Steuereinrichtung 53 oder eine hierfür eingerichtete Berechnungseinrichtung der Vorrichtung 70 oder der Abbildungsvorrichtung 16.

Die Vorrichtung 70 kann unter Verzicht auf eine zusätzliche, die Abbildungsvorrichtung 16 ergänzende oder erweiternde Infrarotkamera implementiert sein, da eine derartige Funktionalität bereits in der Abbildungsvorrichtung 16 umgesetzt ist, ggf. unter Einbeziehung der Beleuchtungseinrichtung 55.

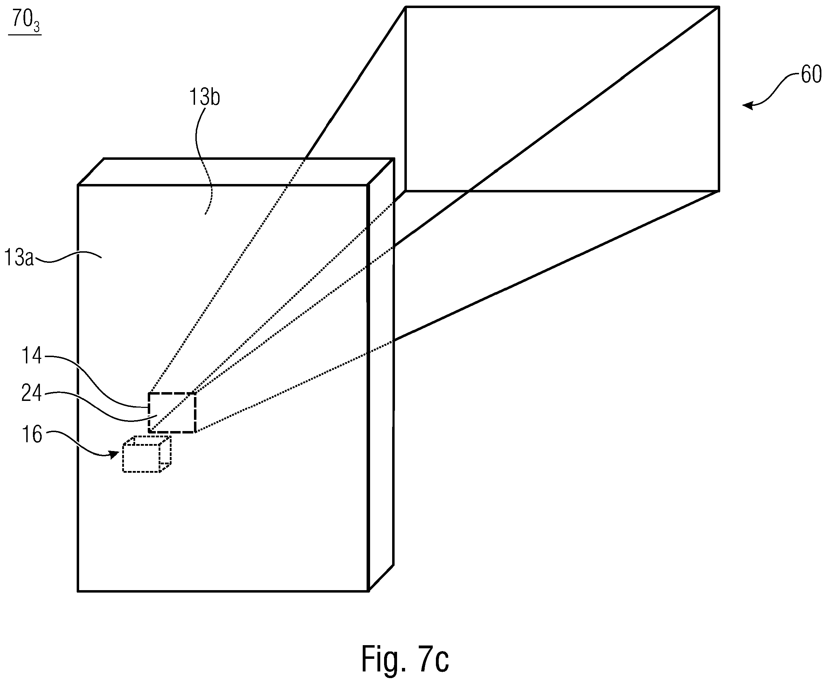

Gemäß einer in Fig. 7c dargestellten anderen bevorzugten Ausgestaltung ist die Abbildungsvorrichtung 16 einer Vorrichtung 70₃ ausgebildet, um gegenüber den Vorrichtungen 70₁ und 70₂ nur eine Blickrichtung aufzuweisen, so dass auf eine Anordnung eines entsprechenden Sichtfensters in andere Richtungen sowie der ohnehin optionalen Blenden verzichtet werden kann.

Durch die Auswertung der beiden Wellenlängenbereiche können auch die Vorrichtungen 70₂ und 70₃ ausgebildet sein, um eine Tiefenkarte des Gesamtgesichtsfeldes zu erstellen.

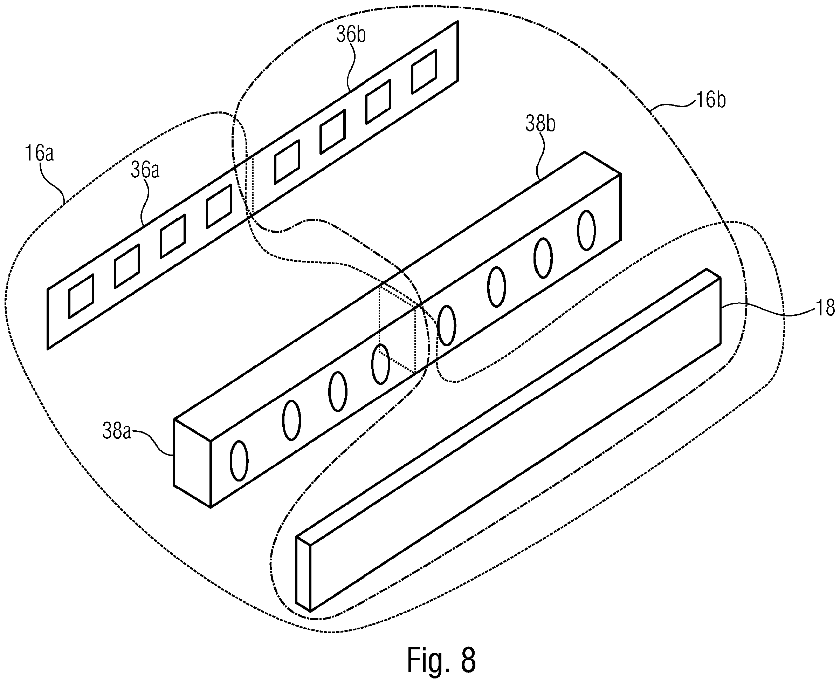

Fig. 8 zeigt einen schematischen Aufbau umfassend eine erste Multiaperturabbildungsvorrichtung 16a und eine zweite Multiaperturabbildungsvorrichtung 16b, wie er bspw. in dem Abbildungssystem 70₁ angeordnet sein kann. Die Multiaperturabbildungsvorrichtungen 16a und 16b können ganz oder teilweise als gemeinsame Multiaperturabbildungsvorrichtung gebildet sein. Die einzeiligen Arrays 38a und 38b bilden eine gemeinsame Zeile. Die Bildsensoren 36a und 36b können auf einem gemeinsamen Substrat bzw. auf einem gemeinsamen Schaltungsträger wie einer gemeinsamen Platine oder einem gemeinsamen Flexboard montiert sein. Alternativ können die Bildsensoren 36a und 36b auch voneinander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen einzeiligen Array und/oder einer gemeinsamen Strahlumlenkeinrichtung ist, dass eine Bewegung einer jeweiligen Komponente mit einer großen Präzision durch ansteuern einer geringen Menge von Aktoren erhalten werden kann und eine Synchronisierung zwischen Aktoren reduziert oder vermieden werden kann. Ferner kann eine hohe thermische Stabilität erhalten werden. Alternativ oder zusätzlich können auch weitere Multiaperturabbildungsvorrichtungen ein gemeinsames Array, einen gemeinsamen Bildsensor und/oder eine gemeinsame Strahlumlenkeinrichtung aufweisen. Durch Anordnen zumindest einer weiteren Gruppe abbildender optischer Kanäle, wobei eine beliebige Anzahl derselben implementierbar ist kann die Multiaperturabbildungsvorrichtung ausgebildet sein, um das Gesamtgesichtsfeld zumindest stereoskop zu erfassen.

Es wurde bereits weiter oben darauf hingewiesen, dass die Strahlengänge bzw. optischen Achsen ausgehend von der Strahlumlenkeinrichtung in voneinander verschiedene Richtungen gelenkt werden können. Dies kann erhalten werden, indem die Strahlengänge während einer Umlenkung an der Strahlumlenkeinrichtung und/oder durch die Optiken abweichend von einer Parallelität zueinander gelenkt werden. Die Strahlengänge bzw. optischen Achsen können von einer Parallelität vor bzw. ohne Strahlumlenkung abweichend sein. Dieser Umstand wird im Folgenden damit umschrieben, dass die Kanäle mit einer Art Vorab-Divergenz versehen sein können. Mit dieser Vorab-Divergenz der optischen Achsen wäre es möglich, dass sich beispielsweise nicht alle Facettenneigungen von Facetten der Strahlumlenkeinrichtung untereinander unterscheiden, sondern dass manche Gruppen von Kanälen beispielsweise die Facetten mit gleicher Neigung besitzen oder auf diese gelenkt werden. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch einen lateralen Versatz zwischen optischen Zentren der Optiken der optischen Kanäle und Bildsensorbereichen der Kanäle erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d.h. es sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden. Vereinfachend können die Optiken eine (Vorab-)Divergenz der Strahlengänge entlang einer ersten (Bild-)Richtung und die Strahlumlenkeinrichtung eine Divergenz der Strahlengänge entlang einer zweiten (Bild-)Richtung ermöglichen.

Die erwähnte möglicherweise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angerordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angerordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz verwehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein reiner In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht. So können bspw. jeweils benachbarte optische Kanäle in der gemeinsamen Ebene verlaufende, jeweils gegeneinander schielende, also mit einer Vorab-Divergenz versehene, optische Achsen aufweisen. Eine Facette kann bezüglich einer Gruppe von optischen Kanälen angeordnet, lediglich in einer Richtung geneigt und parallel zur Zeilenerstreckungsrichtung sein.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafterweise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecke, sondern lediglich zu Stereoskopiezwecken eine Ausführung, bei denen eine Gruppe von unmittelbar benachbarten Kanälen in Zeilenerstreckungsrichtung mit ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken.

Obige Ausführungsbeispiele lassen sich also in Form einer Multiaperturabbildungsvorrichtung und/oder einer eine derartige Multiaperturabbildungsvorrichtung umfassenden Vorrichtung implementieren, und zwar mit einzeiliger Kanalanordnung, wobei jeder Kanal ein Teilgesichtsfeld eines Gesamtgesichtsfeld überträgt und sich die Teilgesichtsfelder teilweise überlappen. Ein Aufbau mit mehreren solcher Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkvorrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb kann so ausgeführt sein, dass das Strahlumlenkelement synchron mit den Optiken bewegt wird, oder ruhend ist.

Prinzipiell können beliebig viele Teilmodule umfassend Bildsensor(en), Abbildungsoptik(en) und Spiegel-Array(s) angeordnet werden. Teilmodule können auch als ein System aufgebaut sein. Die Teilmodule oder Systeme können in einem Gehäuse, wie einem Smartphone verbaut sein. Die Systeme können in einer oder mehreren Zeilen und/oder Reihen und an einer beliebigen Stelle angeordnet sein. Beispielsweise können zwei Abbildungsvorrichtungen 16 in dem Gehäuse 12 angeordnet sein, um eine stereoskopische Erfassung eines Gesichtsfeldes zu ermöglichen.

Gemäß weiteren Ausführungsbeispielen umfasst die Vorrichtung 70 weitere Multiaperturabbildungsvorrichtungen 16, so dass das Gesamtgesichtsfeld 60 mit mehr als zwei Multiaperturabbildungsvorrichtungen abtastbar ist. Dies ermöglicht eine Anzahl von sich teilweise überlappenden Kanälen, die infolge ihrer kanalweise angepassten Blickrichtungen das Gesamtfeld aufnehmen. Für eine stereoskopische oder eine höhere Ordnung aufweisende Erfassung des Gesamtgesichtsfeldes kann mindestens eine weitere Anordnung von Kanälen gemäß hierin beschriebener Ausführungsbeispiele und/oder der beschriebenen Anordnung von Kanälen angeordnet sein, die als genau eine Zeile oder als separate Module ausgeprägt sein können. Das bedeutet, dass das einzeilige Array mehrzeilig mit einer weiteren Zeile angeordnet sein kann, wobei die weitere Zeile von optischen Kanälen einer weiteren Multiaperturabbildungsvorrichtung zugeordnet werden kann. Die optischen Kanäle der weiteren Zeile können ebenfalls jeweils überlappende Teilbereiche aufnehmen und zusammen das Gesamtgesichtsfeld abdecken. Dies ermöglicht den Erhalt eines Stereo-, Trio-, Quattro-, usw. Aufbaus von Arraykameras, die aus Kanälen bestehen, die teilweise überlappen und innerhalb ihrer Teilgruppierung das Gesamtgesichtsfeld abdecken.

In anderen Worten können Multiaperturkameras mit linearer Kanalanordnung mehrere optische Kanäle umfassen, die nebeneinander angeordnet sind und jeweils Teile des Gesamtgesichtsfeldes übertragen. Gemäß Ausführungsbeispielen können vorteilhafterweise ein Spiegel (Strahlumlenkeinrichtung) vor den Abbildungslinsen angeordnet sein, der zur Strahlumlenkung genutzt werden kann und zur Reduzierung der Bauhöhe der Vorrichtung beitragen kann. In Kombination mit einem kanalweise angepassten Spiegel, wie etwa Facettenspiegel, wobei die Facetten plan oder beliebig gekrümmt oder mit einer Freiformfläche versehen sein können, kann es vorteilhaft sein, die Abbildungsoptiken der Kanäle im Wesentlichen identisch aufzubauen, wohingegen die Blickrichtungen der Kanäle durch die einzelnen Facetten des Spiegelarrays beeinflusst oder vorgegeben sind. In Kombination mit einem planen (eben ausgebildeten) Spiegel können die Abbildungsoptiken der Kanäle unterschiedlich ausgebildet oder ausgeprägt sein, so dass sich unterschiedliche Blickrichtungen ergeben. Der Ablenkspiegel (Strahlumlenkvorrichtung) kann drehbar gelagert sein, wobei die Drehachse senkrecht zu den optischen Kanälen, d.h. parallel zu der Zeilenerstreckungsrichtung, der Kanäle verlaufen kann. Der Ablenkspiegel kann beidseitig reflektiv sein, wobei metallische oder dielektrische Schichten oder Schichtfolgen angeordnet sein können, um eine Reflektivität zu erhalten. Eine Drehung oder translatorische Verschiebung des Spiegels kann analog oder bistabil oder mehrfach stabil erfolgen. Als stabil kann verstanden werden, wenn zur Bewegung entlang einer vorhergesehenen Richtung eine Kraft aufzuwenden ist, wobei ein Unterschreiten der Kraft zu einem verharren oder einer Rückbewegung der Strahlumlenkeinrichtung führen kann.

Die analoge Drehung (Rotationsbewegung 52) kann für eine eindimensionale Anpassung der Bildlage genutzt werden, was als optische Bildstabilisierung verstanden werden kann. Beispielsweise kann hierbei eine Bewegung um nur wenige Grad ausreichend sein, beispielsweise ≤ 15°, ≤ 10° oder ≤ 1°. Die bistabile oder mehrfach stabile Drehung des Spiegels kann für das Umschalten der Blickrichtung der Kamera genutzt werden. So kann beispielsweise zwischen den Blickrichtungen vor, neben und hinter dem Display umgeschaltet werden. Analoge und bistabile/mehrfach stabile Bewegungen oder Positionen können kombinierbar, d.h. überlagerbar sein. Beispielsweise können durch hierin beschriebene Ausführungsbeispiele Lösungen in tragbaren Vorrichtungen, wie etwa Smartphones, die zwei Kameras mit voneinander verschiedener Blickrichtung nach vorne und nach hinten nutzen, durch einen Aufbau ersetzt werden, der lediglich eine Abbildungsvorrichtung umfasst. Der Aufbau kann sich in Abgrenzungen zu bekannten Lösungen beispielsweise dadurch auszeichnen, dass das Sichtfenster im Gehäuse für die Kameras mit Blickrichtung nach vorne und nach hinten an derselben Position, d.h. gegenüberliegend in oberer oder unterer Gehäuseabdeckung angeordnet ist. Bereiche dieser Gehäuseabdeckungen, die für den Strahldurchgang angeordnet sind, können transparent sein und können für den Fall der Nutzung sichtbaren Lichts aus Glas und/oder Polymeren bestehen oder diese umfassen.

Obwohl vorangegangen beschriebene Ausführungsbeispiele so beschrieben sind, dass die Vorrichtung einen ersten und einen zweiten Betriebszustand aufweist, können gemäß weiteren Ausführungsbeispielen weitere Betriebszustände zur Erfassung weiterer, d.h. zumindest eines dritten Gesichtsfeldes, angeordnet sein.

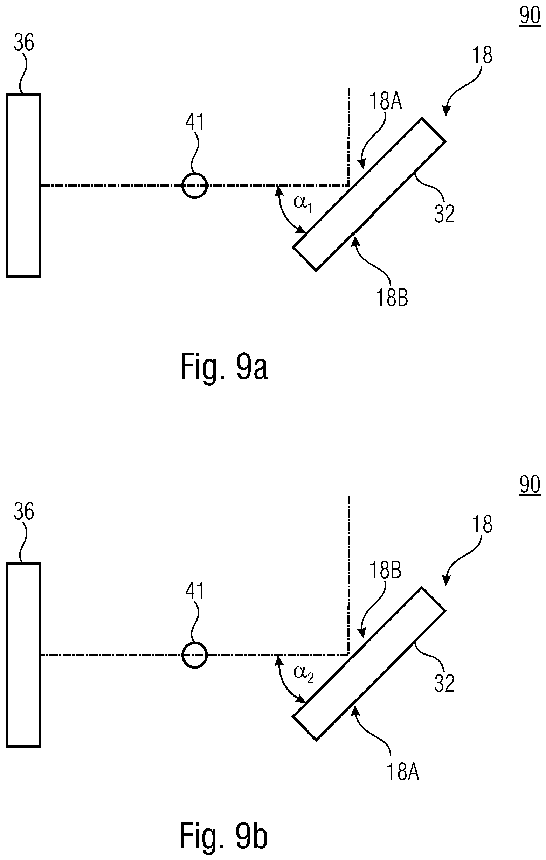

Nachfolgend werden anhand der Fig. 9a-d besonders vorteilhafte Ausgestaltungen von Multiaperturabbildungsvorrichtungen beschrieben, die für sich genommen oder als Teil einer erfindungsgemäßen Vorrichtung, etwa der Vorrichtung 70₁, 70₂ und/oder 70₃ einsetzbar sind.

Die dargestellten Seitenschnittansichten beziehen sich bspw. auf jeweilige Facetten einer facettierten Strahlumlenkeinrichtung. Die Strahlumlenkeinrichtung kann bspw. als Array von Facetten gebildet sein. Jedem optischen Kanal kann eine Facette zugeordnet sein, wobei jede Facette einen oder mehrere optische Kanäle umlenken kann. Jede der Facetten kann einen entsprechenden ersten Strahlumlenkbereich und zweiten Strahlumlenkbereich aufweisen. Wie es in den Fig. 4c-4f dargestellt ist, können die Facetten des Arrays von Facetten als beidseitig reflektive Spiegel gebildet sein. Die in den Fig. 4c-4f dargestellte Keilform kann insbesondere bei Verwendung lediglich einer Blickrichtung oder bei Kombination einer rotatorischen Bewegung mit einer translatorischen Bewegung zum Umschalten zwischen den für die Aufnahme zweier Blickrichtungen und der Verwendung zweier Wellenlängenbereiche verwendeten vier Stellungen der Strahlumlenkrichtung eine geringe Bauhöhe ermöglichen. Hierzu kann die Strahlumlenkeinrichtung so bewegt werden, dass zum wechselweisen Umlenken mit unterschiedlichen Seiten die Vorderkante der Facette geringfügig auf und ab bewegt wird, ohne dass die Oberflächennormale der Seiten 35a und 35b parallel zu einer Oberflächennormale des Bildsensors ist.

Eine einfache und/oder entlang der Zeilenerstreckungsrichtung des Arrays geringe Baugröße kann im Gegenzug erhalten werden, indem die Strahlumlenkeinrichtung um 90° oder mehr, bspw. in etwa 180° oder gar 360° drehbar gelagert ist. So können bspw. die vier erwähnten Stellungen oder Positionen durch eine rein rotatorische Bewegung erhalten werden so dass auf zusätzliche Facetten und/oder eine translatorische Bewegung verzichtet werden kann. Dies ermöglicht ferner eine einfache Ausgestaltung der Facetten als planparallele Spiegel, bspw. als ein einziger planparalleler Spiegel unter Einstellung der Divergenz der Strahlengänge mittels der Optiken und/oder als gegeneinander geneigte oder verkippte planparallele Facetten, die die Divergenz ganz oder teilweise einstellen.

Fig. 9a zeigt eine schematische Seitenschnittansicht einer Multiaperturabbildungsvorrichtung 90 gemäß einem Ausführungsbeispiel, bei der gegenüberliegende Seiten 18A und 18B ausgelegt sind, um einen Strahlengang 22 so zu umzulenken, dass an den Seiten 18A und 18B eine Filterung bezüglich der reflektierten Wellenlänge erfolgt. Die Strahlumlenkeinrichtung ist in einer ersten Stellung gezeigt, in welcher die Seite 18A dem Bildsensor 36 zugewandt ist.

Die Strahlumlenkeinrichtung 18A weist einen ersten Strahlumlenkbereich auf, der bspw. an der Seite 18A gebildet ist, und der für einen ersten Wellenlängenbereich durch den optischen Kanal verlaufender elektromagnetischer Strahlung wirksam ist, etwa den sichtbaren Wellenlängenbereich. Die Strahlumlenkeinrichtung weist einen zweiten Strahlumlenkbereich 18B auf, der bspw. für einen zweiten, von dem ersten Wellenlängenbereich verschiedenen Wellenlängenbereich, etwa ultraviolett (UV) Infrarot (IR) oder naher Infrarot (NIR), der durch den optischen Kanal verlaufenden elektromagnetischen Strahlung wirksam ist.

Die Wellenlängenbereiche können disjunkt sein, können sich aber auch teilweise überlappen, solange sie zumindest teilweise verschieden sind und so den Erhalt unterschiedlicher Bildinformationen ermöglichen.

Dies ermöglicht den Erhalt von Aufnahmen unterschiedlicher Wellenlängenbereiche mittels des Bildsensors 36, so dass bspw. die zweite Aufnahme genutzt werden kann, um eine Tiefenkarte für die erste Aufnahme zu erstellen, insbesondere in Kombination mit einem codierten (N)IR-Muster, das durch die Vorrichtung 90 ausgesendet wird.

In Fig. 9a ist die Strahlumlenkeinrichtung 18 in einer ersten Stellung gezeigt. Die Strahlumlenkeinrichtung kann ausgebildet sein, um zum Erhalt einer ersten Aufnahme des Gesamtgesichtsfeldes einen Anstellwinkel α₁ des ersten Strahlumlenkbereichs 18A bezüglich des Bildsensors von 45° innerhalb eines Toleranzbereichs von ±10° ±5° oder ±2° aufzuweisen. Bspw. stellt die Seite 18A vollständig den entsprechenden ersten Strahlumlenkbereich bereit und die Seite 18B vollständig den entsprechenden zweiten Strahlumlenkbereich bereit, so dass die Begriffe hier synonym verwendet werden. Die Strahlumlenkbereiche können jedoch auch lediglich einen Teil der Seite bedecken.

In Fig. 9b ist die Strahlumlenkeinrichtung 18 in einer zweiten Stellung gezeigt, in der die Seite 18B dem Bildsensor zugewandt ist, so dass die Seite 18B wirksam ist, etwa um NIR-Licht umzulenken. Bspw. kann die Strahlumlenkeinrichtung 18 um 180° gegenüber der ersten Stellung gedreht sein. Der Strahlumlenkbereich 18A kann an einer ersten Seite der Strahlumlenkeinrichtung 18 und der zweite Strahlumlenkbereich 18B an einer zweiten, der ersten Seite gegenüberliegend angeordneten Seite angeordnet sein. Die Strahlumlenkeinrichtung 18 kann insgesamt oder in den einzelnen Strahlumlenkelementen so ausgebildet sein, dass zum Erfassen einer ersten Aufnahme des Gesamtgesichtsfeldes die erste Seite dem Bildsensor zugewandt angeordnet ist, und zum Erfassen einer zweiten Aufnahme des Gesamtgesichtsfeldes die zweite Seite dem Bildsensor zugewandt angeordnet ist. Für einen Wechsel der dem Bildsensor zugewandten Seiten kann eine rotatorische und/oder translatorische Bewegung genutzt werden.

Eine planparallele Ausgestaltung der Strahlumlenkeinrichtung oder der Facette hiervon ermöglicht, dass die Facette bzw. Strahlumlenkeinrichtung 18 zum Erhalt einer zweiten Aufnahme des Gesamtgesichtsfeldes, etwa unter Verwendung des zweiten Wellenlängenbereichs, einen Anstellwinkel α₂ des zweiten Strahlumlenkbereichs 18B bezüglich des Bildsensors von 45° innerhalb eines Toleranzbereichs von ±10° ±5° oder ±2° aufweist. Die Toleranzbereiche können bspw. kompensieren, dass Strahlumlenkelemente einen leicht von 45° verschiedene Anstellwinkel umfassen, der von einer Neigung oder Verkippung unterschiedlicher Facetten der Strahlumlenkeinrichtung 18 zueinander herrührt, so dass zwar in einem Mittel in etwa 45° erhalten werden, die einzelnen Facetten oder Umlenkbereiche durch die individuelle Neigung hiervon abweichen.

Die Strahlumlenkbereiche 18A und 18B können durch voneinander verschieden ausgestaltete Beschichtungen erhalten werden, die in dem ersten bzw. zweiten Wellenlängenbereich entweder reflektierend oder nicht-reflektierend wirksam sind.

Ausführungsbeispiele sehen vor, dass eine entsprechende Beschichtung mit einer oder mehreren Schichten auf den Seiten der Strahlumlenkeinrichtung 18 vorgesehen ist, um die Strahlumlenkbereiche 18A und 18B zu erzeugen. Diese Schichten können bspw. eine oder mehrere dielektrische Schichten aufweisen, die bezüglich ihrer Schichtdicke an den Anstellwinkel der Strahlumlenkeinrichtung angepasst sein können.

Da abhängig von dem gewählten Betriebsmodus oder dem gerade für die Aufnahme erwünschten Wellenlängenbereich Anteile von Wellenlängenbereichen, insbesondere des jeweils anderen Wellenlängenbereich, auf die Strahlumlenkeinrichtung 18 treffen können, weisen manche Ausführungsbeispiele einen Bereich zur Absorption bestimmter Wellenlängen auf, etwa einen Volumenabsorber oder dergleichen. Der Bereich kann von der Beschichtung bedeckt sein, so dass bspw. zuerst eine Reflektion von manchen Wellenlängen erfolgt und nicht reflektierte, bspw. transmittierte Wellenlängenbereiche absorbiert werden. So können bspw. bei Aufnahme des ersten Wellenlängenbereichs, die entsprechenden Wellenlängen von der Beschichtung reflektiert werden, während andere Wellenlängen, etwa zumindest unerwünschte Teile des zweiten Wellenlängenbereichs, von diesen Schichten bspw. transmittiert, also durchgelassen werden. Der hinter der Beschichtung angeordnete Bereich zur Absorption kann diese Anteile absorbieren, um eine negative Beeinflussung der Abbildung hierdurch in der Multiaperturabbildungsvorrichtung zu vermeiden oder zumindest zu reduzieren. An der zweiten Seite kann eine komplementäre Einrichtung zur Absorption von unerwünschten Teilen des ersten Wellenlängenbereichs angeordnet sein, der wirksam ist, wenn der zweite Strahlumlenkbereich 18B zur Strahlumlenkung genutzt wird.

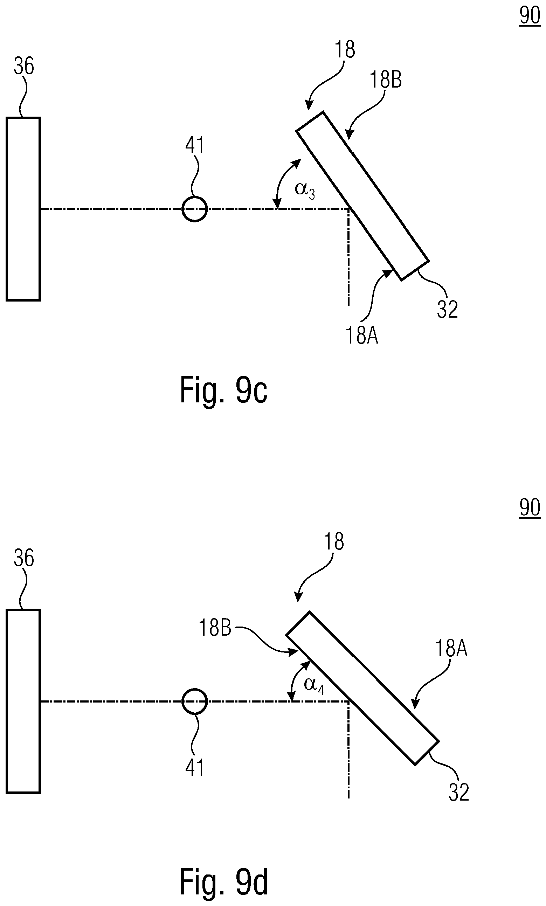

Fig. 9c zeigt ist die Strahlumlenkeinrichtung 18 in einer optionalen dritten Stellung gezeigt, in der die Seite 18A wieder dem Bildsensor zugewandt ist, die Neigung aber so gewählt ist, dass die Strahlengänge in Richtung eines zweiten Gesamtgesichtsfeldes umgelenkt werden, das bspw. Dem ersten Gesamtgesichtsfeld aus Fig. 9a und Fig. 9b ist.

In Fig. 9d ist die Strahlumlenkeinrichtung in einer optionalen vierten Stellung gezeigt, in der die Seite 18B wieder dem Bildsensor zugewandt ist, so dass die Seite 18B wirksam ist, etwa um aus dem zweiten Gesamtgesichtsfeld in Richtung des Bildsensors 36 umzulenken.

Durch die zusätzlichen Stellungen gemäß Fig. 9c und Fig. 9d zur Erfassung des zweiten Gesamtgesichtsfeldes kann eine Aufnahme des zweiten Gesamtgesichtsfeldes unter Verwendung des ersten Strahlumlenkbereichs 18A mit dem Bildsensor zu erfasst werden, so dass diese Aufnahme auf dem ersten Wellenlängenbereich basiert. Zusätzlich kann das zweite Gesamtgesichtsfeld mit einer weiteren Aufnahme abgebildet werden, und zwar unter Verwendung des Strahlumlenkbereichs 18B mit dem Bildsensor, so dass diese Aufnahme auf dem zweiten Wellenlängenbereich basiert.

Die beiden Gesamtgesichtsfelder können entlang unterschiedlicher Hauptrichtungen der Multiaperturabbildungsvorrichtung angeordnet sind, bspw. entlang entgegengesetzter Richtungen d. h., entlang in etwa 180° unterschiedlicher Richtungen. Die Strahlumlenkbereiche können bei Ausführen einer fortschreitenden rotatorischen Bewegung, etwa entlang einer Reihenfolge analog zur Reihenfolge der Fig. 9a-d den Strahlengang abwechselnd in Richtung des ersten Gesamtgesichtsfeldes und des zweiten Gesamtgesichtsfeldes und abwechselnd mit dem ersten Strahlumlenkbereich 18A und dem zweiten Strahlumlenkbereich 18B umlenken. Hierbei kann es sich zwar um einen möglichen aber nicht zwingend notwendigen Bewegungsablauf handeln. Vielmehr kann bspw. stets die Rotationsrichtung gewählt werden, die einen kürzesten und/oder schnellsten Stellungswechsel ermöglicht, so dass zwischen den Stellungen in beliebiger Reihenfolge gewechselt werden kann, insbesondere im Falle einer Erfassung eines dritten Gesamtgesichtsfeld entlang einer dritten Richtung und/oder bei einer Anordnung der Gesamtgesichtsfelder in einem Winkel von ungleich 180°.

Die Winkel der Fig.9a-9d können in beliebiger Reihenfolge angefahren werden, etwa jeweils ca. 45°.

Anstelle oder in Kombination mit der beschriebenen rotatorischen Verschiebung kann auch eine translatorische Verschiebung der Strahlumlenkeinrichtung implementiert werden.

Für den Erhalt von Abbildungen, Bildinformationen oder Bildern mit unterschiedlicher Wellenlängeninformation können Pixel des Bildsensors ausgebildet sein, um für beide Wellenlängenbereiche wirksam zu sein und/oder es können räumlich benachbart Zellen mit unterschiedlicher Sensitivität angeordnet sein, so dass zumindest der Bildsensorbereich für beide Wellenlängenbereiche sensitiv ist.

Bspw. können die Bildsensorbereiche zur Bilderzeugung in dem ersten Wellenlängenbereich und zur Bilderzeugung in dem zweiten Wellenlängenbereich ausgebildet sein. So können CMOS-Pixel bspw. gleichzeitig im visuellen und NIR-Bereich sensitiv sein, das darüberliegende Farbfilterarray ("CFA"- im Visuellen typischerweise in Bayer-Anordnung) kann je nach Farbe (rot, grün, blau; oder magenta, cyan, yellow/gelb) aber auch "Filterpixel" enthalten, von denen nur manche auch das NIR und auch nur teilweise transmittieren, das ist aber ausreichend. Alternativ oder zusätzlich können bei einer Zellenanordnung, etwa im erweiterten Bayer-Muster, einzelne Zellen durch nur im NIR sensitive Zellen ausgetauscht oder implementiert sein.

Bspw. können Pixel der Bildsensorbereiche zur Bilderzeugung in dem ersten Wellenlängenbereich und zur Bilderzeugung in dem zweiten Wellenlängenbereich ausgebildet sind.

Die Erfindung betrifft somit eine Strahlumlenkeinrichtung in facetVISION-Architektur mit unterschiedlicher Ausgestaltung der Spiegelvorder- und Spiegelrückseiten, wobei facetVISION auf die hierin beschriebenen Multiaperturabbildungsvorrichtungen bezogen ist.

Eine Kernidee besteht darin, den Umlenkspiegel so auszugestalten, dass dieser unterschiedliche Funktionalitäten auf Vorder- und Rückseite besitzt.

Dies betrifft insbesondere die Reflektivität, insbesondere spektrale Reflektivität (d.h. in Abhängigkeit der auftreffenden Wellenlängen), insbesondere reflektiert die 1. Seite unter dem gewünschten Strahlumlenkungswinkel den visuellen spektralen Bereich (visuell - VIS), nicht aber das nahe Infrarot (NIR) und die 2. Seite reflektiert unter der gewünschten Strahlumlenkung NIR, aber nicht VIS, dies alles z.B. durch auf 1. und 2. Spiegelseiten unterschiedlich ausgestaltete dielektrische Schichtsysteme.

Dies ermöglicht, dass
- Die gleiche Kamera kann "gleichzeitig" bzw. sehr schnell hintereinander - nur durch Spiegelumschaltung, als VIS- oder NIR-Kamera genutzt werden.
- Spiegel hat nicht mehr notwendigerweise eine Keilform, sondern ist einfache planparallele Platte. 180°-Drehung zur Spiegelumschaltung VIS/NIR verwendet. Eventuelle negative Bauraumimplikationen im Drehbereich des Spiegels, können durch auf- und zufahrende Deckgläser an der Stelle der Fenster (Durchlassöffnungen der Vorrichtung) geheilt werden.
- Kamera kann mit nur einseitiger Blickrichtung ("Welt" oder "Selfie") konstruiert werden, Spiegelumschaltung (180°) dient dann nur der Änderung des aufgenommenen spektralen Bereiches. Kann aber auch weiterhin Vorder- und Rückseitige Blickrichtungen zulassen. Dann z.B. in 90°-Drehschritten des Spiegels: Welt-VIS, Selfie-NIR, Welt-NIR, Selfie-VIS.
- Natürlich Kombination mit Gesichtsfeldaufteilung und Image-stitching (bspw. 2 Kanäle).
- Auch möglich als Ausführung als Dualkamera, zur Erzeugung einer disparitätsbasierten Tiefenkarte für das Image-stitching (bspw. 4 Kanäle). Dies ist aber nicht notwendig (und damit kanal-sparend und damit erheblich kostensparend), denn:
- Kann obige Anordnung nun mit strukturierter bzw. codierter Beleuchtung (à la Kinect) im NIR kombinieren (Kamera sieht ja in einer Spiegelstellung jetzt auch im NIR) und kann daraus Tiefenkarte erzeugen, welche für Image-stitching des VIS-Bildes notwendig ist. Dies alles nur mit 2 Gesichtsfeld-aufgeteilten Kamerakanälen, dem speziellen Spiegel und nur unter Hinzunahme des NIR-Punktmuster-Projektors, ohne zusätzliche NIR-Kamera.
- Ziel der Reduktion von 4 auf 2 Kanäle erreicht, sogar ohne Hinzufügung einer zusätzlichen NIR-Kamera (wäre 3. optischer Kanal), nur zusätzlicher NIR-Projektor notwendig
- Kostenreduktion bei Beibehaltung des Bauhöhenvorteils, nur durch alternative Erzeugung der Tiefenkarte, welche teils in das System selbst integriert ist

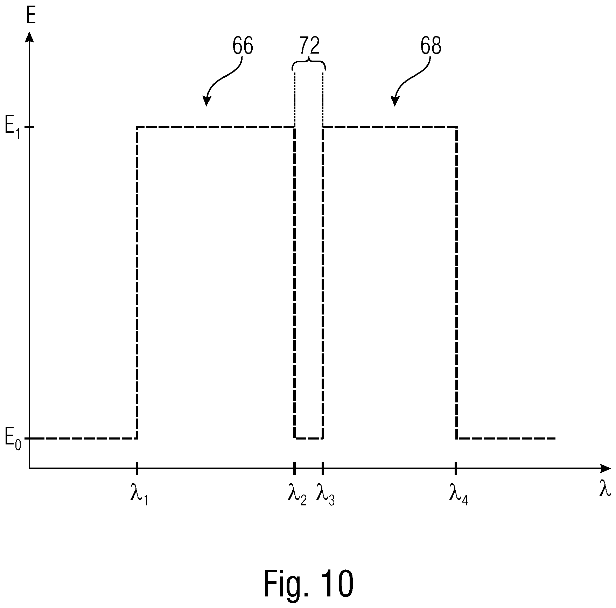

Fig. 10 zeigt einen schematischen Graphen einer Empfindlichkeit E eines Bildsensorbereichs des Bildsensors der Multiaperturabbildungsvorrichtung über die Wellenlängen λ von Wellenlängenbereichen 66 und 68, etwa der Empfindlichkeit eines oder mehrerer der Bildsensorbereiche 44a-d. Die die Bildsensorbereiche können zur Bilderzeugung in dem ersten Wellenlängenbereich 66 und zur Bilderzeugung in dem zweiten Wellenlängenbereich 68 ausgebildet sein. Der erste Wellenlängenbereich 66 ist bspw. zwischen einer ersten unteren Wellenlänge λ₁ und einer ersten oberen Wellenlänge λ₂ angeordnet, mit λ₁ < λ₂. Der zweite Wellenlängenbereich 68 ist bspw. zwischen einer zweiten unteren Wellenlänge λ₃ und einer zweiten oberen Wellenlänge λ₄ angeordnet, mit λ₃ < λ₄. Obwohl Fig. 10 so dargestellt ist, dass der zweite Wellenlängenbereich 68 größere Wellenlängen aufweist als der erste Wellenlängenbereich 66, ist es ebenfalls möglich, dass der zweite Wellenlängenbereich 68 kleinere Wellenlängen aufweist als der erste Wellenlängenbereich 66. Die Wellenlängenbereiche 66 und 68 können miteinander überlappen, können aber auch durch einen Zwischenbereich 72 voneinander beabstandet sein.

Der Bildsensorbereich kann ausgebildet sein, um zumindest in den Wellenlängenbereichen 66 und 68 Bilddaten zu erzeugen, das bedeutet, er weist zumindest in den Wellenlängenbereichen 66 und 68 eine Empfindlichkeit E₁ auf, die gegenüber einer Empfindlichkeit Eo erhöht ist, in welcher der Bildsensorberiech bspw. keine Bilddaten oder Bildsignale erzeugt, da er für diese Wellenlängen unempfindlich ist.

Die Strahlumlenkung kann selektiv für die Wellenlängenbereiche 66 und 68 erfolgen, so dass ein jeweiliges Dämpfen oder Herausfiltern von Wellenlängen außerhalb des jeweiligen Wellenlängenbereichs erfolgt, für welchen der Strahlumlenkbereich gerade wirksam ist, wobei es ausreichend ist, dass zumindest die Wellenlängen unterdrückt oder gedämpft werden die in dem komplementären Wellenlängenbereich angeordnet sind. Das bedeutet, dass bspw. ein Wellenlängenbereich, für den der Bildsensor unempfindlich ist auch durch den Strahlumlenkbereich 18A und/oder 18B umgelenkt werden kann. Vereinfacht ausgedrückt kann der Bildsensorbereich auch zur Bildgebung außerhalb der Wellenlängenberieche 66 und 68 ausgelegt sein.

Bspw. kann der Bildsensorbereich eine Vielzahl von Bildpunkten, d. h., Pixel (Bildelement), aufweisen. Jedes Pixel kann aus zumindest einem, bevorzugt mehreren bildgebenden, d. h. photoempfindlichen, Sensorzellen gebildet sein. Diese können frei oder nach einem Muster angeordnet sein, bspw. einem Bayer-Muster. Eine Empfindlichkeit des Bildsensorbereichs für den zweiten Wellenlängenbereich 68 kann bspw. dadurch erhalten werden, dass eine erste Teilmenge von Pixeln für den ersten Wellenlängenbereich 66 empfindlich ist und eine zweite Teilmenge anderer Pixel für den zweiten Wellenlängenbereich 68 empfindlich ist. Ein Pixel der ersten Teilmenge kann, je nach gewünschter Auflösung der ersten und/oder zweiten Aufnahme verschränkt miteinander und abwechselnd, d. h., 1:1, oder in einem anderen Verhältnis angeordnet sein. Alternativ oder zusätzlich ist es möglich, dass eine, mehrere oder alle der Sensorzellen eines Pixels für den ersten und den zweiten Wellenlängenbereich 66 und 68 empfindlich sind. Alternativ oder zusätzlich ist es ebenfalls möglich, das Muster der Sensorzellen für den ersten Wellenlängenbereich 66 so zu ändern, dass für den zweiten Wellenlängenbereich 68 empfindliche Sensorzellen hinzugefügt werden und/oder Sensorzellen aus dem Muster substituieren. Pixel der Bildsensorbereiche können so zur Bilderzeugung in dem ersten Wellenlängenbereich 66 und/oder zumindest teilweise zur Bilderzeugung in dem zweiten Wellenlängenbereich 68 ausgebildet sein.

Vorangehend beschriebene Ausführungsbeispiele beziehen sich auf eine einfache oder stereoskopische Erfassung von Gesamtgesichtsfeldern. Nachfolgend werden Ausgestaltungen von Multiaperturabbildungsvorrichtungen beschrieben, die gleiche oder zumindest vergleichbare strukturelle Einzelmerkmale aufweisen können, beispielsweise im Hinblick auf die Ausgestaltung von Bildsensorbereichen, Optiken, der Zusammenfassung von Optiken zu einem Array und/oder der optionalen Verwendung einer Strahlumlenkeinrichtung.

Die nachfolgend beschriebenen Ausführungsbeispiele zielen darauf, den Bauraum und/oder die Anzahl der benötigten Komponenten zu reduzieren, um kleine Kameras oder Multiaperturabbildungsvorrichtungen zu erhalten. Darüber hinaus zielen die beschriebenen Ausführungsbeispiele darauf, den Effekt der Okklusionen, das bedeutet, der Verdeckungen von Bildinhalten entgegenzuwirken.

Ausführungsbeispiele in diesem Zusammenhang beziehen sich auf eine Multiaperturabbildungsvorrichtung mit einer Bildsensoreinrichtung mit einer Mehrzahl von Bildsensorbereichen. Dies bezieht sich darauf, dass sowohl ein einzelner Bildsensor als auch mehrere Bildsensoren zusammenhängend oder an verteilten Orten angeordnet sein können. Die Multiaperturabbildungsvorrichtung umfasst eine Mehrzahl von optischen Kanälen 42a-42c, wobei jeder optische Kanal eine Optik zur Abbildung eines Teilgesichtsfelds eines Gesamtgesichtsfelds auf einem dem optischen Kanal zugeordneten Bildsensorbereich 44a-44c der Bildsensoreinrichtung 12 umfasst. Die Mehrzahl von optischen Kanälen 42a-42c ist ausgebildet, um das Gesamtgesichtsfeld vollständig abzubilden. Ein erstes Teilgesichtsfeld des Gesamtgesichtsfelds und ein zweites Teilgesichtsfeld des Gesamtgesichtsfelds werden dabei jedoch von einer unterschiedlichen Anzahl optischer Kanäle erfasst.

Die unterschiedliche Anzahl ermöglicht es, eine geringere Anzahl von optischen Kanälen vorzusehen, was kleinere Kameras ermöglicht. Gleichzeitig kann durch eine geeignete Anordnung der optischen Kanäle und insbesondere derjenigen, die ein Teilgesichtsfeld mehrfach erfassen, ein Okklusionseffekt zumindest teilweise bereinigt werden, was hochqualitative Abbildungen ermöglicht.

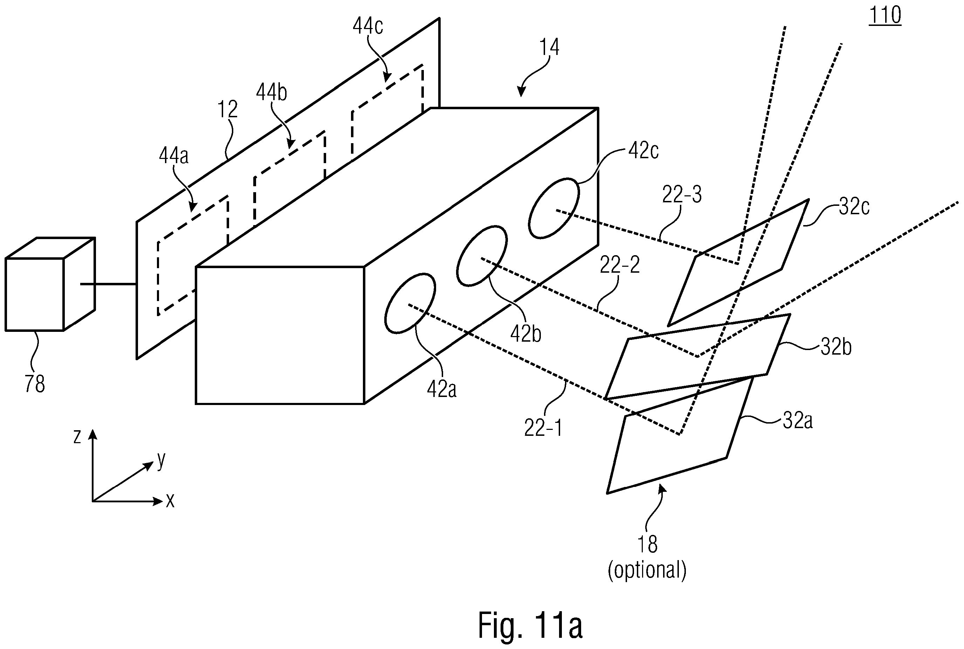

Fig. 11a zeigt eine schematische perspektivische Darstellung einer Multiaperturabbildungsvorrichtung 110 im Zusammenhang mit dieser Ausgestaltung. Die Multiaperturabbildungsvorrichtung 110 umfasst den auch als Bildsensoreinrichtung bezeichneten Bildsensor 12 umfassend Bildsensorbereiche 44a-44c, die ausgebildet sind, um Abbildungen optischer Kanäle 42a-42c zu empfangen und in elektronische Signale umzuwandeln. Die optionale Strahlumlenkeinrichtung 18 kann die Strahlengänge 22-1 bis 22-3 der optischen Kanäle 42a-42c umlenken.

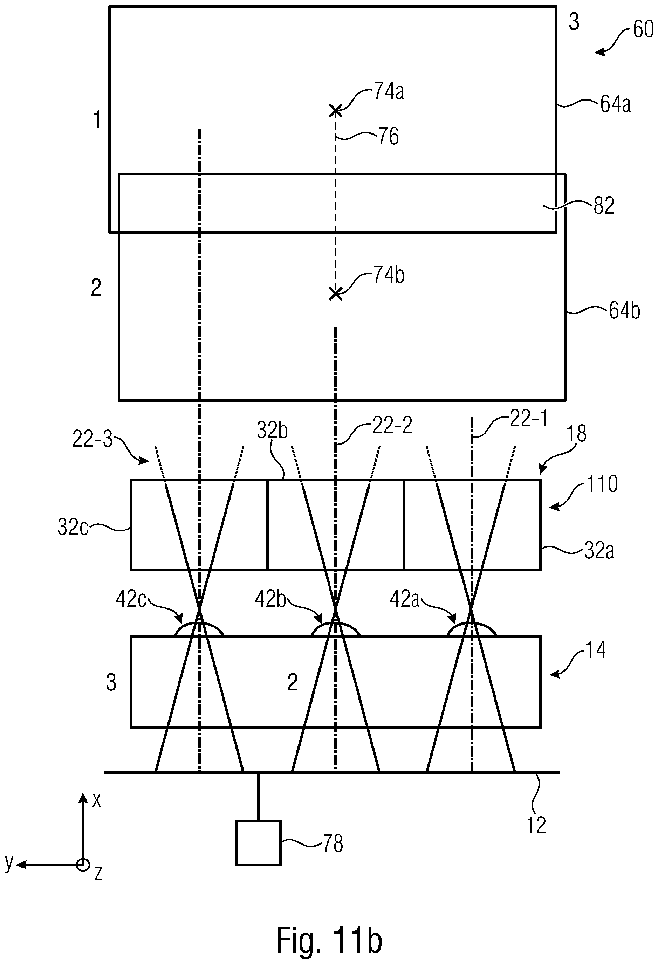

Fig. 11b zeigt eine schematische Aufsicht auf die Multiaperturabbildungsvorrichtung 110 aus Fig. 11a sowie eine schematische Darstellung des Gesamtgesichtsfelds 60, welches durch die Multiaperturabbildungsvorrichtung 110 erfasst oder aufgenommen wird. Beispielhaft umfasst die Multiaperturabbildungsvorrichtung 110 drei optische Kanäle, wobei eine beliebig höhere Anzahl implementierbar ist, beispielsweise 4, 5, 6, 7, 8, 9, 10 oder mehr. Die hierin beschriebenen Prinzipien bleiben dadurch geltend. So kann durch zusätzliche optische Kanäle eine Auflösungserhöhung oder dergleichen erhalten werden.

Die Mehrzahl der optischen Kanäle ist in dem Array 14 nebeneinander angeordnet. Der optische Kanal zum Abbilden des Teilgesichtsfelds 64b ist beispielhaft zwischen den optischen Kanälen zum Abbilden des Teilgesichtsfelds 64a in dem Array 14 angeordnet. Alternativ kann auch eine andere Ausgestaltung gewählt werden.

Das Gesamtgesichtsfeld 60 ist beispielhaft in zwei Teilgesichtsfelder 64a und 64b unterteilt, wobei eine beliebige andere Aufteilung ebenfalls möglich ist, insbesondere können mehr als zwei Teilgesichtsfelder angeordnet sein, die eindimensional oder zweidimensional im Objektbereich angeordnet sind.

Die Teilgesichtsfelder 64a und 64b können benachbart zueinander angeordnet sein und in einem Überlappbereich 82 miteinander überlappen. Beispielhaft bilden Mitten 74a und 74b, beispielsweise geometrische Mittelpunkte, der Teilgesichtsfelder 64a bzw. 64b ein einzeiliges Array 76, welches quer bzw. senkrecht zu der Zeilenerstreckungsrichtung y des Arrays 14 angeordnet ist. Es ist jedoch auch möglich, die Teilgesichtsfelder 64a und 64b anders zu orientieren. Die Anordnung des Array 76 quer zu der Zeilenerstreckungsrichtung y ermöglicht jedoch eine besonders vorteilhafte Vermeidung von Okklusionen.

Die Multiaperturabbildungsvorrichtung 110 ist so ausgestaltet, dass das Teilgesichtsfeld 64b durch einen einzelnen optischen Kanal, den optischen Kanal 42b abgebildet wird. Ein einzelner kann so verstanden werden, dass lediglich ein einziger Kanal vorgesehen ist, um zum Erstellen des Gesamtbildes das Teilgesichtsfeld zu erfassen. Demgegenüber wird das Teilgesichtsfeld 64ba durch die optischen Kanäle 42a und 42c abgebildet, das bedeutet, mit einer anderen Anzahl als das Teilgesichtsfeld 64b. Die Anzahl der optischen Kanäle ist dabei darauf ausgerichtet, wie oft das jeweilige Teilgesichtsfeld 64a oder 64b von der Multiaperturabbildungsvorrichtung 60 als solches tatsächlich abgebildet wird und die daraus erhaltene Information für die Erstellung eines Gesamtbilds verwendet wird. Hierunter fallen beispielsweise nicht zusätzliche oder andere Erfassungen von Teilgesichtsfeldern, die bezüglich Orientierung und/oder Größe anders ausgestaltet sind und beispielsweise für eine Weitwinkel-Funktionalität oder Zoom-Funktionalität verwendet werden, wie später beschrieben wird.

Gleiche Teilgesichtsfelder beziehen sich dabei auf einen übereinstimmenden Ausschnitt in dem Objektbereich, der zwar mechanische Toleranzen aufweisen kann, jedoch keine absichtliche Abweichung in dem Objektbereich aufweist.

Gemäß dem Ausführungsbeispiel der Fig. 11a und 11b wird nun das Teilgesichtsfeld 64a stereoskopisch erfasst, während das Teilgesichtsfeld 64b in einer anderen Anzahl, beispielsweise in einer geringeren Anzahl, das heißt, einfach aufgenommen wird.

Zum Zusammenfügen oder Stitchen der Einzelbilder des Teilgesichtsfelds 64a und 64b wird bevorzugt eine Tiefeninformation verwendet. Diese kann von einer Einrichtung zur Bildauswertung 78 für das Teilgesichtsfeld 64a erstellt werden. Die Einrichtung zur Bildauswertung ist mit dem Bildsensor 12 mittelbar oder unmittelbar verbunden und ist ausgebildet, um Bildinformationen von den Bildsensorbereichen 44a-44c zu erhalten und auszuwerten.

Für das Teilgesichtsfeld 64a liegen beispielhaft von zwei optischen Kanälen Bildinformationen für das Teilgesichtsfeld 64a vor, die aus unterschiedlichen Blickrichtungen der optischen Kanäle 42a und 42c aufgenommen wurden. Die Einrichtung 78 zur Bildauswertung kann ausgebildet sein, um die Bildinformationen des Teilgesichtsfelds 64a zu kombinieren, um für das entsprechende Teilbild eine Tiefeninformation zu erhalten.

Auch für einen Überlappbereich 82, in welchem die Teilgesichtsfelder 64a und 64b miteinander überlappen, können so Tiefeninformationen erhalten werden. Dies ermöglicht es, die Einrichtung 78 zur Bilderfassung so auszugestalten, dass Bildinformationen für das Teilgesichtsfeld 64a an einer Bildinformation des Teilgesichtsfelds 64b, welches durch den optischen Kanal 42b erhalten und von der Einrichtung 78 ausgewertet wird, auszurichten. Das bedeutet, die Abbildung des Teilgesichtsfelds 64b kann als Referenzbild genommen werden und eine Ausrichtung von einzelnen Objekten und/oder des Gesamtbilds des Teilgesichtsfelds 64a an dem Teilbild des Teilgesichtsfelds 64b vorgenommen werden.

Hierdurch kann mittels der Einrichtung 78 ein Gesamtbild erhalten werden, das in unterschiedlichen Gesamtbildbereichen auf einer unterschiedlichen Anzahl von Teilbildern basiert, beispielsweise in einem Gesamtbildbereich des Teilgesichtsfelds 64a auf zwei Aufnahmen und in einem Gesamtbildbereich des Teilgesichtsfelds 64b auf einer einzelnen Aufnahme.

Damit ist es möglich, einen vierten optischen Kanal zur doppelten Erfassung des Teilgesichtsfelds 64b einzusparen, was geringe Größen der Multiaperturabbildungsvorrichtung 110 ermöglicht. Darüber hinaus kann durch die stereoskopische Erfassung 64a eine Okklusion vermieden werden, wobei die Vermeidung besonders effektiv ist, wenn die optischen Kanäle zur Erfassung desselben Teilgesichtsfelds in dem Array 14 möglichst weit beabstandet sind und/oder wenn das Array 76 quer/senkrecht zur Zeilenerstreckungsrichtung y ausgerichtet ist.

Die Multiaperturabbildungsvorrichtung kann auch eine andere Anordnung der optischen Kanäle bezüglich der Teilgesichtsfelder aufweisen und/oder eine andere Anzahl von optischen Kanälen. Auch kann jeweils unabhängig voneinander eine eindimensionale oder zweidimensionale Anordnung der Teilgesichtsfelder im Gesamtgesichtsfeld eingerichtet sein. Anstelle der dargestellten Erfassung zweier Teilgesichtsfelder mit drei optischen Kanälen können damit auch andere Kombinationen erhalten werden, etwa neun Teilgesichtsfelder, die mit zwölf optischen Kanälen abgebildet werden.

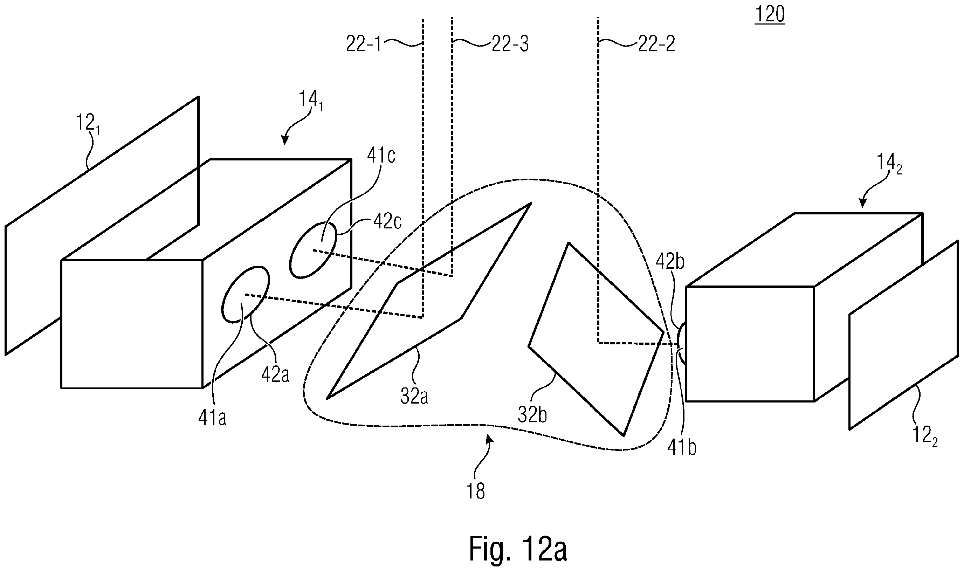

Fig. 12a zeigt eine schematische perspektivische Ansicht einer Multiaperturabbildungsvorrichtung 120 gemäß einem Ausführungsbeispiel, bei der die Anordnung der Optiken 41a-41c und/oder optischen Kanäle 42a-42c verglichen mit der Multiaperturabbildungsvorrichtung 110 verändert ist. Während eine Blickrichtung optischer Kanäle in der Multiaperturabbildungsvorrichtung 100 zumindest in einem Bereich zwischen dem Bildsensor und den Optiken gleich sein kann, d. h., die optischen Kanäle weisen eine im Wesentlichen gleiche Blickrichtung auf, können die Blickrichtungen der optischen Kanäle der Multiaperturabbildungsvorrichtung 110 unterschiedlich sein, etwa indem die Blickrichtung des optischen Kanals 42b entgegengesetzt zu der Blickrichtung der optischen Kanäle 42a und 42c ist.

So bilden die optischen Kanäle beispielsweise zwei einander gegenüberliegende Gruppen. Beispielhaft sind verglichen mit der Multiaperturabbildungsvorrichtung 110 die optischen Kanäle 42a und 42c gegenüberliegend zu dem optischen Kanal 42b angeordnet, so dass die Optik 41b zum Abbilden des Teilgesichtsfelds 64b gegenüberliegend zu den Optiken 41a und 41c zum Abbilden des Teilgesichtsfelds 64a angeordnet ist. Die Multiaperturabbildungsvorrichtung 120 weist dabei die Strahlumlenkeinrichtung 18 auf, die so ausgestaltet ist, dass die Strahlengänge 22-1 bis 22-3 umgelenkt werden. Hierzu ist die Strahlumlenkeinrichtung 18 zwischen den Optiken 41a bis 41c einerseits und der Optik 41b andererseits angeordnet.

Die Strahlumlenkeinrichtung 18 kann einen festen oder fixierten Umlenkwinkel implementieren. In einem derartigen Fall kann die Strahlumlenkeinrichtung 18 beispielsweise als Prisma oder als fest angeordneter Spiegel implementiert sein. Es besteht auch die Möglichkeit, ein gemeinsames Trägersubstrat für beide Umlenkseiten zu verwenden, auf die dann entsprechende Facetten mittels einer Abformtechnik aufgetragen werden.

Alternativ kann die Strahlumlenkeinrichtung 18 auch ausgebildet sein, um eine Blickrichtung der Multiaperturabbildungsvorrichtung zu verändern. In diesem Fall kann die Strahlumlenkeinrichtung 18 so ausgestaltet sein, dass Strahlumlenkelemente 32a und 32b um eine eigene, möglicherweise parallel zueinander verlaufende Rotationsachse rotierbar gelagert sind. Es besteht sowohl die Möglichkeit, die Strahlumlenkeinrichtung 18 so auszugestalten, dass die Strahlumlenkelemente beidseitig reflektiv ausgebildet sind und in den unterschiedlichen Zuständen die Strahlengänge 22-1 bis 22-3 mit unterschiedlichen Hauptseiten umlenken, wie es beispielsweise im Zusammenhang mit den Fig. 4a-4h beschrieben ist. Alternativ besteht auch die Möglichkeit, dieselbe Hauptseite zum Umlenken in den beiden Zuständen zu verwenden.

Bezogen auf eine Position der Optiken 41a und 41c kann die Optik 41b beispielhaft einer der beiden Optiken 41a oder 41c gegenüberliegen oder eine andere Position aufweisen. Vorteilhaft ist es, die Optik 41b bezogen auf die Optiken 41a und 41c mittig anzuordnen, da hierdurch eine symmetrische Ausgestaltung der Multiaperturabbildungsvorrichtung möglich ist.

Das Strahlumlenkelement 32a kann als eine gemeinsame Facette für die Strahlengänge 22-1 und 22-3 gebildet sein, da die möglicherweise parallel zueinander im Bereich zwischen dem Bildsensor 12, und dem Array 14₁ verlaufenden Strahlengänge hin zu demselben Teilgesichtsfeld umgelenkt werden. Alternative Ausführungsbeispiele sehen eine individuelle Ausgestaltung oder Anordnung von Strahlumlenkelementen für die optischen Kanäle 42a und 42c vor.

Die Anordnung der optischen Kanäle 42a, 42b und 42c ist dabei vorteilhaft, jedoch beispielhaft. So ist es ebenfalls möglich, den optischen Kanal 42b gemeinsam mit dem optischen Kanal 42a oder 42c in einem gemeinsamen Array 14₁ anzuordnen und den verbleibenden optischen Kanal gegenüberliegend hierzu anzuordnen, in dem Array 14₂, das in diesem Fall durch einen einzelnen optischen Kanal gebildet wird.

Wie es im Zusammenhang mit der Multiaperturabbildungsvorrichtung 110 beschrieben ist, kann auch eine andere Anzahl von optischen Kanälen insgesamt angeordnet sein.

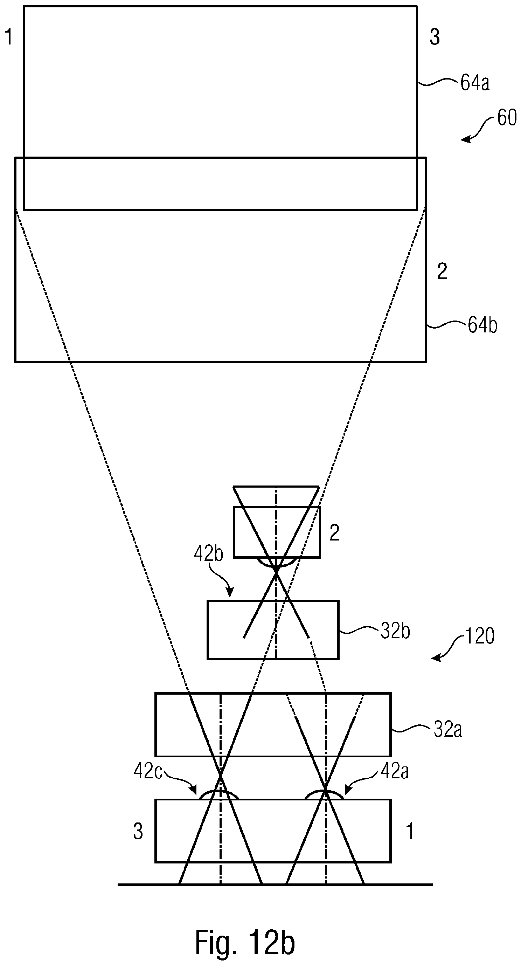

Fig. 12b zeigt eine schematische Aufsicht auf die Multiaperturabbildungsvorrichtung 120 zusammen mit einer Darstellung des Gesamtgesichtsfelds 60. Durch die gegenüberliegende Anordnung der optischen Kanäle 42a und 42c einerseits und des optischen Kanals 42b andererseits wird ebenso wie mit der Multiaperturabbildungsvorrichtung 110 eine asymmetrische Erfassung des Gesamtgesichtsfelds 60 ermöglicht.

Während die Fig. 11a, 11b, 12a und 12b Ausführungsformen einer Multiaperturabbildungsvorrichtung beschreiben, die genau drei optische Kanäle aufweist, die ausgebildet sind, um das Gesamtgesichtsfeld 60 durch das Teilgesichtsfeld 64a und das Teilgesichtsfeld 64b vollständig abzubilden, sind weitere Ausführungsbeispiele darauf gerichtet, dass eine andere Anzahl von optischen Kanälen und/oder Teilgesichtsfeldern vorgesehen ist. Im Hinblick auf die Ausgestaltungen der Multiaperturabbildungsvorrichtungen 110 und 120 können die optischen Kanäle zum Abbilden eines der Teilgesichtsfelder nebeneinander angeordnet sein und von einem optischen Kanal zum Abbilden eines anderen Teilgesichtsfelds beabstandet sein, wie es für die Multiaperturabbildungsvorrichtung 110 beschrieben ist.

Alternativ hierzu ist es möglich, dass optische Kanäle zum Abbilden eines Teilgesichtsfeldes nebeneinander angeordnet sind und gegenüberliegend zu einem oder mehreren optischen Kanälen zum Abbilden eines anderen Teilgesichtsfeldes angeordnet sind, wie es im Zusammenhang mit der Multiaperturabbildungsvorrichtung 120 beschrieben ist.

Jeder der dargestellten optischen Kanäle weist einen zugeordneten Bildsensorbereich 44 auf. Diese Teile, die Optik sowie der Bildsensorbereich, gegebenenfalls auch weitere Komponenten, können jeweils zu einem Modul kombiniert werden, so dass die Multiaperturabbildungsvorrichtung als eine Kombination von Modulen bereitgestellt werden kann. Ein Modul kann dabei einen oder mehrere optische Kanäle aufweisen. Ein Modul mit zumindest zwei optischen Kanälen und/oder Bildsensorbereichen kann so ausgestaltet sein, dass die Bildsensorbereiche und/oder die Optiken der optischen Kanäle ein gemeinsames Substrat aufweisen, etwa in Form eines Trägers 39, der im Zusammenhang mit der Fig. 5a beschrieben ist.

Zusammengenommen sind sowohl die Multiaperturabbildungsvorrichtung 110 als auch die Multiaperturabbildungsvorrichtung 120 so ausgestaltet, dass eine erste Gruppe optischer Kanäle ausgelegt ist, um das Gesamtgesichtsfeld 60 vollständig zu erfassen, also das Teilgesichtsfeld 64a und 64b. Vollständig kann dabei so verstanden werden, dass alle notwendigen Bildinformationen vorhanden sind. Zusätzliche optische Kanäle sind nicht notwendig oder vorgesehen, um das Gesamtbild zu erstellen. Die Gruppe kann beispielsweise die optischen Kanäle 42a und 42b oder 42c und 42w umfassen. Eine weitere Gruppe optischer Kanäle, die auch nur einen einzelnen optischen Kanal umfassen kann, ist ausgebildet, um das Gesamtgesichtsfeld unvollständig zu erfassen. Dies kann der jeweils andere der optischen Kanäle 42a oder 42c sein.

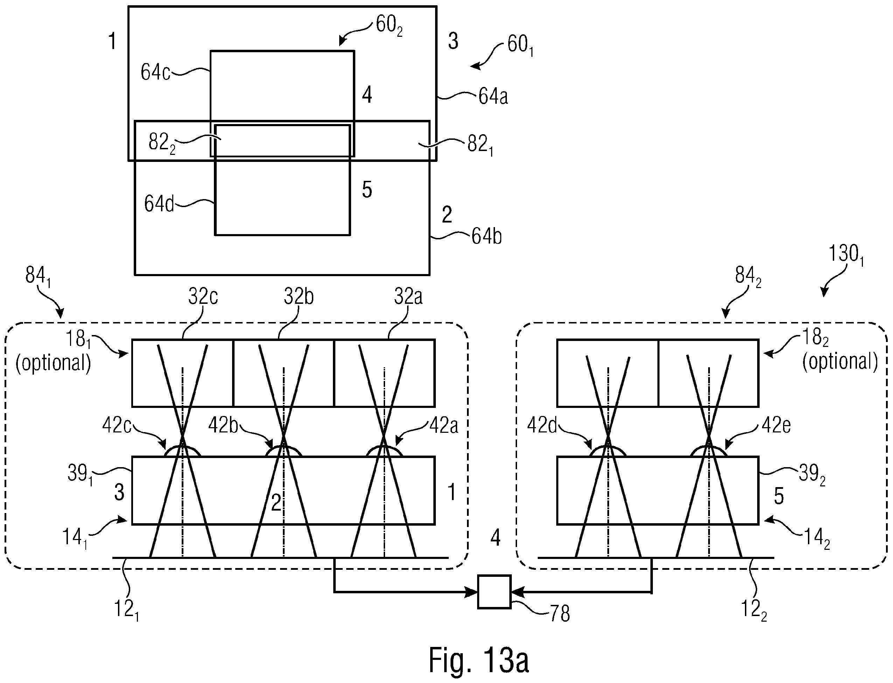

Fig. 13a zeigt eine schematische Aufsicht auf eine Multiaperturabbildungsvorrichtung 130₁, die ähnlich ausgestaltet sein kann wie die Multiaperturabbildungsvorrichtung 110. Ähnlich wie für die Multiaperturabbildungsvorrichtung 110 zeigen übereinstimmende Ziffern im Bereich der optischen Kanäle 42 das zugeordnete Teilgesichtsfeld 64 im Objektbereich. Beispielhaft ist die Anordnung des Arrays 14₁ mit den optischen Kanälen 42a, 42b und 42c als ein gemeinsames Modul 84₁ gebildet, das beispielsweise einen durchgängigen transparenten Träger 39, aufweist. Ferner wird beispielsweise ein zusammenhängender einzelner Bildsensor 12₁ mit den entsprechenden Bildsensorbereichen vorgesehen.

Zusätzlich zu der Erfassung oder Abbildung eines Gesamtgesichtsfelds 60₁, das beispielsweise dem Gesamtgesichtsfeld 60 aus Fig. 11b entsprechen kann, weist die Multiaperturabbildungsvorrichtung ferner optische Kanäle 42d und 42e auf, die ausgebildet sind, um gemeinsam ein Gesamtgesichtsfeld 60₂ abzutasten. Das Gesamtgesichtsfeld 60₂ weist einen Überlapp mit dem Gesamtgesichtsfeld 60₁ auf. Obwohl das Gesamtgesichtsfeld 60₂ so dargestellt ist, dass es ein Ausschnitt des Gesamtgesichtsfelds 60, ist, kann alternativ auch das Gesamtgesichtsfeld 60₁ ein Ausschnitt des Gesamtgesichtsfelds 60₂, was auf einer Größe der einzelnen Teilgesichtsfelder basieren kann.

Die optischen Kanäle 42a-42e sind somit unverändert dazu ausgebildet, um das Gesamtgesichtsfeld 60₁ asymmetrisch abzubilden, das bedeutet, die Teilgesichtsfelder mit einer unterschiedlichen Anzahl. Weitere, zusätzliche optische Kanäle 42d und 42e sind anderen Teilgesichtsfeldern eines anderen Gesamtgesichtsfelds zugeordnet.

Teilgesichtsfelder 64c und 64d können parallel zu der Anordnung der Teilgesichtsfelder 64a und 64b angeordnet sein, es ist aber auch eine hiervon verschiedene Anordnung möglich. Obwohl das Gesamtgesichtsfeld 60₂ so dargestellt ist, dass es einen mittigen Ausschnitt des Gesamtgesichtsfelds 60₁ bildet, ist auch eine andere Positionierung und/oder Orientierung möglich. Diese lässt sich durch eine Einstellung der Strahlumlenkung und/oder durch eine relative Orientierung der optischen Kanäle 42d und 42e relativ zu den optischen Kanälen 42a und 42c einstellen.

Beispielhaft ist die Anordnung der optischen Kanäle 42d und 42e als zweites oder weiteres Modul 84₂ gebildet. Allerdings können die optischen Kanäle 42a-42e in einer beliebigen Anordnung aus einem oder mehreren Modulen gebildet werden.

Die Einrichtung 78 kann mit den Bildsensoren 12₁ und 12₂ verbunden sein, um die Bildinformationen eines, mehrerer oder aller Teilgesichtsfelder zu erhalten. Die Einrichtung 78 kann ausgebildet sein, um die Abbildungsinformationen der Teilgesichtsfelder 64c und 64d miteinander zu kombinieren oder zu stitchen, wobei dies auch ohne stereoskopische Abtastung der Teilgesichtsfelder 64c und 64d möglich ist. Das bedeutet, dass auch wenn außerhalb eines Überlappbereichs 82₂ der Teilgesichtsfelder 64c und 64d keine direkten stereoskopischen Informationen vorliegen, eine Orientierung einzelner Bildbereiche oder Objekte außerhalb des Überlappbereichs 82₂ möglich ist. Hierfür kann die Einrichtung 78 ausgebildet sein, um Stereo-Paare von Teilgesichtsfeldern unterschiedlicher Gesamtgesichtsfelder zu erzeugen, beispielsweise durch Erzeugen eines Paars des Teilgesichtsfeldes 64a aus dem optischen Kanal 42a und/oder 42c für das Teilgesichtsfeld 64c und/oder durch Bilden eines Stereo-Paares aus den Teilgesichtsfeldern 64b und 64d.

Die gezeigte symmetrische Anordnung der Teilgesichtsfelder ist dabei vorteilhaft beschränkt, aber die Ausführungsbeispiele nicht hierauf.

Die einzelnen Module 84₁ und 84₂ können jeweils über eine optionale Strahlumlenkeinrichtung 18₁ bzw. 18₂ verfügen. Alternativ kann die Strahlumlenkeinrichtung 18₁ und/oder 18₂ auch außerhalb des Moduls angeordnet sein oder nicht vorgesehen sein.

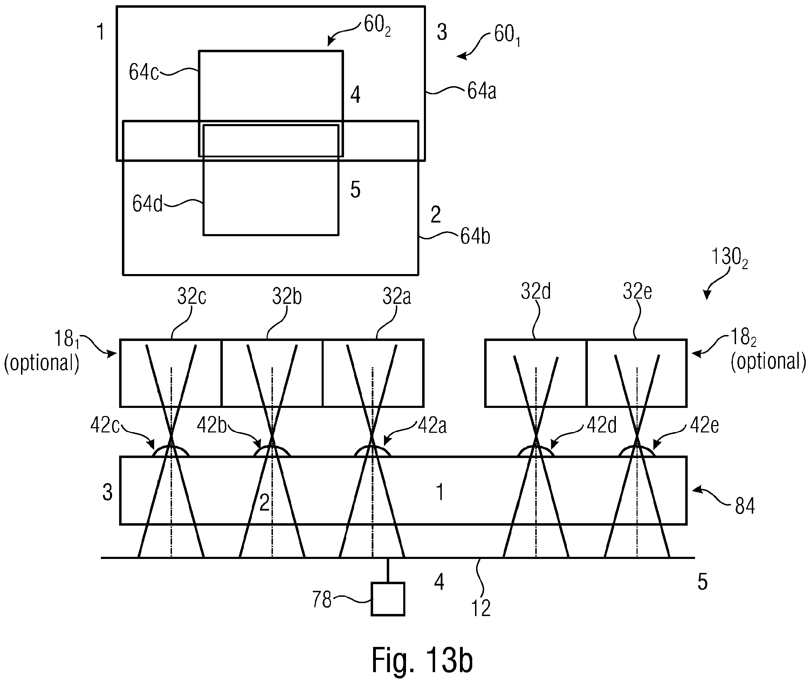

Fig. 13b zeigt eine schematische Aufsicht auf eine Multiaperturabbildungsvorrichtung 130₂, bei der gegenüber der Multiaperturabbildungsvorrichtung 130₁ die optischen Kanäle 42a-42e als gemeinsames Modul mit dem Bildsensor 12 gebildet sind, der entsprechende Bildsensorbereiche für die optischen Kanäle 42a-42e aufweist. Das Modul ist beispielsweise ohne die optionalen Strahlumlenkeinrichtungen 18₁ und 18₂ gebildet, so dass die Strahlumlenkeinrichtungen 18₁ und 18₂ separat angeordnet und/oder individuell positioniert werden können. Alternativ kann die optionale Strahlumlenkeinrichtung auch so ausgestaltet sein, dass die Strahlumlenkbereiche 32a-32e aufweist, die für sämtliche optische Kanäle wirksam sind.

Ebenso wie in Fig. 13a dargestellt, können die optischen Kanäle 42a-42e in einem gemeinsamen linearen Array optischer Kanäle angeordnet sein, dass durch die beiden Teil-Arrays 14₁ und 14₂ oder durch ein gemeinsames Modul gebildet werden kann.

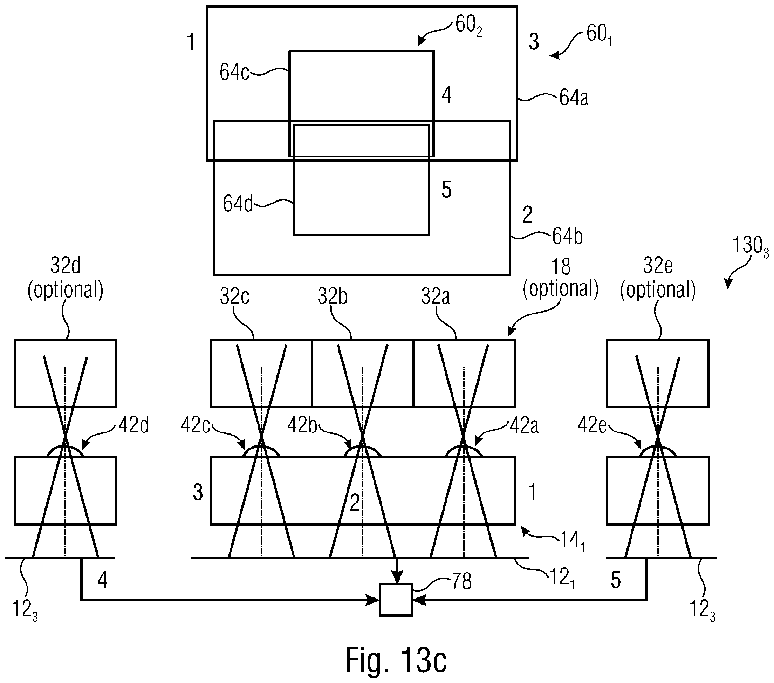

Fig. 13c zeigt eine schematische Draufsicht auf eine Multiaperturabbildungsvorrichtung 130₂, die ähnlich aufgebaut sein kann wie die Multiaperturabbildungsvorrichtungen 130₁ und 130₂. Anders als bei diesen Multiaperturabbildungsvorrichtungen können optische Kanäle 42d und 42e zum Erfassen des Teilgesichtsfelds 60₂ von einem, mehreren oder allen optischen Kanälen 42a-42c zum Erfassen des Teilgesichtsfelds 60₁ beabstandet sein. So können beispielsweise die optischen Kanäle 42a-42c eine lineare Anordnung bilden und zwischen den optischen Kanälen 42d und 42e angeordnet sein. Alternativ ist es ebenfalls vorstellbar, dass beispielsweise die optischen Kanäle 42a und 42e und/oder die optischen Kanäle 42c und 42d miteinander vertauscht sind.

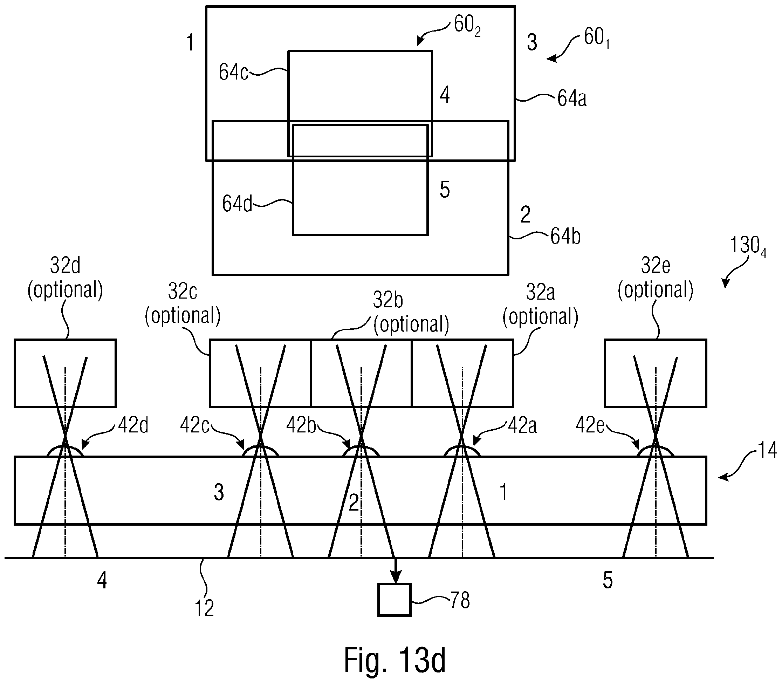

Fig. 13d zeigt eine schematische Draufsicht auf eine Multiaperturabbildungsvorrichtung 130₄ gemäß einem Ausführungsbeispiel, bei dem optische Kanäle 42a-42c zum Abbilden des Gesamtgesichtsfelds 60₁ und optische Kanäle zum Abbilden des Gesamtgesichtsfelds 60₂ nicht wie in Fig. 13a in unterschiedlichen linearen Arrays optischer Kanäle angeordnet sind, sondern mehrere oder gar alle optische Kanäle 42a-42e zum Erfassen unterschiedlicher Gesamtgesichtsfelder in einem gemeinsamen linearen Array 14 angeordnet sind.

Möglicherweise unterschiedliche Größen der Teilgesichtsfelder 64a und 64b einerseits und 64c und 64d andererseits können zu unterschiedlichen Abmessungen oder Größen der Optiken der optischen Kanäle führen. Insofern kann es vorteilhaft sein, die optionalen Strahlumlenkelemente individuell auszugestalten oder höchstens innerhalb von Gruppen optischer Kanäle gleicher Brennweite zu gruppieren, wie es beispielsweise in den Fig. 13a, 13b, 13c und 13d dargestellt ist.

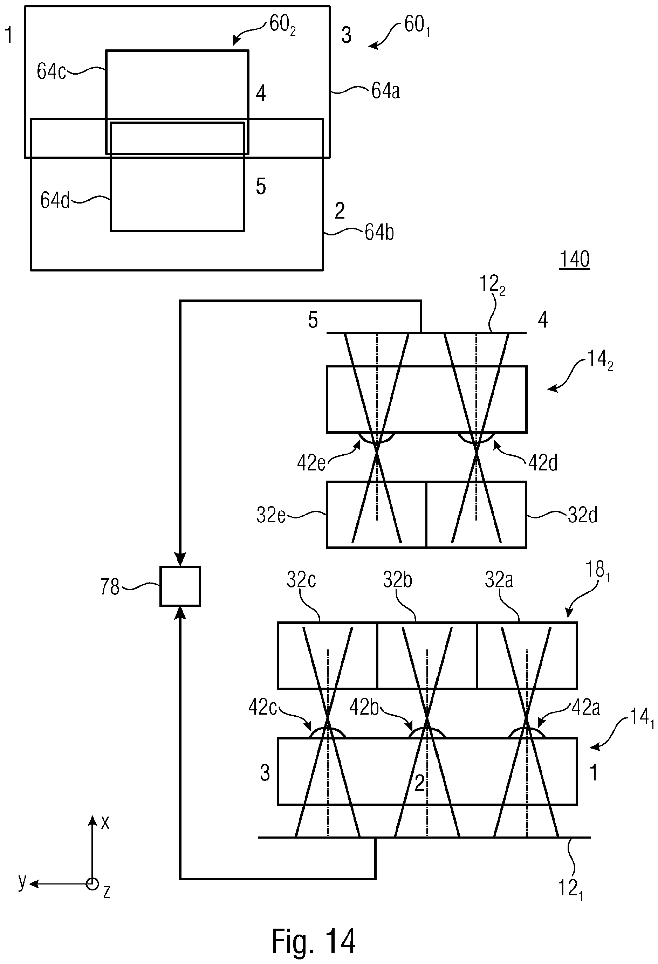

Fig. 14 zeigt eine schematische Aufsicht auf eine Multiaperturabbildungsvorrichtung 140 gemäß einem Ausführungsbeispiel, bei dem optische Kanäle 42a-42e beispielsweise in einem gemeinsamen linearen Array 14₁ angeordnet sind, welches gegenüberliegend zu einem linearen Array 14₂ angeordnet ist, das die optischen Kanäle 42d und 42e umfasst. Mittels der Strahlumlenkelemente 32a-32e, die in einer oder mehrerer Strahlumlenkeinrichtungen angeordnet sein können, kann eine entsprechende Umlenkung der Strahlengänge hin zu den Teilgesichtsfeldern 64a und 64d der Gesamtgesichtsfelder 60₁ und 60₂ erfolgen. Die Gruppierung der optischen Kanäle basierend auf der Zuordnung zu den Gesamtgesichtsfeldern 60₁ oder 60₂ ist dabei beispielhaft gewählt und beschreibt eine vorteilhafte Ausgestaltung. Ausführungsbeispiele sind jedoch nicht hierauf beschränkt, sondem beziehen sich auf eine beliebige Anordnung der optischen Kanäle in den unterschiedlichen Arrays.

Die hierin beschriebenen optischen Kanäle können dabei jeweils in einer gleichen Ebene angeordnet sein, so dass eine Abmessung der Multiaperturabbildungsvorrichtungen entlang der z-Richtung möglichst gering gehalten werden kann. Die hierin beschriebenen Arrays sind beispielsweise mit einer einzelnen Zeile angeordnet, so dass unterschiedliche Arrays, wie etwa das Array 14₁ und 14₂, die auch als Teilarrays bezeichnet werden können, insgesamt in der gleichen Ebene angeordnet sind und jeweils eine Zeile bilden, selbst wenn diese Zeilen parallel zueinander verlaufen und einander zugewandt sind.

Die gegenüberliegend angeordneten Arrays 14₁ und 14₂ können symmetrisch oder zentriert zueinander angeordnet sein, so dass sich beispielsweise inmitten der Arrays und/oder der Strahlumlenkbereiche gegenüberstehen, selbst wenn Optiken unterschiedlicher Arrays 14₁ und 14₂ zueinander verschoben sind, wie es beispielsweise im Zusammenhang mit der Multiaperturabbildungsvorrichtung 120 beschrieben ist.

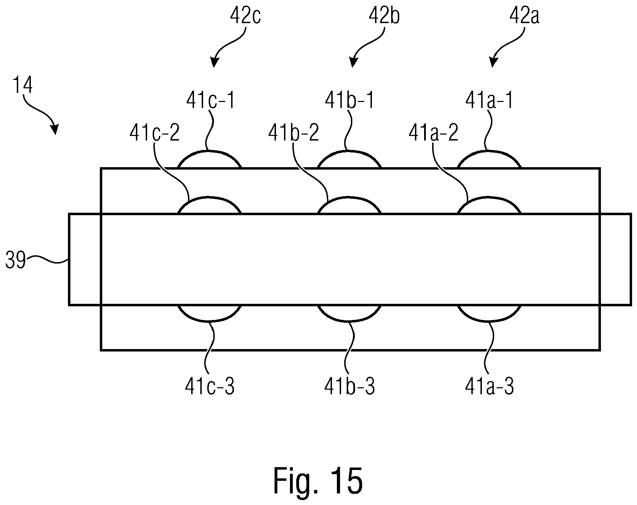

Fig. 15 zeigt eine schematische Draufsicht auf ein erfindungsgemäßes Array 14, das die optischen Kanäle 42a-42c umfassen kann, aber auch andere, insbesondere zusätzliche optische Kanäle aufweisen kann. In dem Array 14, das als lineares Array entlang einer Zeilenerstreckungsrichtung, beispielsweise y, ausgestaltet ist, sind die optischen Kanäle 42a-42c nebeneinander angeordnet. Das Array kann den Träger 39 aufweisen, der zur mechanischen Fixierung von zumindest Teilen von Optiken der optischen Kanäle 42a-42c gegenübereinander eingerichtet ist. So können beispielsweise alle Hauptseiten des Trägers 39 optische Elemente, etwa Linsen oder diffraktive Elemente oder dergleichen, 41a-2 und 41a-3 des optischen Kanals 42a und/oder optische Elemente 41b-2 und/oder 41b-3 des optischen Kanals 42b und/oder optische Elemente 41c-2 und/oder 41c-3 des optischen Kanals 42c mechanisch fest angeordnet sein. Alternativ oder zusätzlich ist es möglich, weitere mechanische Elemente, etwa Linsenhalter oder dergleichen an dem Träger 39 zu befestigen, an welchem dann optische Elemente 41a-1, 41b-1 und/oder 41c-1 der optischen Kanäle 42a-42c angeordnet sein können. Dies ermöglicht eine gemeinsame Bewegung der Optiken miteinander und eine näherungsweise unveränderliche Relativposition der Optiken zueinander, was vorteilhaft ist. Die optischen Kanäle 42a-42c können durch den Träger 39 hindurch verlaufen und beispielsweise kann der Träger 39 transparent ausgestaltet sein, etwa durch Verwendung eines Glasmaterials oder eines Polymermaterials. Alternativ kann der Träger 39 zumindest transparente Bereiche aufweisen, durch die die optischen Kanäle 42a-42c verlaufen, wobei transparent auf den für den optischen Kanal 42a-42c bestimmten Wellenlängenbereich bezogen ist.

Die beschriebene Multiaperturabbildungsvorrichtungen 110, 120, 130₁ bis 130₄ und 140 sind unabhängig voneinander und individuell ohne weiteres den hierin beschriebenen Ausführungen der optischen Bildstabilisierung und/oder der Fokussierung kombinierbar. Ausführungsbeispiele sind so eingerichtet, dass sich Aktuatoren des Bildstabilisators und/oder der Fokussiereinrichtung zwischen den Ebenen 63a und 63b zumindest teilweise befinden, die im Zusammenhang mit der Fig. 5c beschrieben sind.

In anderen Worten können Multiaperturkameras nach einem Prinzip der kanalweisen Aufteilung des Gesamtgesichtsfelds implementiert sein und gegenüber konventionellen Kameras den Vorteil der Reduzierung der Bauhöhe (in z-Richtung) aufweisen. Hierfür können mehrere nebeneinander angeordnete Abbildungskanäle vorgesehen sein. Je mehr Komponenten und Montageaufwand für die Realisierung der Kanäle benötigt werden, desto teurer und größer wird der Aufbau. Das heißt, es steigt der Platzbedarf in x/y-Richtung. Die hierin beschriebenen Ausführungsbeispiele verändern Anordnungen, in denen das Gesamtgesichtsfeld von zwei Gruppen von Kanälen jeweils vollständig erfasst wird und hierfür vier Kanäle für die zwei Teilgesichtsfelder verwendet wurden, was dazu führt, dass das Gesamtgesichtsfeld vollständig abgebildet und eine Information zur Tiefenanordnung des Objekteraums für das gesamte Gesichtsfeld vorliegt, dahin gehend, dass eine Anzahl von optischen Kanälen reduziert ist. Um den Bauraum zu reduzieren und eine geringere Anzahl von Komponenten zu nutzen, erfasst in den beschriebenen Ausführungsformen eine Gruppe von Kanälen das Gesamtgesichtsfeld vollständig, eine weitere Gruppe aber nur einen Teil hiervon. Die Gruppen weisen damit eine unterschiedliche Anzahl von Kanälen auf und können dabei so ausgestaltet sein, dass optische Kanäle auf jeweils übereinstimmende Teilgesichtsfelder gerichtet sind. In einer einfachen Realisierung, die gleichzeitig bevorzugt ist, verfügt die erste Gruppe über zwei (beispielsweise oben und unten bzw. rechts und links) und die zweite Gruppe über nur einen Kanal (nur oben oder unten/nur rechts oder links). Die Bilddaten liegen vollständig für das gesamte Gesichtsfeld vor. Tiefeninformationen liegen dahin gehend nur für den Teil vor, der von zwei Kanälen gesehen oder abgebildet wird.

Relevant ist eine Anordnung der Reihenfolge oben/unten/oben bzw. unten/oben/unten bzw. gleichbedeutend mit rechts/links, so dass das sich ergebende Stereo-Paar den Kanal umschließt oder einschließt, der das Teilgesichtsfeld nur einmal abtastet. Alternativ sind auch andere Anordnungen möglich, beispielsweise unten/unten/oben und dergleichen.

Für eine Tiefeninformation für das gesamte Gesichtsfeld kann ein zusätzlicher Tiefensensor wie Time-of-Flight (Flugzeit) /Structured Light (strukturiertes Licht) oder zusätzliche Stereodaten genutzt werden.

Ausführungsbeispiele ermöglichen die Vermeidung von Okklusionseffekten gemeinsam mit der Ausbildung kleiner Kameras. Das einkanalige Bild erfährt dabei keine Parallaxe und kann als Referenzbild verwendet werden. Ein zweikanaliges Bild ist frei von Parallaxen lediglich in unendlicher Entfernung im Objektbereich. Bei endlicher oder kurzer Entfernung entsteht eine Parallaxe, die Stitching verhindert. Dies kann durch zweifach Abtasten des zu stitchenden zusätzlichen Objektbereichs erhalten werden.

Ein mittig angeordnetes unbearbeitetes Bild kann dabei über die äußeren Bilder ergänzt werden, die zwar eine Parallaxe in den optischen Kanälen aufweisen, gemeinsam jedoch Verdeckungen ausgleichen oder auffüllen können.

In einem weiteren Aspekt der hierin beschriebenen Ausführungsbeispiele wird eine dritte Gruppe optischer Kanäle vorgesehen, bevorzugt zwei Kanäle, die zusätzlich zu der ersten Gruppe mit vollständigem Gesichtsfeld (bevorzugt zwei Kanäle) und der zweiten Gruppe mit nur teilweisem Gesichtsfeld (bevorzugt nur ein Kanal) ein weiteres Gesamtgesichtsfeld abdecken, indem sich teilweise überlappende Teilgesichtsfelder erfasst werden. Das weitere Gesamtgesichtsfeld kann mit dem ersten Gesamtgesichtsfeld zumindest teilweise überlappen, wobei bevorzugt eine vollständige Überlappung des einen mit dem anderen Gesamtgesichtsfeld erfolgt, das bedeutet, das eine Gesamtgesichtsfeld ist ein Ausschnitt des anderen Gesamtgesichtsfelds. Dies kann einen vollständigen Überlapp bedeuten, bei dem die Gesamtgesichtsfelder unterschiedliche Größen aufweisen. Dies kann beispielsweise ein Zoom-Aufbau der zusätzlichen Kanäle sein, wie in Fig. 14 beispielhaft beschrieben, kann aber umgekehrt auch ein Weitwinkel-Aufbau sein. In diesem Fall umschließen die Kanäle der dritten Gruppe die erste und die zweite Gruppe.

Diese Ausführungsbeispiele sind optional und individuell mit einer Orthogonalität eines Zeilenvektors des Arrays zu einem Vektor der Teilbildfelder der ersten Gruppe kombinierbar. Darüber hinaus kann eine Implementierung eines durchgehenden Substrats für alle Kanäle oder einzelne Module des Arrays erfolgen. Ein Umklappen der Strahlumformungseinrichtung/Strahlumlenkeinrichtung zur Änderung der Blickrichtung, eine beidseitige Verspiegelung und/oder eine keilförmige Ausführung kann vorgesehen sein. Eine Bildstabilisierung mittels einer Translation des Arrays gegenüber dem Bildsensor in Kombination mit einer Rotation der Strahlumlenkeinrichtung kann ebenfalls vorgesehen sein. Antriebe für eine Fokussiereinrichtung/Stabilisierung in z-Richtung kann vorgesehen sein und ist bevorzugt so ausgeführt, dass sie nicht größer ist als die von der Optik vorgegebene Ausdehnung der Multiaperturabbildungsvorrichtung in z-Richtung, was im Zusammenhang mit dem virtuellen Quader der zuständigen Ebenen 63a und 63b beschrieben ist. Eine kanalindividuelle Anpassung der Abbildung, insbesondere der Fokuslagen kann durch adaptive Linsen erfolgen. Das bedeutet, dass die Optik zumindest eines optischen Kanals adaptive Linsen umfassen kann, wobei die Multiaperturabbildungsvorrichtung eine Linsensteuereinrichtung aufweist, die ausgebildet ist, um eine optische Eigenschaft der adaptiven Linse einzustellen. Hierzu gehören beispielsweise eine Brennweite, ein Wellenlängenbereich transmittierter oder herausgefilterter Wellenlängen, eine Brechzahl oder dergleichen.

Ausführungsbeispiele ermöglichen die Reduzierung der Zahl der Kanäle und damit geringe Herstellungskosten und einen geringen Platzbedarf der Grundfläche in x/y-Richtung. Darüber hinaus werden hochqualitative Bildaufnahmen ermöglicht.

Ausführungsbeispiele können insbesondere im Bereich der Multiaperturabbildungssysteme in mobilen Einrichtungen des Smartphones, aber auch im automobilen Bereich oder bei der maschinellen Bilderfassung (Machine Division) eingesetzt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Multiaperturabbildungsvorrichtung mit:
einer Bildsensoreinrichtung (12) mit einer Mehrzahl von Bildsensorbereichen (44);
einer Mehrzahl von optischen Kanälen (42) , wobei jeder optische Kanal (42) eine Optik (41) zur Abbildung eines Teilgesichtsfeldes (64) eines Gesamtgesichtsfeldes (60) auf einen dem optischen Kanal (42) zugeordneten Bildsensorbereich (44) der Bildsensoreinrichtung (12) umfasst;
wobei die Mehrzahl von optischen Kanälen (42) ausgebildet ist, um das Gesamtgesichtsfeld (60) vollständig abzubilden; und
**dadurch gekennzeichnet, dass**
ein erstes Teilgesichtsfeld (64a) des Gesamtgesichtsfeldes (60) und ein zweites Teilgesichtsfeld (64b) des Gesamtgesichtsfeldes von einer unterschiedlichen Anzahl optischer Kanäle (42) erfasst werden.

2. Multiaperturabbildungsvorrichtung gemäß Anspruch 1, ferner mit:
einer Einrichtung (78) zur Bildauswertung, die ausgebildet ist, um auf Abbildungen der Mehrzahl von Teilgesichtsfelder (64) basierende Bildinformationen von der Mehrzahl von Bildsensorbereichen (44) zu erhalten, und um eine korrespondierende Mehrzahl von Teilbildern zusammenzufügen, um ein Gesamtbild des Gesamtgesichtsfeldes (60) zu erhalten, so dass das Gesamtbild in unterschiedlichen Gesamtbildbereichen auf einer unterschiedlichen Anzahl von Teilbildern basiert.

3. Multiaperturabbildungsvorrichtung gemäß Anspruch 2, bei der die Einrichtung (78) zur Bildauswertung ausgebildet ist, um einer ersten Bildinformation basierend durch Kombination einer ersten Abbildung des ersten Teilgesichtsfeldes (64a) und einer zweiten Abbildung des ersten Teilgesichtsfeldes (64a) miteinander zu kombinieren, um eine Tiefeninformation für das erste Teilgesichtsfeld (64a) zu erhalten; und um das Gesamtbild basierend auf einer Ausrichtung der ersten Bildinformation an einer zweiten Bildinformation zu erhalten, wobei die zweite Bildinformation durch einen einzelnen optischen Kanal erhalten wird.

4. Multiaperturabbildungsvorrichtung gemäß einem der vorangehenden Ansprüche, die genau drei optische Kanäle (42a-c) aufweist, die ausgebildet sind, um das Gesamtgesichtsfeld (60) durch das erste Teilgesichtsfeld (64a) und das zweite Teilgesichtsfeld (64b) vollständig abzubilden.

5. Multiaperturabbildungsvorrichtung gemäß einem der vorangehenden Ansprüche, bei der das erste Teilgesichtsfeld (64a) durch genau zwei optische Kanäle (42a, 42c) und das zweite Teilgesichtsfeld (64b) durch einen einzelnen optischen Kanal (42b) einkanalig abgebildet wird.

6. Multiaperturabbildungsvorrichtung gemäß Anspruch 4 oder 5, bei der die Mehrzahl optischer Kanäle (42) in einem Array (14) von optischen Kanälen nebeneinander angeordnet sind und ein optischer Kanal (42b) zum Abbilden des zweiten Teilgesichtsfeldes (42b) zwischen zwei optischen Kanälen (42a, 42c) zum Abbilden des ersten Teilgesichtsfeldes (64a) in dem Array (14) angeordnet ist.

7. Multiaperturabbildungsvorrichtung gemäß Anspruch 4 oder 5, bei der eine erste Optik (41b) eines ersten optischen Kanals (42b) zum Abbilden des zweiten Teilgesichtsfeldes (64b) gegenüberliegend zu einer zweiten Optik (41a) eines zweiten optischen Kanals (42a) und einer dritten Optik (41c) eines dritten optischen Kanals (42c) zum Abbilden des ersten Teilgesichtsfeldes (64a) angeordnet ist;
wobei die Multiaperturabbildungsvorrichtung eine Strahlumlenkeinrichtung (18) zum Umlenken eines Strahlengangs (22) des ersten, zweiten und dritten optischen Kanals (42) umfasst, die zwischen der ersten Optik einerseits und der zweiten und dritten Optik andererseits angeordnet ist.

8. Multiaperturabbildungsvorrichtung gemäß einem der vorangehenden Ansprüche 1 bis 3, bei der das erste Teilgesichtsfeld durch exakt zwei optische Kanäle (42a, 42c) abgebildet wird; und das zweite Teilgesichtsfeld (64b) durch einen einzelnen optischen Kanal (42b) einkanalig abgebildet wird; wobei die optischen Kanäle (42a, 42c) zum Abbilden des ersten Teilgesichtsfeldes (64a) nebeneinander angeordnet sind und von einem optischen Kanal (42b) zum Abbilden des zweiten Teilgesichtsfeldes (64a) beabstandet sind.

9. Multiaperturabbildungsvorrichtung gemäß einem der vorangehenden Ansprüche 1 bis 3, bei der optische Kanäle (42) zum Abbilden des ersten Teilgesichtsfeldes (64b) nebeneinander angeordnet sind und gegenüberliegend zu einem optischen Kanal (42b) zum Abbilden des zweiten Teilgesichtsfeldes (64a) angeordnet sind.

10. Multiaperturabbildungsvorrichtung gemäß einem der vorangehenden Ansprüche, bei der das Gesamtgesichtsfeld (60) ein erstes Gesamtgesichtsfeld (60₁) ist; und die Mehrzahl von optischen Kanälen zumindest einen optischen Kanal (42d) zum Abbilden eines dritten Teilgesichtsfeldes (64c) eines zweiten Gesamtgesichtsfeldes (60₂) und einen optischen Kanal (42e) zum Abbilden eines vierten Teilgesichtsfeldes (64d) des zweiten Gesamtgesichtsfeldes (60₂) umfasst, wobei das zweite Gesamtgesichtsfeld (60₂) einen Überlapp mit dem ersten Gesamtgesichtsfeld (60₁) aufweist.

11. Multiaperturabbildungsvorrichtung gemäß Anspruch 10, mit einer Einrichtung (78) zur Bildauswertung, die ausgebildet ist, um auf Abbildungen der Mehrzahl von Teilgesichtsfelder (64) basierende Bildinformationen von der Mehrzahl von Bildsensorbereichen (44) zu erhalten und um ein Gesamtbild des zweiten Teilgesichtsfeldes (60₂) unter Verwendung von Bildinformationen zu erstellen, die durch Bildsensorbereiche (44) erhalten werden, die optischen Kanäle zum Abbilden des ersten Gesamtgesichtsfeldes (60₁) zugeordnet sind.

12. Multiaperturabbildungsvorrichtung gemäß einem der vorangehenden Ansprüche, bei der die Mehrzahl optischer Kanäle in einer gemeinsamen Ebene in zumindest einer Zeile angeordnet sind, die sich entlang einer ersten Richtung (y) erstreckt;
und Mitten der Mehrzahl von Teilgesichtsfeldern in einer zweiten Richtung nebeneinander liegen, um ein eindimensionales Array zu bilden und senkrecht zu der ersten Richtung angeordnet sind.

13. Multiaperturabbildungsvorrichtung gemäß einem der vorangehenden Ansprüche, bei der die Mehrzahl optischer Kanäle eine erste Gruppe optischer Kanäle umfasst; und eine zweite Gruppe mit zumindest einem optischen Kanal umfasst, wobei die erste Gruppe ausgebildet ist, um das Gesamtgesichtsfeld (60) vollständig zu erfassen und die zweite Gruppe ausgebildet ist, um das Gesamtgesichtsfeld (60) unvollständig zu erfassen.

14. Multiaperturabbildungsvorrichtung gemäß einem der vorangehenden Ansprüche, mit:
einer Strahlumlenkeinrichtung (18) zum Umlenken eines Strahlengangs (22) der optischen Kanäle (42);
einem optischen Bildstabilisator, der ausgebildet ist, um eine Relativbewegung zwischen der Bildsensoreinrichtung (12), den Optiken (41) der optischen Kanäle und der Strahlumlenkeinrichtung basierend auf einer translatorischen Bewegung zwischen der Bildsensoreinrichtung und den Optiken parallel oder antiparallel zu einer Zeilenerstreckungsrichtung (y) entlang der die Optiken angeordnet sind, und/oder basierend auf einer Rotation der Strahlumlenkeinrichtung (18) um eine Rotationsachse zu erzeugen, um eine optische Bildstabilisierung zu ermöglichen.

15. Multiaperturabbildungsvorrichtung gemäß einem der vorangehenden Ansprüche, die eine Fokussiereinrichtung umfasst, die einen Aktor zum Bereitstellen einer Relativbewegung zwischen einer Optik (41) eines der optischen Kanäle und der Bildsensoreinrichtung (12) umfasst;
wobei die Multiaperturabbildungsvorrichtung eine Strahlumlenkeinrichtung (18) zum Umlenken eines Strahlengangs (22) der optischen Kanäle (42) umfasst;
wobei die Fokussiereinrichtung zumindest einen Aktor zum Einstellen eines Fokus der Multiaperturabbildungsvorrichtung aufweist, wobei die Fokussiereinrichtung so angeordnet ist, dass sie zumindest teilweise zwischen zwei Ebenen (63a, 63b) angeordnet ist, die durch Seiten eines Quaders aufgespannt werden, wobei die Seiten des Quaders zueinander sowie zu einer Zeilenerstreckungsrichtung eines Arrays der optischen Kanäle (42) und eines Teils des Strahlengangs (22) der optischen Kanäle zwischen der Bildsensoreinrichtung (12) und der Strahlumlenkeinrichtung (18) parallel ausgerichtet sind und dessen Volumen minimal ist und dennoch die Bildsensoreinrichtung, das Array (14) und die Strahlumlenkeinrichtung (18) umfasst.

## Claims

1. Multi-aperture imaging device, comprising:
image sensor means (12) with a plurality of image sensor regions (44);
a plurality of optical channels (42), wherein each optical channel (42) includes an optic (41) for imaging a partial field of view (64) of a total field of view (60) onto an image sensor area (44) of the image sensor means (12) associated with the optical channel (42);
wherein the plurality of optical channels (42) is configured to image the total field of view (60) completely; and
**characterized in that** a first partial field of view (64a) of the total field of view (60) and a second partial field of view (64b) of the total field of view are captured by a different number of optical channels (42).

2. Multi-aperture imaging device according to claim 1, further comprising:
means (78) for image evaluation configured to obtain image information based on images of the plurality of partial fields of view (64) from the plurality of image sensor areas (44) and to combine a corresponding plurality of partial images in order to obtain a total image of the total field of view (60) so that the total image is based on a different number of partial images in different total image areas.

3. Multi-aperture imaging device according to claim 2, wherein the means (78) for image evaluation is configured to combine a first image information based on a combination of a first image of the first partial field of view (64a) and a second image of the first partial field of view (64a) in order to obtain depth information for the first partial field of view (64a), and to obtain the total image based on aligning the first image information with respect to a second image information, wherein the second image information is obtained by means of an individual optical channel.

4. Multi-aperture imaging device according to any one of the preceding claims, comprising exactly three optical channels (42a-c) configured to image the total field of view (60) completely by means of the first partial field of view (64a) and the second partial field of view (64b).

5. Multi-aperture imaging device according to any one of the preceding claims, wherein the first partial field of view (64a) is imaged by exactly two optical channels (42a, 42c) and the second partial field of view (64b) is imaged by a single optical channel (42b) in a single-channel way.

6. Multi-aperture imaging device according to claim 4 or 5, wherein the plurality of optical channels is adjacently arranged in an array (14) of optical channels (42), and an optical channel (42b) for imaging the second total field of view (64b) is arranged between two optical channels (42a, 42c) for imaging the first partial field of view (64a) in the array (14).

7. Multi-aperture imaging device according to claim 4 or 5, wherein a first optic (41b) of a first optical channel (42b) for imaging the second partial field of view (64b) is arranged opposite to a second optic (41a) of a second optical channel (42a) and a third optic (41c) of a third optical channel (42c) for imaging the first total field of view (64a);
wherein the multi-aperture imaging device includes beam-deflecting means (18) for deflecting an optical path (22) of the first, second, and third optical channels (42), said means being arranged between the first optic on the one hand and the second and third optics on the other hand.

8. Multi-aperture imaging device according to any one of the preceding claims 1 to 3, wherein the first partial field of view is imaged by exactly two optical channels (42a, 42c); and wherein the second partial field of view (64b) is imaged by a single channel (42) in a single-channel way; wherein the optical channels (42a, 42c) for imaging the first partial field of view (64a) are adjacently arranged and are spaced apart from an optical channel (42b) for imaging the second partial field of view (64b).

9. Multi-aperture imaging device according to any one of the preceding claims 1 to 3, wherein the optical channels (42) for imaging the first partial field of view (64b) are adjacently arranged and are arranged opposite to an optical channel (42b) for imaging the second partial field of view (64b).

10. Multi-aperture imaging device according to any one of the preceding claims, wherein the total field of view (60) is a first total field of view (60₁); and wherein the plurality of optical channels includes at least one optical channel (42d) for imaging a third partial field of view (64c) of a second total field of view (60₂) and one optical channel (42e) for imaging a fourth partial field of view (64d) of the second total field of view (60₂), wherein the second total field of view (60₂) comprises an overlap with the first total field of view (60₁).

11. Multi-aperture imaging device according to claim 10, with means (78) for image evaluation configured to obtain image information based on images of the plurality of partial fields of view (64) from the plurality of image sensor areas (44) and to create a total image of the second partial field of view (60₂) using image information obtained by image sensor areas (44) associated with optical channels for imaging the first total field of view (60₁).

12. Multi-aperture imaging device according to any one of the preceding claims, wherein the plurality of optical channels is arranged in a mutual plane in at least one line extending along a first direction (y);
and centers of the plurality of partial fields of view are adjacent in a second direction in order to form a one-dimensional array, and are arranged perpendicularly to the first direction.

13. Multi-aperture imaging device according to any one of the preceding claims, wherein the plurality of optical channels includes a first group of optical channels; and includes a second group with at least one optical channel, wherein the first group is configured to capture the total field of view (60) completely, and wherein the second group is configured to capture the total field of view (60) incompletely.

14. Multi-aperture imaging device according to any one of the preceding claims, comprising:
beam-deflecting means (18) for deflecting an optical path (22) of the optical channels (42);
an optical image stabilizer configured to generate a relative movement between the image sensor means (12), the optics (41) of the optical channels and the beam-deflecting means based on a translational movement between the image sensor means and the optics in parallel or antiparallel to a line-extension direction (y) along which the optics are arranged, and/or based on a rotation of the beam-deflecting means (18) around a rotational axis, in order to enable optical image stabilization.

15. Multi-aperture imaging device according to any one of the preceding claims, including focusing means that includes an actuator for providing a relative movement between an optic (41) of one of the optical channels and the image sensor means (12).
wherein the multi-aperture imaging device includes beam-deflecting means (18) for deflecting an optical path (22) of the optical channels (42);
wherein the focusing means comprises at least one actuator for adjusting a focus of the multi-aperture imaging device, wherein the focusing means is arranged such that it is arranged at least partially between two planes (63a, 63b) spanned by sides of a cuboid, wherein the sides of the cuboid are aligned in parallel with respect to each other as well as with respect to a line-extension direction (y) of an array of the optical channels (42) and a part of the optical path (22) of the optical channels between the image sensor means (12) and the beam-deflecting means (18), and whose volume is as small as possible but still includes the image sensor means, the array (14) and the beam-deflecting means (18).

## Revendications

1. Dispositif de reproduction à ouvertures multiples avec:
un moyen capteur d'image (12) avec une pluralité de zones de capteur d'image (44);
une pluralité de canaux optiques (42), où chaque canal optique (42) comporte une optique (41) destinée à reproduire un champ de vision partiel (64) d'un champ de vision global (60) sur une zone de capteur d'image (44) du moyen capteur d'image (12) associée au canal optique (42);
dans lequel la pluralité de canaux optiques (42) est conçue pour reproduire entièrement le champ de vision global (60); et
**caractérisé par le fait qu'**un premier champ de vision partiel (64a) du champ de vision global (60) et un deuxième champ de vision partiel (64b) du champ de vision global sont capturés par un nombre différent de canaux optiques (42).

2. Dispositif de reproduction à ouvertures multiples selon la revendication 1, avec par ailleurs:
un moyen (78) d'évaluation d'image qui est conçu pour obtenir des informations d'image basées sur des reproductions de la pluralité de champs visuels partiels (64) de la pluralité de zones de capteur d'image (44), et pour assembler une pluralité correspondante d'images partielles pour obtenir une image globale du champ de vision global (60), de sorte que l'image globale dans différentes zones d'image globale soit basée sur un nombre différent d'images partielles.

3. Dispositif de reproduction à ouvertures multiples selon la revendication 2, dans lequel le moyen (78) d'évaluation d'image est conçu pour combiner entre elles, sur base d'une première information d'image, en combinant une première reproduction du premier champ de vision partiel (64a) et une deuxième reproduction du premier champ de vision partiel (64a), pour obtenir une information de profondeur pour le premier champ de vision partiel (64a); et pour obtenir l'image globale sur base d'une orientation de la première information d'image sur une deuxième information d'image, dans lequel la deuxième information d'image est obtenue par un seul canal optique.

4. Dispositif de reproduction à ouvertures multiples selon l'une des revendications précédentes, qui présente exactement trois canaux optiques (42a à c) qui sont conçus pour reproduire entièrement le champ de vision global (60) par le premier champ de vision partiel (64a) et le deuxième champ de vision partiel (64b).

5. Dispositif de reproduction à ouvertures multiples selon l'une des revendications précédentes, dans lequel le premier champ de vision partiel (64a) est reproduit en un canal par exactement deux canaux optiques (42a, 42c) et le deuxième champ de vision partiel (64b) est reproduit en un canal par un seul canal optique (42b).

6. Dispositif de reproduction à ouvertures multiples selon la revendication 4 ou 5, dans lequel la pluralité de canaux optiques (42) sont disposés l'un à côté de l'autre dans un réseau (14) de canaux optiques et un canal optique (42b) destiné à reproduire le deuxième champ de vision partiel (42b) est disposé entre deux canaux optiques (42a, 42c) destinés à reproduire le premier champ de vision partiel (64a) dans le réseau (14).

7. Dispositif de reproduction à ouvertures multiples selon la revendication 4 ou 5, dans lequel une première optique (41b) d'un premier canal optique (42b) destiné à reproduire le deuxième champ de vision partiel (64b) est disposé de manière opposée à une deuxième optique (41a) d'un deuxième canal optique (42a) et à une troisième optique (41c) d'un troisième canal optique (42c) destiné à reproduire le premier champ de vision partiel (64a);
dans lequel le dispositif de reproduction à ouvertures multiples comporte un moyen de déviation de faisceau (18) destiné à dévier un trajet de faisceau (22) du premier, du deuxième et du troisième canal optique (42) qui est disposé entre, d'une part, la première optique et, d'autre part, la deuxième et troisième optique.

8. Dispositif de reproduction à ouvertures multiples selon l'une des revendications précédentes 1 à 3, dans lequel le premier champ de vision partiel est reproduit par exactement deux canaux optiques (42a, 42c); et le deuxième champ de vision partiel (64b) est reproduit en un canal par un seul canal optique (42b); dans lequel les canaux optiques (42a, 42c) destinés à reproduire le premier champ de vision partiel (64a) sont disposés l'un à côté de l'autre et sont distants d'un canal optique (42b) destiné à reproduire le deuxième champ de vision partiel (64a).

9. Dispositif de reproduction à ouvertures multiples selon l'une des revendications précédentes 1 à 3, dans lequel les canaux optiques (42) destinés à reproduire le premier champ de vision partiel (64b) sont disposés l'un à côté de l'autre et sont disposés de manière opposée à un canal optique (42b) destiné à reproduire le deuxième champ de vision partiel (64a).

10. Dispositif de reproduction à ouvertures multiples selon l'une des revendications précédentes, dans lequel le champ de vision global (60) est un premier champ de vision global (60₁); et la pluralité de canaux optiques comporte au moins un canal optique (42d) destiné à reproduire un troisième champ de vision partiel (64c) d'un deuxième champ de vision global (60₂) et un canal optique (42e) destiné à reproduire un quatrième champ de vision partiel (64d) du deuxième champ de vision global (60₂), dans lequel le deuxième champ de vision global (60₂) présente un chevauchement avec le premier champ de vision global (60₁).

11. Dispositif de reproduction à ouvertures multiples selon la revendication 10, avec un moyen (78) d'évaluation d'image qui est conçu pour obtenir des informations d'image de la pluralité de zones de capteur d'image (44) basées sur les reproductions de la pluralité de champs visuels partiels (64) et pour réaliser une image globale du deuxième champ de vision partiel (60₂) à l'aide des informations d'image qui sont obtenues par les zones de capteur d'image (44) qui sont associées à des canaux optiques destinés à reproduire le premier champ de vision global (60₁).

12. Dispositif de reproduction à ouvertures multiples selon l'une des revendications précédentes, dans lequel la pluralité de canaux optiques sont disposés dans un plan commun en au moins une rangée qui s'étend dans une première direction (y);
et les centres de la pluralité de champs de vision partiels se situent juxtaposés dans une deuxième direction pour former un réseau unidimensionnel et sont disposés de manière perpendiculaire à la première direction.

13. Dispositif de reproduction à ouvertures multiples selon l'une des revendications précédentes, dans lequel la pluralité de canaux optiques comporte un premier groupe de canaux optiques; et un deuxième groupe comporte au moins un canal optique, dans lequel le premier groupe est conçu pour capturer entièrement le champ de vision global (60) et le deuxième groupe est conçu pour capturer de manière incomplète le champ de vision global (60).

14. Dispositif de reproduction à ouvertures multiples selon l'une des revendications précédentes, avec:
un moyen de déviation de faisceau (18) destiné à dévier un trajet de faisceau (22) des canaux optiques (42);
un stabilisateur d'image optique qui est conçu pour générer un déplacement relatif entre le moyen capteur d'image (12), les optiques (41) des canaux optiques et le moyen de déviation de faisceau sur base d'un déplacement en translation entre le moyen capteur d'image et l'optique parallèle ou anti-parallèle à une direction d'extension de rangée (y) dans laquelle sont disposées les optiques, et/ou sur base d'une rotation du moyen de déviation de faisceau (18) autour d'un axe de rotation pour permettre une stabilisation optique de l'image.

15. Dispositif de reproduction à ouvertures multiples selon l'une des revendications précédentes, qui comporte un moyen de focalisation qui comporte un actionneur destiné à permettre un déplacement relatif entre une optique (41) de l'un des canaux optiques et le moyen capteur d'image (12);
dans lequel le dispositif de reproduction à ouvertures multiples comporte un moyen de déviation de faisceau (18) destiné à dévier un trajet de faisceau (22) des canaux optiques (42);
dans lequel le moyen de focalisation présente au moins un actionneur destiné à régler une focalisation du dispositif de reproduction à ouvertures multiples, dans lequel le moyen de focalisation est disposé de sorte qu'il soit disposé au moins partiellement entre deux plans (63a, 63b) qui sont définis par les côtés d'un parallélépipède, dans lequel les côtés du parallélépipède sont orientés de manière parallèle l'un à l'autre ainsi qu'à une direction d'extension de rangée d'un réseau des canaux optiques (42) et d'une partie du trajet de faisceau (22) des canaux optiques entre le moyen capteur d'image (12) et le moyen de déviation de faisceau (18) et dont le volume est minimal et comporte néanmoins le moyen capteur d'image, le réseau (14) et le moyen de déviation de faisceau (18).
